Europäisches Patentamt

European Patent Office

Office européen des brevets

(19)

(11) EP 1 209 608 A1

## (12) EUROPEAN PATENT APPLICATION
published in accordance with Art. 158(3) EPC

(43) Date of publication:
29.05.2002 Bulletin 2002/22

(51) Int Cl.7: G06F 17/60

(21) Application number: 01908315.3

(86) International application number:
PCT/JP01/01692

(22) Date of filing: 05.03.2001

(87) International publication number:
WO 01/71585 (27.09.2001 Gazette 2001/39)

(84) Designated Contracting States:
AT BE CH CY DE DK ES FI FR GB GR IE IT LI LU
MC NL PT SE TR

(30) Priority: 17.03.2000 JP 2000081859
11.04.2000 JP 2000115772
29.09.2000 JP 2000301398

(71) Applicant: Sony Corporation
Tokyo 141-0001 (JP)

(72) Inventors:
• ISHII, Miruka, c/o SONY CORPORATION
Shinagawa-ku, Tokyo 141-0001 (JP)
• FUKUDA, Shingo, c/o SONY CORPORATION
Shinagawa-ku, Tokyo 141-0001 (JP)

(74) Representative: Horner, David Richard et al
D Young & Co,
21 New Fetter Lane
London EC4A 1DA (GB)

## (54) INVESTMENT SYSTEM AND DATA TRANSMITTING/RECEIVING METHOD

(57) A server device (10) stores at least investment target data made up of music tune data and data related to an artist. An investment client device (20) accesses the server device (10) to download the investment target dat and transmits investment data for an artist or a music tune which a user thinks to become popular in the future, to the server device (10). Thus, the user can invest in a new music tune or artist by using a network such as the Internet.

FIG.1

EP 1 209 608 A1

**Description**

Technical Field

This invention relates to an investment system and a data transmitting/receiving method which enable an investor to invest in an artist or a music tune by using a network such as the Internet.

Background Art

An obscure artist or an amateur artist before debut has very few opportunities to present a music tune of the artist's own composition or to make his/her debut. Although there have been many people who sing their own songs on the street in search of the way to become professional artists, those people can perform only in one place at a time and hence have physical and temporal limitations with respect to the place for performance. Therefore, they cannot promote their music to a large number of people at a time.

Meanwhile, it is assumed, for example, that a viewer/listener thinks "this artist or music tune is nice." However, when that artist or music tune becomes very popular in a few years, the viewer/listener can get nothing in return despite his/her foresight.

Now that the Internet is popularly used, homepages are provided on which users vote for their favorite artists or music tunes and then the resultant popularity ranking is presented. However, only the popularity vote is taken on those homepages. An artist who won a first place in the ranking is satisfied with the winning of the first place but cannot get any practical advantage such as a profit. Similarly, people who voted for the artist are satisfied with the their own foresight but cannot get any practical advantage such as a profit.

Moreover, while the number of people who produce contents such as music, cartoons, paintings, novels and movies is increasing, the place and time for presenting these contents are limited and only few people can properly evaluate the presented contents. Although there are some opportunities such as audition programs and contribution of contents to journals, high evaluation by judges of producing companies and record companies does not necessarily mean that the artist will be popularly accepted by the public after his/her debut. At present, there exists neither an idea of investing in the talent of an individual who produces contents such as music, cartoons, paintings, novels or movies, nor a place for such investment.

In the case where an amateur artist sets up a homepage and presents his/her own tune, if the amateur artist makes the downloading of the tune chargeable, he/she cannot expect many users to download the tune and therefore cannot expect a large profit. On the other hand, if the amateur artist makes the downloading of his/her own tune free of charge, he/she can expect many users to download the tune but cannot expect any profit. In this manner, even if the amateur artist present his/her own tune on the homepage, he/she cannot get sufficient compensation for the presentation of the tune.

Disclosure of the Invention

It is an object of the present invention to provide a new investment system which enables investment, for example, in an artist or a music tune, and payment of compensation for the investment by using a network such as the Internet, and a data transmitting/receiving method in this system.

It is another object of the present invention to provide an investment system which provides a place and an opportunity for an artist who produces a work such as a music tune, cartoon, painting, novel or movie to present the contents, that is, the work, and which enables payment of the ordinary charge for the contents and payment for the investment, in selling the contents, and a data transmitting/receiving method in this system.

It is still another object of the present invention to provide an investment system which enables selling and buying of an investment ticket in accordance with the sales of the contents and the amount of investment, similarly to an ordinary stock transaction, and a data transmitting/receiving method in this system.

It is still another object of the present invention to provide a server device and a terminal device used for the investment system.

An investment system according to the present invention has a server device for storing investment target data to be an investment target, and a terminal device capable of receiving the investment target data from the server device and capable of transmitting investment data for the investment target data to the server device.

That is, this investment system has storage means for storing investment target data to be an investment target, downloading means for downloading the investment target data in accordance with the operation by a user, and uploading means for transmitting investment data for the investment target data downloaded by the downloading means, in accordance with the operation by the user.

A data transmitting/receiving method for such an investment system includes a step of storing investment target data to be an investment target into a server device, a step of causing a terminal device to receive the investment target data from the server device, and a step of transmitting investment data for the investment target data from the terminal device to the server device.

A server device used in such an investment system has storage means for storing investment target data to be an investment target, communication means for communicating with a terminal device which transmits investment data for the investment target data, and control means for controlling the operation of the whole device. The control means transmits the investment target data stored in the storage means from the communication means to the terminal device, and receives the investment data for the investment target data transmitted to the terminal device by the communication means.

A data transmitting/receiving method for this server device includes a step of storing investment target data to be an investment target into storage means, a step of transmitting the investment target data stored in the storage means to a terminal device, and a step of receiving investment data for the investment target data transmitted to the terminal device.

A terminal device used in such an investment system has communication means for communicating with a server device in which investment target data is stored, and control means for controlling the operation of the whole device. The control means receives the investment target data from the server device in accordance with the operation by a user, and transmits investment data for the received investment target data in accordance with the operation by the user.

A data transmitting/receiving method for this terminal device includes a step of receiving investment target data from a server device in accordance with the operation by a user, and a step of transmitting investment data for the received investment target data to the server device.

Another investment system according to the present invention has memory means for storing contents produced by a contents producer, selecting means for selecting a desired content from the contents stored in the memory means, recording means for recording the content selected by the selecting means onto a recording medium, first accounting instructing means for instructing to carry out accounting for the recording to the recording medium, and second accounting instructing means for instructing to carry out accounting for investment associated with the content.

A data transmitting/receiving method for this investment system includes a step of storing contents produced by a contents producer into memory means, a step of recording a content selected by selecting means onto a recording medium by recording means, a step of instructing to carry out accounting for the recording to the recording medium, and a step of instructing to carry out accounting for investment associated with the content.

Another investment system according to the present invention has storage means in which a database having contents data stored therein is provided, first selecting means for selecting the contents data stored in the storage means, receiving means for receiving the contents data stored in the storage means and selected by the first selecting means, memory means in which the contents data received by the receiving means is recorded, second selecting means for selecting the contents data recorded in the memory means, transmitting means for transmitting the contents data recorded in the memory means and selected by the second selecting means, and providing means for providing the compensation for a user when the contents data recorded in the memory means is transmitted.

A data transmitting/receiving method for this investment system includes a step of selecting contents data stored in storage means by first selecting means, a step of receiving, by receiving means, the contents data stored in the storage means and selected by the first selecting means, a step of recording the contents data received by the receiving means to memory means, a step of selecting the contents data recorded in the memory means by second selecting means, a step of transmitting the contents data recorded in the memory means and selected by the second selecting means, and a step of providing the compensation for a user by providing means when the contents data recorded in the memory means is transmitted.

Brief Description of the Drawings

Fig.1 is a block diagram showing the specific structure of an investment system to which the present invention is applied.
Fig.2 is a flowchart for explaining the operation of the investment system.
Fig.3 is a flowchart for explaining the operation of the investment system.
Fig.4 is a flowchart for explaining the operation of the investment system in which a new artist is a target of investment.
Fig.5 is a flowchart for explaining the operation of the investment system in which a new tune is a target of investment.
Fig.6 is a block diagram showing the specific structure of another example of the investment system to which the present invention is applied.

Fig.7 is a flowchart for explaining the operation of the investment system shown in Fig.6.

Fig.8 is a flowchart for explaining the operation of the investment system shown in Fig.6.

Fig.9 is a flowchart for explaining a modification of the investment system shown in Figs.7 and 8.

Fig.10 is a flowchart for explaining the continuation of Fig.9.

Fig.11 is a flowchart for explaining the procedure for a music firm client device or an artist client device to issue an investment ticket via a server device.

Fig.12 is a flowchart for explaining an example in which investment tickets are sold while the investment ticket retaining rate for the issuer is changed in accordance with the size of the issuer.

Fig.13 is a flowchart for explaining an example in which the investment ticket retaining rate for an individual artist, a record company or a music firm, as the issuer of investment tickets, is set in accordance with the achievement of an investment target.

Fig.14 is a flowchart for explaining the continuation of Fig.13.

Fig.15 illustrates the relation between achievement data and the estimated total amount of funds.

Fig.16 illustrates the relation between the estimated total amount of funds and the investment ticket retaining rate for the issuer.

Fig.17 is a flowchart for explaining an example in which the investment ticket retaining rate for an individual artist, a record company or a music firm, as the issuer of investment tickets, is set in accordance with the result of popularity vote.

Fig.18 illustrates the investment ticket retaining rate for the issuer.

Fig.19 is a flowchart for explaining an example in which selling and buying of investment tickets are carried out at an asking price.

Fig.20 is a flowchart for explaining an example in which selling and buying of investment tickets are carried out at a floating price.

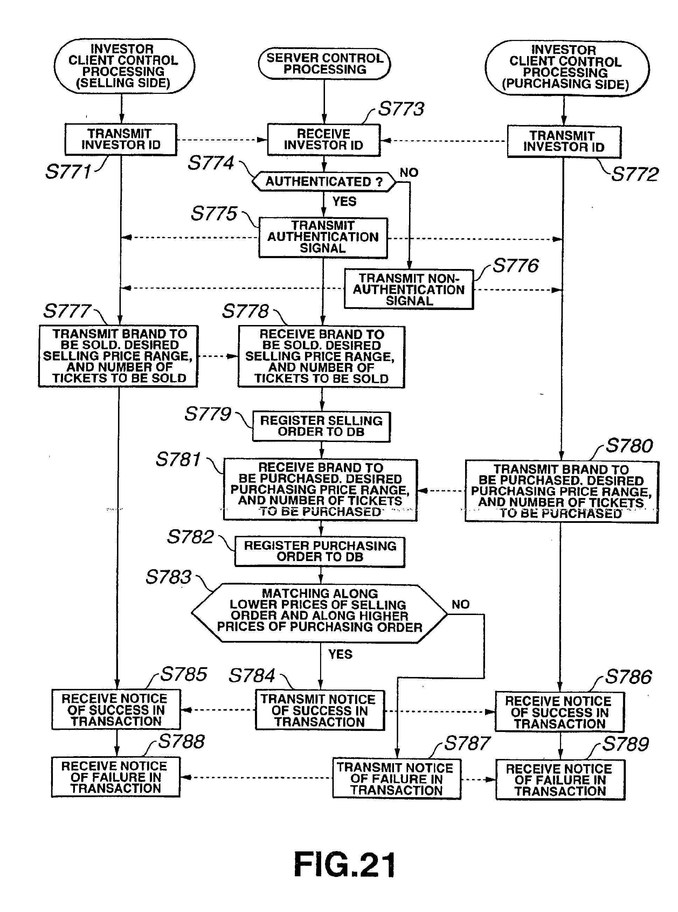

Fig.21 is a flowchart for explaining an example in which margins are provided for the desired selling price on the seller side and for the desired purchasing price on the buyer side.

Fig.22 is a flowchart for explaining the operation of accounting.

Fig.23 is a block diagram showing the specific structure of an investment system which enables selection of ordinary accounting or investment accounting in selling the contents.

Fig.24 is a flowchart for explaining the operation of a kiosk terminal device.

Figs.25A to 25 C show specific images displayed on a display unit of the kiosk terminal device.

Figs.26A to 26D show specific images displayed on a display unit of the kiosk terminal device.

Fig.27 is a flowchart for explaining the specific processing operation of a host computer of an investment funds management company.

Fig.28 illustrates distribution of sales.

Fig.29 is a flowchart for explaining another specific processing operation of the host computer of the investment funds management company.

Fig.30 is a block diagram showing the specific structure of an investment system to which the present invention is applied, using a mobile communication system.

Fig.31 is a block diagram showing the specific structure of the mobile communication investment system.

Fig.32 is a flowchart for explaining the operation of the mobile communication investment system.

Fig.33 is a flowchart for explaining a specific calculation method for the contents value.

Fig.34 is a flowchart for explaining another specific calculation method for the contents value.

Fig.35 is a flowchart for explaining still another specific calculation method for the contents value.

Fig.36 is a flowchart for explaining still another specific calculation method for the contents value.

Fig.37 illustrates a method for calculating dividends to the user and the artist.

Fig.38 is a flowchart for explaining another specific operation of the mobile communication investment system.

Fig.39 illustrates a method for calculating dividends to the user and the firm.

Fig.40 is a flowchart for explaining the specific operation of the mobile communication investment system.

Fig.41 illustrates a method for calculating dividends to the user and the firm.

Best Mode for Carrying Out the Invention

An investment system to which the present invention is applied will now be described with reference to the drawings.

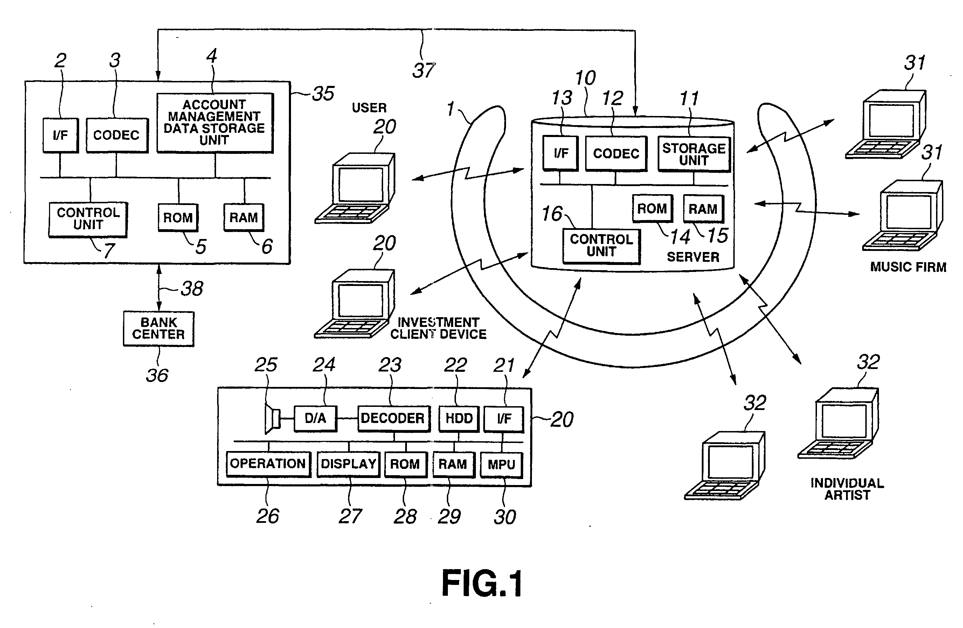

Fig.1 is a block diagram showing the structure of an investment system to which the present invention is applied. This investment system has a server device 10 which stores at least one investment target data, and at least one investment client device 20 which accesses the server device 10 to download the investment target data and to transmit investment data corresponding to the operation by a user to the server device 10, as shown in Fig.1.

The investment system also has a music firm client device 31 which receives notification data of the price of an investment ticket, the total number of investment tickets and the number of investors from the server device 10, at least one artist client device 32 which uploads investment target data to the server device 10, and an accounting center 35 which carries out settlement processing, as shown in Fig.1.

The server device 10 has a storage unit 11 in which a plurality of investment target data such as music tune data of individuals and the like are stored, a codec 12 for encoding and decoding the data stored in the storage unit 11, and an interface 13 for transmitting the music tune data and the like to the investment client device 20, as shown in Fig.1.

Similarly to an ordinary computer, the server device 10 also has a read-only memory (hereinafter referred to as ROM) 14, a random access memory (hereinafter referred to as RAM) 15, and a control unit 16 made up of a central processing unit (CPU). A program for controlling the operation of the server device 10 is stored in the ROM 14. This program is temporarily loaded into the RAM 15 and executed by the control unit 16, thus controlling the operation of the whole device. In the server device 10, a homepage (HP) is set up on which individual artists belonging to no music firms or record companies are gathered, and the investment client device 20 can access and browse the homepage and can download investment target data. On the homepage of the server device 10, a list of investment tickets on sale or the like is provided and users can sell and buy investment tickets of specific artists through the Internet 1. That is, the server device 10 functions as a broker.

The investment client device 20 is made up of a personal computer (hereinafter referred to as PC), a set top box, or a portable information terminal device which can access the homepage, for example, through the Internet 1. Specifically, the investment client device 20 made up of a PC has an interface 21 for accessing the server device 10 through the Internet 1 and downloading investment target data, a hard disk device (hereinafter referred to as HDD) 22 on which the downloaded investment target data and various application programs are recorded, a decoder 23 for decoding music tune data included in the downloaded investment target data, a digital/analog converter 24 for converting the decoded music tune data to analog audio signals, and a speaker 25 for converting the audio signals to sounds, as shown in Fig.1.

The investment client device 20 also has an operating unit 26 for operating this PC, a display unit 27 for displaying a browsed homepage or the like, a ROM 28 for storing a program to control the operation of the PC, a RAM 29 for temporarily reading the application programs recorded in the HDD 22, and a microprocessor (hereinafter referred to as MPU) 30 for executing the application programs, as shown in Fig.1.

The investment client device 20 is installed at the home of an individual user and is connected with a provider in the Internet 1 via a modulator/demodulator and a telephone line, or a terminal adaptor and an ISDN (integrated services digital network), or a CATV (cable television) network. In the HDD 22, operating software (OS) and various application programs such as browsing software, an electronic mail program and protocols are recorded. These programs are read into the RAM 29 when necessary, and are executed by the MPU 30. For example, when the user browses the homepage of an artist set up in the server device 10, the user uses the keyboard and mouse of the operating unit 26 to carry out the operation to input the URL (uniform resource locator) of the homepage and then the corresponding TCP/IP (transmission control protocol/Internet protocol) protocols are executed. Thus, the investment client device 20 accesses the server device 10 through the Internet 1 and displays the homepage on the display unit 27. The investment client device 20 may be a dedicated terminal device such as a KIOSK terminal device or a portable telephone, as will be described later, instead of the above-described PC.

The music firm client device 31 is constituted by a PC similarly to the investment client device 20 and is set in a plurality of music firms. The music firm client device 31 receives notification data such the price of an investment ticket, the total number of investment tickets and the number of investors, sent from the server device 10, and displays the contents of the notification data. Since the music firm client device 31 is constituted similarly to the investment client device 20, its structure will not be described further in detail.

The artist client device 32 is constituted by a PC similarly to the investment client device 20 and is set at the homes of artists belonging to no music firms. An obscure artist belonging to no music firms or an amateur artist before debut inputs his/her own music as music tune data into the artist client device 32. When the artist carries out the operation to access the above-described homepage or a dedicated homepage, the artist client device 32 accesses the homepage and displays the homepage on the screen. After that, when the artist carries out the uploading operation, the artist client device 32 uploads data related to the artist such as the music tune and profile of the artist to the server device 10. The server device 10 stores the data related to the artist to the storage unit 11 made up of, for example, a hard disk device. Since the artist client device 32 has the same structure as the investment client device 20, its structure will not be described further in detail.

The accounting center 35, which carries out settlement processing in selling and buying investment tickets between the server device 10 and the investment client or in distributing the profit to investors, has an interface 2 connected with the server device 10 via a leased line 37 and connected with a bank center 36 via a leased line 38, a codec 3 for coding and decoding data, a storage unit 4 in which account management data of investors are stored, a ROM 5 in which a program for controlling the operation of the whole device is stored, a RAM 6 to which the program stored in the ROM 5 is loaded, and a control unit 7 for controlling the whole device, as shown in Fig.1.

When an artist makes an entry by using the artist client device 32, the accounting center 35 updates the account data of the artist, thus carrying out settlement processing of the entry fee. When an investor purchases investment tickets through the investment client device or when dividends are distributed to investors, the accounting center 35 updates the account data of the investor, thus carrying out settlement processing. It is also possible not to charge the entry fee of the artist.

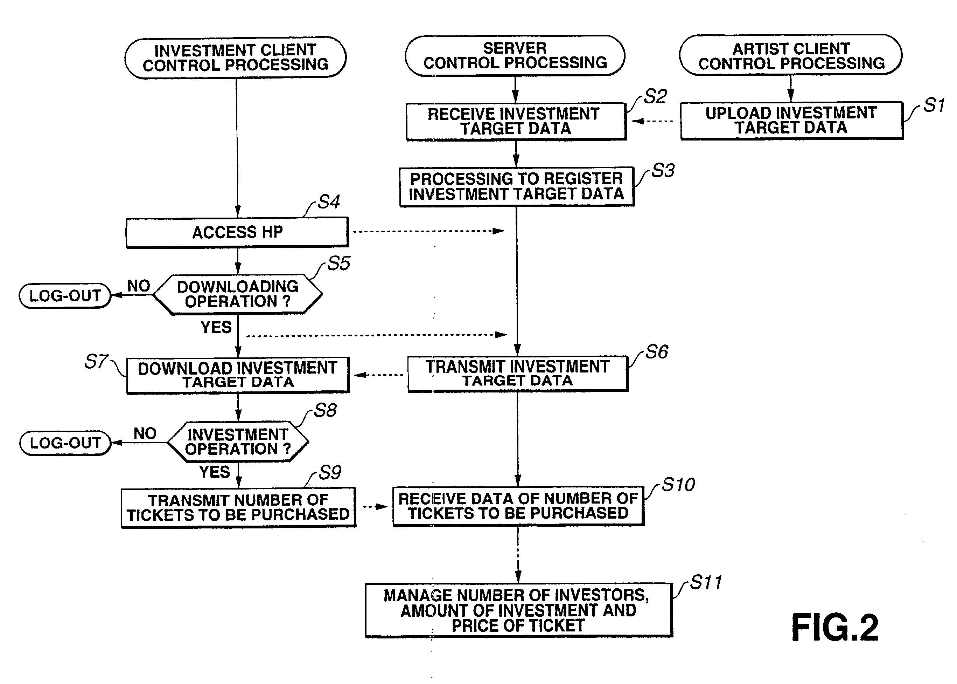

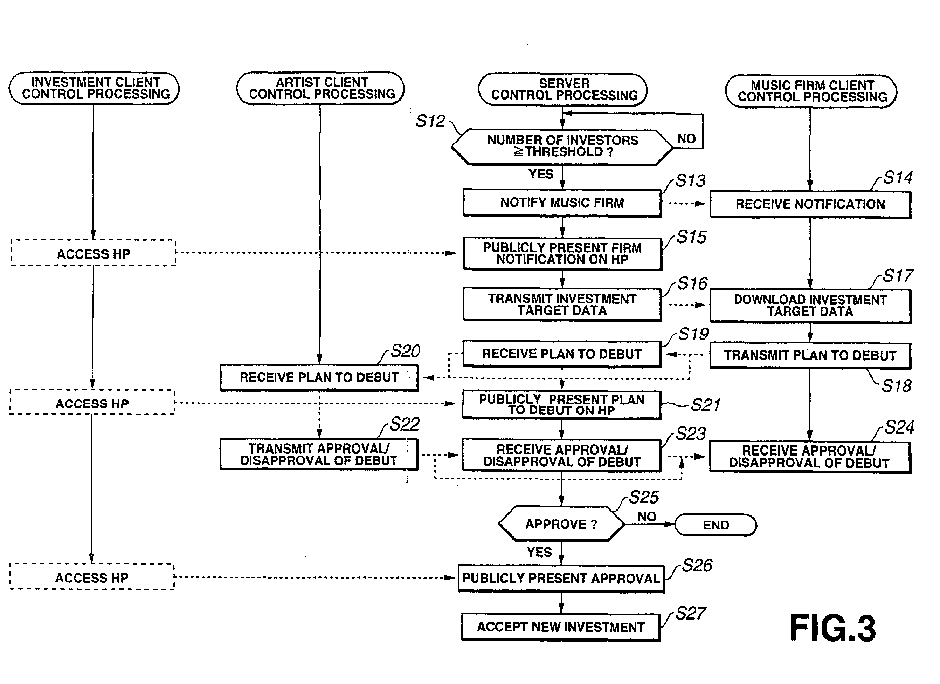

The operation of the investment system constituted as described above will now be described with reference to the flowcharts of Figs.2 and 3.

At step S1, when the artist as a user uses the keyboard and mouse to carry out the operation to upload the data related to the artist such as the music tune data obtained through the artist's performance in various manners, appearance, age, profile and e-mail address, as described above, the artist client device 32 uploads the data related to the artist to the server device 10 via the Internet 1.

At step S2, the server device 10 receives the music tune data and the like uploaded thereto. At step S3, the server device 10 classifies the data sent from respective artists by country or by genre and registers the classified data as investment target data on the homepage.

At step S4, when the user carries out the operation to access the homepage, the investment client device 20 accesses the homepage of the genre desired by the user of the server device 10 and displays the homepage on the display unit 27.

Using the displayed homepage, the user finds an artist who seems promising or the user's favorite artist, and carries out the downloading operation. At step S5, the investment client device 20 discriminates whether or not the user carried out the downloading operation. If the result of discrimination is YES, the processing goes to step S7. If the result of discrimination is NO, the investment client device 20 carries out another processing corresponding to the operation by the user such as log-out processing to disconnect from the Internet 1.

At step S6, in response to a request from the investment client device 20, the server device 10 transmits the music tune data, profile data and the like of the artist desired by the user of the investment client device 20, and the currently set price data of an investment ticket, to the investment client device 20. At step S7, the investment client device 20 receives these data, then temporarily records the data in the HDD 22 and displays the data on the screen. When the user carries out the operation to reproduce the music tune data so as to listen to the music tune, the decoder 23 of the investment client device 20 decodes the music tune data, the D/A converter 24 converts the decoded music tune data to analog signals, and the speaker 25 outputs music based on the music tune data, as described above. Thus, the music tune of the artist selected by the user is reproduced.

The user listens to the reproduced music tune on trial and determines whether the artist is promising or not and whether the music tune will be a hit or not. Then, the user determines whether to invest in the artist or the music tune and how much to invest if the user invests. At step S8, the investment client device 20 discriminates whether or not the user carried out the investment operation. If it is determined that the user carried out the investment operation, the processing goes to step S9. If it is determined that the user did not carry out the investment operation, the investment client device 20 carries out another processing corresponding to the operation by the user such as log-out processing.

At step S9, the investment client device 20 transmits the data operated by the user such as the number of investment tickets to be purchased or the amount of investment and the identification (ID) of the user to the server device 10. At step S10, the server device 10 receives these data. The server device 10 is connected to the accounting center 35 and collects the amount for the number of purchased tickets as the accounting center 35 updates the account management data of the investor.

At step S11, the server device 10 receives the data of the number of purchased tickets from the plurality of investment client device 20, that is, from the plurality of investors using the Internet 1, for a predetermined period such as several months, and manages the number of investors, the amount of investment and the price of the investment ticket. The server device 10 sets a high price for the investment ticket with respect to an artist or a music tune for which many investment applications are made. When a user who invested wants to sell the investment ticket, it is possible to buy the investment ticket at the current price of the investment ticket. Specifically, in the server device 10, selling and buying of investment tickets for artists and investment tickets for music tunes may be carried out similarly to the actual stock transaction. Alternatively, the user of the investment client device 20 who invested in an artist may send an electronic mail to the e-mail address of the artist made public on the homepage so as to communicate with the artist, and the artist may directly promote himself/herself to the person who invested in the artist. When selling and buying of investment tickets are carried out between investors, the server device 10 is connected to the accounting center 35 and the accounting center 35 updates the account data of the parties concerned on the basis of the transaction in accordance with the data from the server device 10.

Next, at step S12 shown in Fig.3, the server 10 discriminates whether or not the number of investors exceeded a predetermined threshold value. If it is determined that the number of investors exceeded the predetermined threshold value, the processing goes to step S13. If it is determined that the number of investors did not exceeded the predetermined threshold value, step S12 is repeated. That is, the server device 10 waits until the number of investors exceeds the predetermined threshold value. At step S13, the server device 10 notifies the music firm client devices 31 of the plurality of music firms that made contract with the present system, of the name of the artist for which the number of investors has exceeded the predetermined threshold value. At step S14, the music firm client devices 31 receive the notification. In this embodiment, the artist in which many investors invested is expected to be popular in the future and the music firm client devices 31 are notified of that artist. Instead of the notification when the number of investors exceeds the predetermined threshold value, it is also possible to notify the music firm client devices 31 of the excess of the total amount of investment or the price of the investment ticket over a threshold value when it happens, or the excess of a combination of the number of investors, the amount of investment and the price of the investment ticket over a threshold value when it happens. Alternatively, it is possible to notify the music firm client devices 31 of the excess of the number of downloading times over a predetermined value when it happens.

At step S15, the server 10 publicly presents on the home page that the artist was introduced to the music firms. The user of the investment client device 20 can learn that the artist was introduced to the music firms, by browsing the homepage.

Meanwhile, when the person in charge of the music firm client device 31 carries out the operation to download the music data of the artist notified of from the server device 10, that is, investment target data, the server 10 at step S16 transmits the investment target data, and the music firm client device 31 at step S17 downloads the investment target data and temporarily records it into the HDD. When the person in charge at the music firm carries out the operation to reproduce the music tune so as to listen to the music tune, the music firm client device 31 outputs the music based on the music tune data from the speaker 25, similarly to the above-described investment client device 20. Thus, the person in charge can listen to the music tune of the artist notified of from the server device 10 and determine whether to let the artist debut or not.

The person in charge at the music firm can listen to the music tune and determine whether the artist is promising or not from the professional viewpoint. If the person in charge determines that the artist is promising, then decides to let the artist debut from the his/her music firm, and carries out the operation therefor, the music firm client device 31 at step S18 transmits information that the music firm is planning to let the artist debut, to the server device 10. At step S19, the server device 10 receives the information and transmits information that there is an application for debut from the music firm, to the artist client device 32. At step S20, the artist client device 32 receives the application for debut. When there are applications for debut from a plurality of music firms, the organizer of the server device 10 may hold an auction on the server device 10 so that the music firm which set the highest price becomes a successful bidder. Alternatively, the application for debut may be directly transmitted from the music firm client device 31 to the artist client device 32.

At step S21, the server device 10 publicly presents the debut plan on the homepage, and the user of the investment client device 20 can learn that the artist is scheduled to debut from the music firm, by browsing the homepage.

At step S22, when the artist of the artist client device 32 carries out the operation to approve the debut or the operation to disapprove the debut, the artist client device 32 sends information of approval or disapproval to the server device 10. At step S23, the server 10 receives the information of approval or disapproval and transmits the information to the music firm client device 31. At step S24, the music firm client device 31 receives the information. The information of approval or disapproval may also be transmitted directly from the artist client device 32 to the music firm client device 31.

At step S25, the server 10 discriminates whether the artist approved the debut or not. If it is determined that the artist approved the debut, the processing goes to step S26. If it is determined that the artist did not approved the debut, the server 10 ends the processing with the artist and carries out another processing. At step S26, the server device 10 publicly presents on the homepage that the artist will debut. At step S27, the server device 10 raises the price of the investment ticket for the artist to debut and seeks new investment. Although the artist is a target of investment in the above-described embodiment, the music tune may be used as a target of investment.

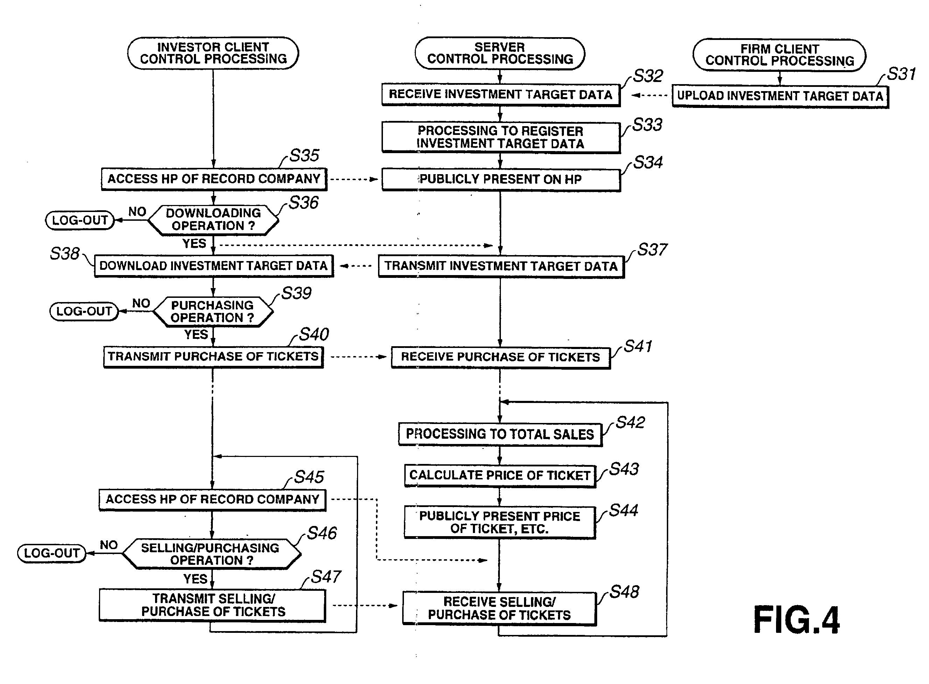

In the above description, an individual artist or his/her music tune is used as a target of investment. Hereinafter, another embodiment is described in which a new artist belonging to a music firm, an entertainment agency or a record company, or his/her new song is used as a target of investment. This investment system is constituted by a server 10, an investment client device 20 and a music firm client device 31 similarly to the investment system shown in Fig.1, but does not have an artist client device 32. Therefore, these devices will not be described further in detail. The operation of the investment system will now be described with reference to the flowchart of Fig.4.

At step S31, when a person in charge at a record company carries out the uploading operation, the music firm client device 31, installed at a music firm, an entertainment agency or a record company, uploads data related to artists such as music tune data and profile of a new artist and the price of an investment ticket, which will be described later, to the server device 10 via the Internet 1.

At step S32, the server device 10 receives the music tune data and the like which are uploaded thereto. At step S33, the server device 10 classifies the received data, for example, by genre, and registers it as investment target data. At step S34, the server device 10 publicly presents the music tune data of the new artist and the like on the homepage of the record company.

At step S35, when a user carries out the operation to access the homepage of the record company, the investment client device 20 accesses the homepages of artists who are scheduled to debut soon in the server device 10 and displays the homepages on the display unit 27.

Using the displayed homepages, the user finds an artist who seems promising or the user's favorite artist and carries out the downloading operation. At step S36, the investment client device 20 discriminates whether or not the user carried out the downloading operation. If it is determined that the user carried out the downloading operation, the processing goes to step S38. If it is determined that the user did not carry out the downloading operation, the investment client device 20 carries out another processing corresponding to the operation by the user such as log-out processing to disconnect from the Internet 1.

At step S37, in response to a request from the investment client device 20, the server device 10 transmits the music tune data, profile data and the like of the artist desired by the user of the investment client device 20, and the price of an investment ticket, to the investment client device 20. At step S38, the investment client device 20 receives these data, then temporarily records the data in the HDD 22 and displays the data on the screen. When the user carries out the operation to reproduce the music tune data so as to listen to the music tune, the investment client device 20 outputs the music based on the music tune data similarly to the above-described embodiment. Thus, the music tune of the new artist selected by the user is reproduced.

The user listens to the reproduced music tune on trial and determines whether the artist is promising or not and whether to purchase an investment ticket for the artist. At step S39, the investment client device 20 discriminates whether or not the user carried out the investment operation. If it is determined that the user carried out the investment operation, the processing goes to step S40. If it is determined that the user did not carry out the investment operation, the investment client device 20 carries out another processing corresponding to the operation by the user such as log-out processing.

At step S40, the investment client device 20 transmits data such as data related to the purchase operated by the user and the identification (ID) of the user to the server device 10. At step S41, the server device 10 receives these data. The server device 10 is connected to the accounting center 35 and collects the amount for the number of purchased investment tickets as the accounting center 35 updates the account management data of the investor.

After the debut of the new artist, at step S42, the server device 10 totals sales data of each of the released music tunes of the new artist. At step S43, the server device 10 calculates the price of the investment ticket for the artist on the basis of the sales data of each music tune. Specifically, as shown in the following Table 1, if the number of the first released singles/albums of the new artist that are sold is expressed by "m," the number of the second and subsequent singles/albums that are increased or decreased is expressed by "x," and the price of the first single/album is expressed by "n" yen, the prices of the second, third, ... singles/albums are expressed by $n \times (m \pm x)/m$, $n \times ((m \pm x) \pm x)/(m \pm x)$, ... Meanwhile, if the amount of sales of related products such as calendars and commercial performance fee associated with the first single/album is expressed by "Y" yen and the increase/decrease in sales of related products associated with the second and subsequent singles/albums is expressed by "X" yen, the sales tendencies of the related products associated with the second, third, ... singles/albums are expressed by $(Y \pm X)/Y \times 100\%$, $((Y \pm X) \pm X)/(Y \pm X) \times 100\%$, ... The price of the ticket for the artist with respect to each music tune is expressed by (price of each music tune (yen)) $\times$ (sales tendency of related products (%)). A single in this case is a recording medium such as a compact disc on which one music tune is recorded. An album is a recording medium on which a plurality of music tunes are recorded.

Table 1

| Music tune on sale (single/album) | First | Second | Third ... |
|---|---|---|---|
| Sales tendency (number of singles/albums) | m | $m \pm x$ | $(m \pm x) \pm x$ |
| Price of each music tune on sale | n (amount of initial investment) | $n \times (m \pm x)/m$ | $n \times \{(m \pm x) \pm x\}/(m \pm x)$ |
| Sales of related products | Y | $Y \pm x$ | $(Y \pm x) \pm x$ |
| Sales tendency rate (%) | - | $(Y \pm x) \times 100/Y$ | $\{(Y \pm x) \pm x\} \times 100/(Y \pm x)$ |

Table 1   (continued)

| Music tune on sale (single/album) | First | Second | Third ... |
|---|---|---|---|
| Price of ticket (yen) | Price of each music tune on sale (yen) × sales tendency of related products (%) | | |
| * Related products include calendars and commercial performance fee, etc. | | | |

When the price of the investment ticket is calculated on the basis of the sales of albums, the price of the album may be calculated by totaling the prices of the respective music tunes recorded on the album.

At step S44, the server device 10 publicly presents, on the homepage, the sales data of each music tune on sale, the proportion of the number of sales of a new music tune and the number of sales of a previous music tune, and the price of the investment ticket.

After that, at every opportunity, the user of the investment client device 20 accesses the homepage and determines whether to sell or newly purchase an investment ticket with reference to the presented price of the investment ticket. That is, at step S45, the investment client device 20 accesses the homepage of the record company. At step S46, the investment client device 20 discriminates whether the user carried out the operation to sell or purchase an investment ticket. If it is determined that the user carried out the operation, the processing goes to step S47. If it is determined that the user did not carry out the operation, the investment client device 20 carries out another processing corresponding to the operation by the user such as log-out processing to disconnect from the Internet 1.

At step S47, the investment client device 20 transmits data of selling or purchase of the investment ticket to the server device 10. At step S48, the server device 10 receives the data. Every time the user accesses the homepage of the new artist of the record company, the investment client device 20 repeats the processing of step S45 and the subsequent steps and the server device 10 periodically repeats the processing of step S42 and the subsequent steps. When selling or purchase of an investment ticket is carried out, the server device 10 is connected to the accounting center 35 and the accounting center 35 updates the account data of the investor on the basis of the data from the server device 10.

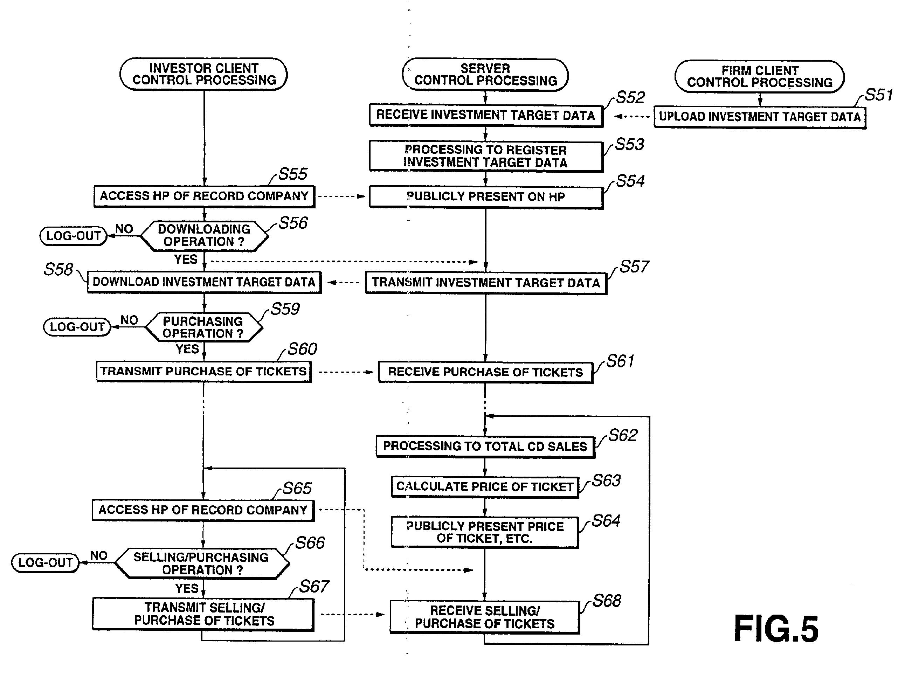

An embodiment in which, instead of an artist, a new music tune sold by a record company is used as an investment target will now be described with reference to the flowchart of Fig.5. This investment system, too, is constituted by a server 10, an investment client device 20 and a music firm client device 31 similarly to the investment system shown in Fig.1, but does not have an artist client device 32. Therefore, these devices will not be described further in detail.

When a person in charge at a record company carries out the uploading operation, at step S51, the music firm client device 31 installed at the record company uploads data related to new music tunes such as music tune data of the new music tunes, the profiles of the artists and the prices of investment tickets, to the server device 10 via the Internet 1.

At step S52, the server device 10 receives the music tune data and the like uploaded thereto. At step S53, the server device 10 classifies the received data, for example, by genre, and registers the data as investment target data. At step S54, the server device 10 publicly presents the music tune data of the new music tunes on the homepage of the record company.

At step S55, when the user carries out the operation to access the homepage of the record company, the investment client device 20 accesses the homepage of the new music tunes of the server device 10 and displays the homepage on the display unit 27.

Using the displayed homepage, the user finds a new music tune which seems promising or the user's favorite tune and carries out the downloading operation. At step S56, the investment client device 20 discriminates whether the user carried out the downloading operation or not. If it is determined that the user carried out the downloading operation, the processing goes to step S58. If it is determined that the user did not carried out the downloading operation, the investment client device 20 carries out another processing corresponding to the operation by the user such as log-out processing to disconnect from the Internet 1.

At step S57, in response to a request from the investment client device 20, the server device 10 transmits the music tune data, profile data and price of an investment ticket of the new music tune desired by the user of the investment client device 20, to the investment client device 20. At step S58, the investment client device 20 receives these data, then temporarily records the data in the HDD 22 and displays the data on the screen. When the user carries out the operation to reproduce the music tune data so as to listen to the new music tune, the investment client device 20 outputs the music based on the music tune data. Thus, the new music tune selected by the user is reproduced.

The user listens to the reproduced new music tune on trial and determines whether the new music tune will be a hit or not and whether to purchase an investment ticket for the new music tune. At step S59, the investment client device 20 discriminates whether or not the user carried out the purchase operation. If it is determined that the user carried out the purchase operation, the processing goes to step S60. If it is determined that the user did not carry out the purchase operation, the investment client device 20 carries out another processing corresponding to the operation by the user such as log-out processing.

At step S60, the investment client device 20 transmits data such as data related to the purchase operated by the user and the identification (ID) of the user to the server device 10. At step S61, the server device 10 receives these data. The server device 10 is connected to the accounting center 35 and collects the amount for the number of purchased investment tickets as the accounting center 35 updates the account management data of the investor.

After the lapse of a predetermined period, at step S62, the server device 10 totals sales data of the new music tune. At step S63, the server device 10 calculates the price of the investment ticket for the new music tune based on the initial price of the ticket of "n" yen in accordance with the sales data of the new music tune. Specifically, as shown in the following Table 2, the price of the ticket for the new music tune is increased in accordance with the increase in the number of sales, for example, the price of the ticket is increased to n×1.03 yen, n×1.05 yen, n×1.1 yen, n×1.5 yen, ... as the number of sales of compact discs on which the new music tune is recorded as contents is increased to 1000, 2500, 5000, 7500, ..., respectively.

Table 2

| Number of sales of music tune (CDs) | 1000 | 2500 | 5000 | 7500 | .... |
|---|---|---|---|---|---|
| Initial price n (yen) | n×1.03 | n×1.05 | n×1.1 | n×1.5 | .... |

At step S64, the server device 10 publicly presents, on the homepage, the data of the number of sales of the new music tune and the price of the investment ticket.

After that, at every opportunity, the user of the investment client device 20 accesses the homepage and determines whether to sell or newly purchase an investment ticket with reference to the presented price of the investment ticket. That is, at step S65, the investment client device 20 accesses the homepage of the record company. At step S66, the investment client device 20 discriminates whether the user carried out the operation to sell or purchase an investment ticket. If it is determined that the user carried out the operation, the processing goes to step S67. If it is determined that the user did not carry out the operation, the investment client device 20 carries out another processing corresponding to the operation by the user such as log-out processing to disconnect from the Internet 1.

At step S67, the investment client device 20 transmits data of selling or purchase of the investment ticket to the server device 10. At step S68, the server device 10 receives the data. Every time the user accesses the homepage of the new music tune of the record company, the investment client device 20 repeats the processing of step S65 and the subsequent steps and the server device 10 periodically repeats the processing of step S62 and the subsequent steps. When selling or purchase of an investment ticket is carried out, the server device 10 is connected to the accounting center 35 and the accounting center 35 updates the account data of the investor on the basis of the data from the server device 10.

As is clear from the above description, the investment system to which the present invention is applied can provide an opportunity for an obscure artist to promote his/her talent and music tunes to many people at a time or to music firms and record companies. The music firms and record companies can advertise new artists and new music tunes to many people. If the user of the investment client device 20, that is, the investor has foresight, the investor can gain a profit based on the difference between the purchasing price and the selling price of the investment ticket.

In the above-described embodiment, a new music tune is used as an investment target after the new music tune is put on sale. However, a new music tune before sale may also be used as an investment target. Specifically, the investment target data uploaded from the music firm client device 31 to the investment client device 20 at steps S51 and S52 in Fig.5 is caused to be a part of music tune data that is scheduled to be on sale soon, for example, an introductory part or an impressive part of the music tune data, and the investment target data downloaded from the server device 10 to the investment client device 20 at step S58 is caused to be the introductory part or the impressive part of the music tune data. Therefore, the user of the investment client device 20 listens to the introductory part or the impressive part and determines whether to purchase the investment ticket or not. After that, the music tune is put on sale. Then, similarly to the above-described embodiment, presentation of the sales of the new music tune, determination of a new price of the investment ticket, and selling and buying of the investment ticket are carried out.

Another embodiment will now be described in which a new music tune before sale or a new music tune that is put on sale is used as an investment target and in which the downloading of the new music tune is switched from a free service to a chargeable service when the number of downloading times exceeds a predetermined value.

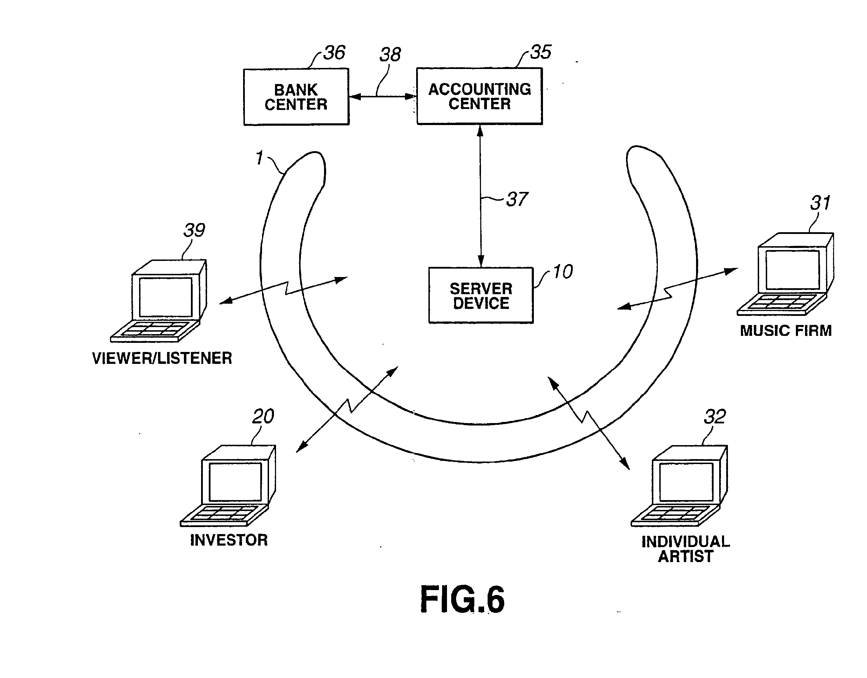

The investment system in this embodiment has a server device 10 which stores investment target data, and a viewer/listener client device 39 which accesses the server device 10 and downloads investment target data, as shown in Fig.6.

This investment system also has an investment client device 20 which downloads investment target data and uploads investment data to the server device 10, a music firm client device 31 and an artist client device 32 which upload investment target data to the server device 10, and an accounting center 35 which carries out settlement processing. The viewer/listener client device 39 has the same structure as the music firm client device 31 and the artist client device 32 and therefore will not be described further in detail.

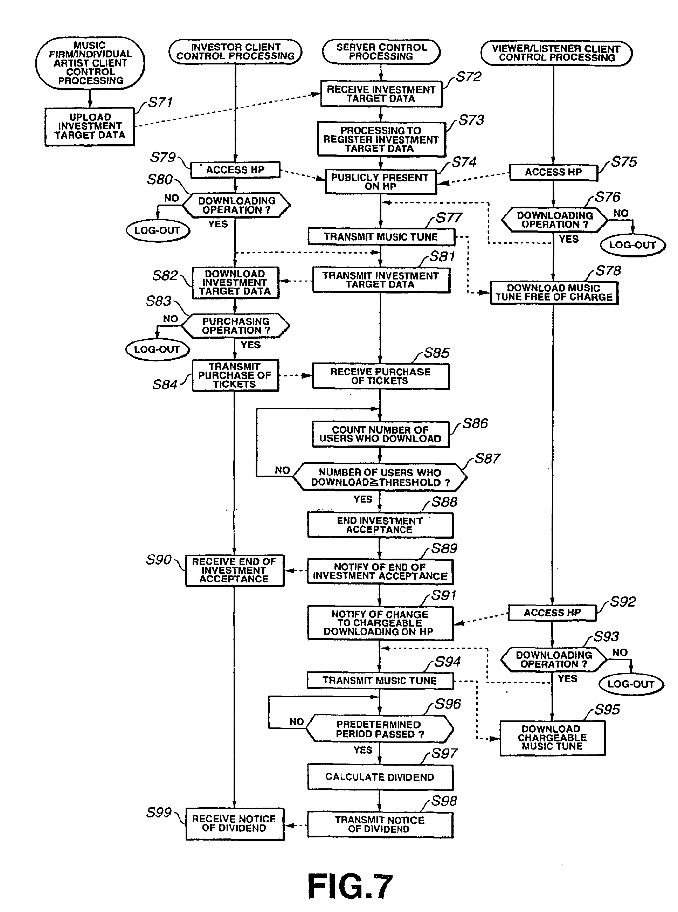

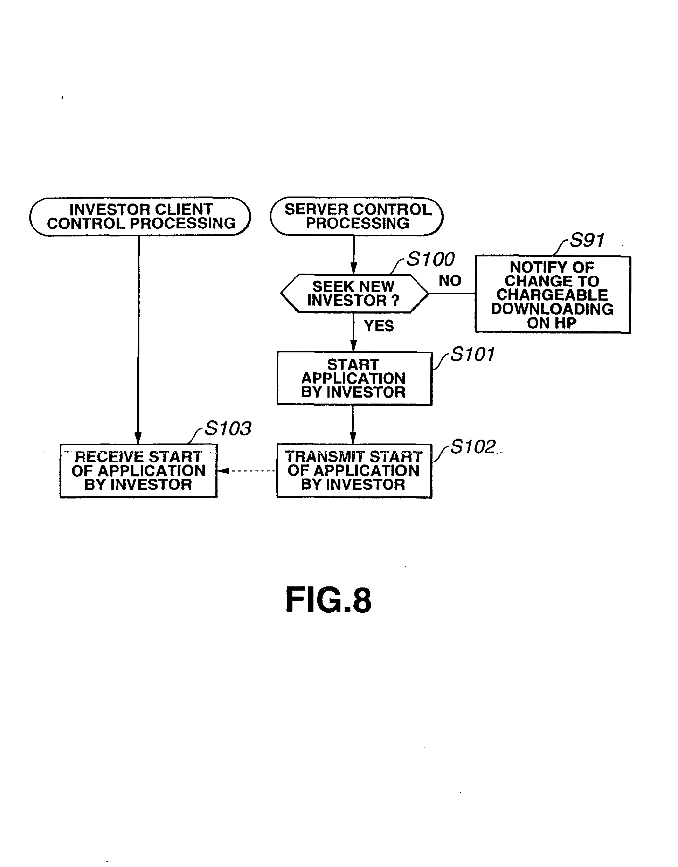

The operation of the investment system constituted as described above will now be described with reference to Figs.7 and 8.

At step S71, when an artist who wants to be made public on a homepage set up in the server device 10 or a person in charge at a record company to which an artist belongs carries out the operation to upload data related to the artist such as music tune data, appearance, age, profile and e-mail address of the artist by using the keyboard and mouse of the music firm client device 31 or the artist client device 32, the music firm client device 31 or the artist client device 32 uploads the data related to the artist to the server device 10 via the Internet 1.

At step S72, the server device 10 receives the music tune data and the like uploaded thereto. At step S73, the server device 10 classifies the data sent from respective artists, for example, by country or by genre, and registers the classified data as investment target data on the homepage. At step S74, the investment target data is publicly presented on the homepage. At step S75, when the user carries out the operation to access the homepage, the viewer/ listener client device 39 accesses the homepage of the genre desired by the user of the server device 10 and displays the homepage on the display unit. On the homepage, it is described that the viewer/listener can download the music tune data free of charge.

Using the homepage displayed on the display unit of the viewer/listener client device 39, the viewer/listener finds an artist who seems promising or the viewer/listener's favorite artist, and carries out the operation to download the music tune data. At step S76, the viewer/listener client device 39 discriminates whether or not the viewer/listener carried out the downloading operation. If the result of discrimination is YES, the processing goes to step S78. If the result of discrimination is NO, the viewer/listener client device 39 carries out another processing corresponding to the operation by the user such as log-out processing to disconnect from the Internet 1.

At step S77, in response to a request from the viewer/listener client device 39, the server device 10 transmits the music tune data of the artist desired by the viewer/listener of the viewer/listener client device 39, to the viewer/ listener client device 39. At step S78, the viewer/listener client device 39 receives these data free of charge, then temporarily records the data in the recording unit and displays the data on the screen. When the viewer/listener carries out the operation to reproduce the music tune data so as to listen to the music tune, the viewer/listener client device 39 outputs music based on the music tune data from the speaker. Thus, the music tune of the artist selected by the viewer/listener is reproduced.

Meanwhile, when an investor carries out the operation to access the homepage by using the investment client device 20, the investment client device 20 at step S79 accesses the homepage of the genre desired by the user of the server device 10 and displays the homepage on the display unit 27.

Using the displayed homepage, the investor finds an artist who seems promising or the investor's favorite artist, and carries out the operation to download the music tune data. At step S80, the investment client device 20 discriminates whether or not the user carried out the downloading operation. If the result of discrimination is YES, the processing goes to step S82. If the result of discrimination is NO, the investment client device 20 carries out another processing corresponding to the operation by the user such as log-out processing to disconnect from the Internet 1.

At step S81, in response to a request from the investment client device 20, the server device 10 transmits the music tune data, profile data and the like of the artist desired by the user of the investment client device 20, and the currently set price data of an investment ticket, to the investment client device 20. At step S82, the investment client device 20 receives these data, then temporarily records the data in the HDD 22 and displays the data on the screen. When the investor carries out the operation to reproduce the music tune data so as to listen to the music tune, the decoder 23 of the investment client device 20 decodes the music tune data, the D/A converter 24 converts the decoded music tune data to analog signals, and the speaker 25 outputs music based on the music tune data. Thus, the music tune of the artist selected by the investor is reproduced.

The investor listens to the reproduced music tune on trial and determines whether the artist is promising or not and whether the music tune will be a hit or not. Then, the investor determines whether to invest in the artist or the music tune and how much to invest if the investor invests. At step S83, the investment client device 20 discriminates whether or not the investor carried out the investment operation. If it is determined that the investor carried out the investment operation, the processing goes to step S84. If it is determined that the investor did not carry out the investment operation, the investment client device 20 carries out another processing corresponding to the operation by the user such as log-out processing.

At step S84, the investment client device 20 transmits the data operated by the investor such as the number of investment tickets to be purchased or the amount of investment and the identification (ID) of the investor to the server device 10. At step S85, the server device 10 receives these data. The server device 10 is connected to the accounting center 35 and collects the amount for the number of purchased tickets as the accounting center 35 updates the account management data of the investor.

At step S86, the server device 10 counts the number of downloading times of the viewer/listener client device 39 after the public presentation of the music tune of the registered artist. At step S87, the server device 10 discriminates whether or not the number of downloading times reached or exceeded a threshold value (for example, 100 users). Specifically, by identifying the ID such as the e-mail address of the viewer/listener client device 39, the server device 10 can prevent the counting of repeated downloading by the same viewer/listener and can count the correct number of users who downloaded the data. When the number of users who downloaded the data reaches or exceeds the threshold value, the processing goes to step S88 and the viewer/listener client device 39 ends acceptance of investment, that is, prohibits the access from the investment client device 20. When the number of user who downloaded the data is less than threshold value, the processing returns to step S86.

At step S89, the server device 10 notifies the investment client device 20 of the end of the acceptance of investment, and then at step S90, the investment client device 20 receives this notification. Thus, the investor can recognize that the acceptance of investment has ended. The server device 10 may notify of the end of the acceptance of investment and transmit the number of issued investment tickets.

At step S91, the server device 10 gives a notice on the homepage to the effect that the subsequent downloading of the music tune data of the artist is chargeable. When the viewer/listener carries out the operation to access the homepage, the viewer/listener client device 39 at step S92 accesses the homepage of the genre desired by the viewer/listener of the server device 10 and displays the homepage on the display unit. In this case, the server device 10 displays information that the downloading of the music tune data is chargeable (for example, 100 yen per download). Using the homepage displayed on the display unit of the viewer/listener client device 39, the viewer/listener finds an artist who seems promising or the viewer/listener's favorite artist, and carries out the operation to download the music tune data. At step S93, the viewer/listener client device 39 discriminates whether or not the viewer/listener carried out the downloading operation. If the result of discrimination is YES, the processing goes to step S93. If the result of discrimination is NO, the viewer/listener client device 39 carries out another processing corresponding to the operation by the user such as log-out processing to disconnect from the Internet 1.

At step S94, in response to a request from the viewer/listener client device 39, the server device 10 transmits the music tune data of the artist desired by the viewer/listener of the viewer/listener client device 39, to the viewer/listener client device 39. At step S95, the viewer/listener client device 39 receives these chargeable data, then temporarily records the data in the recording unit and displays the data on the screen. When the viewer/listener carries out the operation to reproduce the music tune data so as to listen to the music tune, the viewer/listener client device 39 outputs music based on the music tune data from the speaker. Thus, the music tune of the artist selected by the viewer/listener is reproduced.

Then, at step S96, the server device 10 discriminates whether or not a predetermined period (for example, several months) has passed since the downloading by the viewer/listener was made chargeable. If it is determined that the predetermined period has passed, the processing goes to step S97. If it is determined that the predetermined period has not passed, step S96 is repeated. At step S97, the server device 10 calculates the dividend for the investor on the basis of the profit of the downloading fee, the activity of the artist and the sales of related products. At step S98, the server device 10 transmits the data of dividends and the like to the investment client device 20. At step S99, the investment client device 20 receives the data. The server device 10 is connected to the accounting center 35. Thus, the accounting center 35 updates the account data of the investor on the basis of the data of dividends to the investor from the server device 10.

Next, at step S100, the server device 10 seeks new investors again on the homepage. The price of the investment ticket is determined on the basis of the profit at and after step S91, and a higher price is set for the investment ticket for a music tune which gained a large profit. When the server device 10 seeks investors, the processing goes to step S101. When the server device 10 does not seek investors, the processing returns to step S91 and the chargeable downloading processing is continued.

At step S101, the server device 10 publicly presents, on the homepage, information that the acceptance of investors is resumed and the price of the investment ticket. The price of the investment ticket in this case is set to be higher than the initial price. The calculation of the price of the investment ticket may be carried out on the basis of the above-described Table 1 and Table 2. At step S102, the server device 10 transmits a notification of the start of the acceptance of investment to the investment client device 20. At step S103, the investment client device 20 receives the data. Thus, the investor can determined whether to invest further in the new music tune in which the investor had previously invested. Then, the processing returns to step S74 and the server device 10 carries out the free downloading of the music tune to the viewer/listener, and the processing to make the downloading chargeable when the number of users who downloaded the music tune data reaches or exceeds the threshold value. Moreover, the processing returns to step S91 and the server device 10 carries out the processing to make the downloading of the music tune to the viewer/listener chargeable.

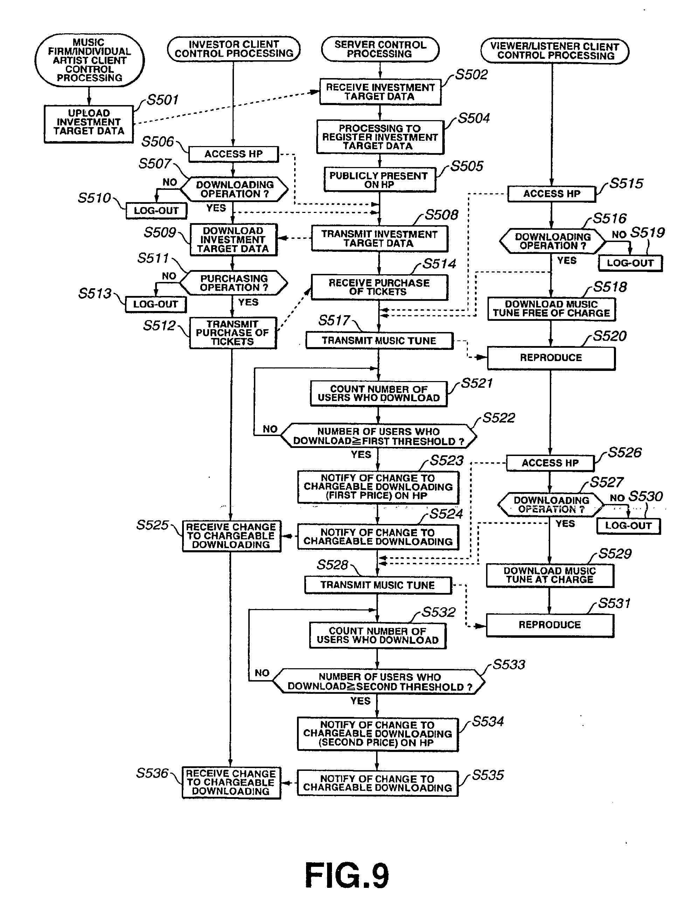

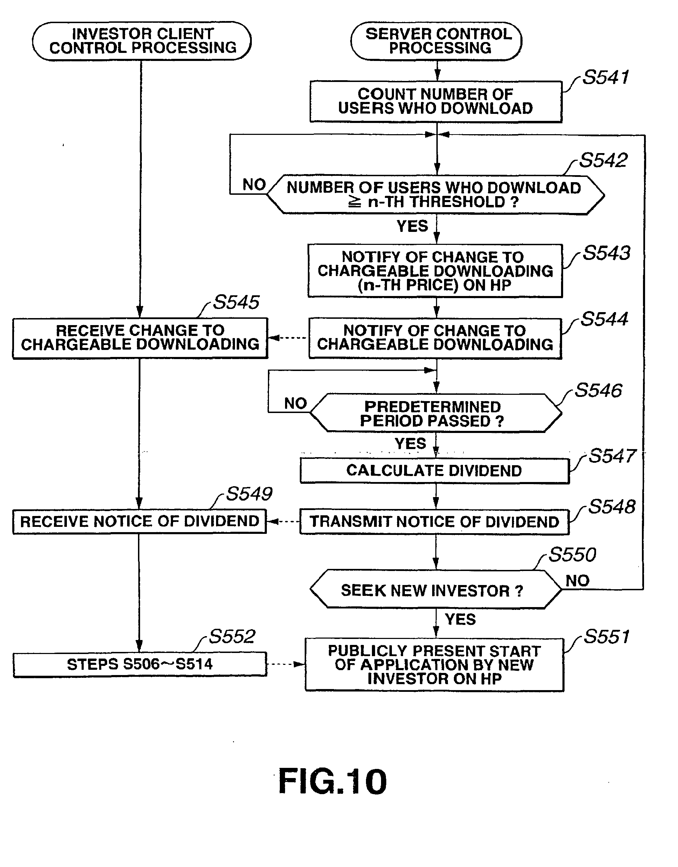

A modification of the investment system of Figs.7 and 8 will now be described with reference to Figs.9 and 10. This investment system is characterized in that the charged amount is increased in accordance with the increase in the number of downloading times of music tune data.

At step S501, when an artist who wants to be made public on a homepage set up in the server device 10 or a person in charge at a record company to which an artist belongs carries out the operation to upload data related to the artist such as music tune data, appearance, age, profile and e-mail address of the artist by using the keyboard and mouse of the music firm client device 31 or the artist client device 32, the music firm client device 31 or the artist client device 32 uploads the data related to the artist to the server device 10 via the Internet 1.

At step S502, the server device 10 receives the music tune data and the like uploaded thereto. At step S504, the server device 10 classifies the data sent from respective artists, for example, by country or by genre, and registers the classified data as investment target data on the homepage. At step S505, the investment target data is publicly presented on the homepage.

At step S506, when an investor carries out the operation to access the homepage by using the investment client device 20, the investment client device 20 accesses the homepage of the genre desired by the user of the server device 10 and displays the homepage on the display unit 27. Using the displayed homepage, the investor finds an artist who seems promising or the investor's favorite artist, and carries out the operation to download the music tune data. At step S507, the investment client device 20 discriminates whether or not the user carried out the downloading operation. If the result of discrimination is YES, the processing goes to step S509. If the result of discrimination is NO, the processing goes to step S510 and the investment client device 20 carries out another processing corresponding to the operation by the user such as log-out processing to disconnect from the Internet 1.

At step S508, in response to a request from the investment client device 20, the server device 10 transmits the music tune data, profile data and like of the artist desired by the user of the investment client device 20 and data of the currently set price of the investment ticket, to the investment client device 20. At step S509, the investment client device 20 receives these data, then temporarily records the data in the HDD22 and displays the data on the screen. When the investor carries out the operation to reproduce the music tune data so as to listen to the music tune, the decoder 23 of the investment client device 20 decodes the music tune data, the D/A converter 24 converts the decoded music tune data to analog signals, and the speaker 25 outputs music based on the music tune data. Thus, the music tune of the artist selected by the investor is reproduced.

The investor listens to the reproduced music tune on trial and determines whether the artist is promising or not and whether the music tune will be a hit or not. Then, the investor determines whether to invest in the artist or the music tune and how much to invest if the investor invests. At step S511, the investment client device 20 discriminates whether or not the investor carried out the investment operation. If it is determined that the investor carried out the investment operation, the processing goes to step S512. If it is determined that the investor did not carry out the investment operation, the processing goes to step S513 and the investment client device 20 carries out another processing corresponding to the operation by the user such as log-out processing.

At step S512, the investment client device 20 transmits the data operated by the investor such as the number of investment tickets to be purchased or the amount of investment and the identification (ID) of the investor to the server device 10. At step S514, the server device 10 receives these data. The server device 10 is connected to the accounting center 35 and collects the amount for the number of purchased tickets as the accounting center 35 updates the account management data of the investor.

At step S512, when the user carries out the operation to access the homepage, the viewer/listener client device 39 accesses the homepage of the genre desired by the user of the server device 10 and displays the homepage on the display unit. On the homepage, it is described that the viewer/listener can download music tune data free of charge. Using the homepage displayed on the display unit of the viewer/listener client device 39, the viewer/listener finds an artist who seems promising or the viewer/listener's favorite artist, and carries out the operation to download the music tune data. At step S516, the viewer/listener client device 39 discriminates whether or not the viewer/listener carried out the downloading operation. If the result of discrimination is YES, the processing goes to step S518. If the result of discrimination is NO, the viewer/listener client device 39 at step S519 carries out another processing corresponding to the operation by the user such as log-out processing to disconnect from the Internet 1.

At step S517, in response to a request from the viewer/listener client device 39, the server device 10 transmits the music tune data of the artist desired by the viewer/listener of the viewer/listener client device 39, to the viewer/listener client device 39. At step S518, the viewer/listener client device 39 receives these data free of charge, then temporarily records the data in the recording unit and displays the data on the screen. At step S519, when the viewer/listener carries out the operation to reproduce the music tune data so as to listen to the music tune, the viewer/listener client device 39 outputs music based on the music tune data from the speaker. Thus, the music tune of the artist selected by the viewer/listener is reproduced.

At step S520, the server device 10 counts the number of downloading times of the viewer/listener client device 39 after the public presentation of the music tune of the registered artist. At step S521, the server device 10 discriminates whether or not the number of downloading times reached or exceeded a threshold value (for example, 100 users).

Specifically, by identifying the ID such as the e-mail address of the viewer/listener client device 39, the server device 10 can prevent the counting of repeated downloading by the same viewer/listener and can count the correct number of users who downloaded the data. When the number of users who downloaded the data reaches or exceeds the threshold value, the processing goes to step S522. When the number of users who downloaded the data is less than the threshold value, the processing returns to step S520 and the viewer/listener client device 39 counts the number of users who downloaded the data.

At step S522, the server device 10 gives a notice on the homepage to the effect that the subsequent downloading of the music tune data of the artist is chargeable. At step S523, the server device 10 sends the investment client device 20 a notification to the effect that the downloading by the viewer/listener has become chargeable (for example, 100 yen per download). At step S524, the investment client device 20 receives this notification. Thus, the investor can learn that the downloading by the viewer/listener has become chargeable.

At step S525, when the viewer/listener carries out the operation to access the homepage, the viewer/listener client device 39 accesses the homepage of the genre desired by the viewer/listener of the server device 10 and displays the homepage on the display unit. Thus, the viewer/listener can learn that the downloading of music tune data is chargeable (for example, 100 yen per download). Using the homepage displayed on the display unit of the viewer/listener client device 39, the viewer/listener finds an artist who seems promising or the viewer/listener's favorite artist, and carries out the operation to download the music tune data. At step S526, the viewer/listener client device 39 discriminates whether or not the viewer/listener carried out the downloading operation. If the result of discrimination is YES, the processing goes to step S528. If the result of discrimination is NO, the viewer/listener client device 39 at step S529 carries out another processing corresponding to the operation by the user such as log-out processing to disconnect from the Internet 1.

At step S527, in response to a request from the viewer/listener client device 39, the server device 10 transmits the music tune data of the artist desired by the viewer/listener of the viewer/listener client device 39, to the viewer/listener client device 39. At step S528, the viewer/listener client device 39 receives these chargeable data, then temporarily records the data in the recording unit and displays the data on the screen. At step S530, when the viewer/listener carries out the operation to reproduce the music tune data so as to listen to the music tune, the viewer/listener client device 39 outputs music based on the music tune data from the speaker. Thus, the music tune of the artist selected by the viewer/listener is reproduced.

At step S531, the server device 10 counts the number of downloading times of the viewer/listener client device 39 after making the downloading of music tune data chargeable at step S522. At step S532, the server device 10 discriminates whether or not the number of downloading times reached or exceeded a threshold value (for example, 100 users). The threshold value at this step may be the total number of users (for example, 200) including the number users who downloaded the music tune data free of charge at step S505. By identifying the ID such as the e-mail address of the viewer/listener client device 39, the server device 10 can prevent the counting of repeated downloading by the same viewer/listener and can count the correct number of users who downloaded the data. When the number of users who downloaded the data reaches or exceeds the threshold value, the processing goes to step S533. When the number of users who downloaded the data is less than the threshold value, the processing returns to step S531 and the viewer/listener client device 39 counts the number of users who downloaded the data.

At step S533, the server device 10 sets the downloading fee of the music tune data at a higher price (for example, 200 yen per download) with respect to the subsequent downloading of the music tune data of the artist, and gives a notice to that effect on the homepage. At step S534, the server device 10 sends the investment client device 20 a notification to the effect that the downloading by the viewer/listener has become chargeable (for example, 200 yen per download). At step S534, the investment client device 20 receives this notification. Thus, the investor can learn that the downloading by the viewer/listener has become chargeable.

As is described above, the server device 10 discriminates whether the number of users who downloaded the music tune data exceeded the threshold value or not. When the number of users who downloaded the music tune data has exceeded the threshold value, the price of each downloading of the music tune data is set at a higher value. That is, since the music tune data which is downloaded by many users is popular, the server device 10 raises the price of each downloading in accordance with the increase in the number of users who downloaded the music tune data.

As shown in Fig.10, at step S541, the server device 10 counts the number of downloading times of the viewer/listener client device 39. At step S542, the server device 10 discriminates whether the number of downloading times reached or exceeded the n-th threshold value. At step S543, the server device 10 sets the downloading fee of the music tune data at the n-th price with respect to the subsequent downloading of the music tune data of the artist and gives a notice to that effect on the homepage. At step S544, the server device 10 notifies the investment client device 20 of the price of the downloading by the viewer/listener and the like. At step S545, the investment client device 20 receives the notification. Thus, the investor can learn the price of each downloading by the viewer/listener.

The viewer/listener client device 39 downloads the chargeable music tune data in accordance with the procedure of steps S515 to S519 or the procedure of steps S525 to S530 and reproduces the downloaded music tune data.

Then, at step S546, the server device 10 discriminates whether or not a predetermined period (for example, several months) has passed since the downloading by the viewer/listener was made chargeable. If it is determined that the predetermined period has passed, the processing goes to step S547. If it is determined that the predetermined period has not passed, step S546 is repeated. At step S547, the server device 10 calculates the dividend for the investor on the basis of the profit of the downloading fee, the activity of the artist and the sales of related products.

At step S548, the server device 10 transmits the data of dividends and the like to the investment client device 20. At step S549, the investment client device 20 receives the data. The server device 10 is connected to the accounting center 35. Thus, the accounting center 35 updates the account data of the investor on the basis of the data of dividend for the investor from the server device 10.

Next, at step S550, the server device 10 seeks new investors again on the homepage. The price of the investment ticket is determined on the basis of the profit at and after step S522, and a higher price is set for the investment ticket for a music tune which gained a large profit. When the server device 10 seeks investors, the processing goes to step S551. When the server device 10 does not seek investors, the processing returns to step S542 and the chargeable downloading processing is continued.

At step S551, the server device 10 publicly presents, on the homepage, information that the acceptance of investors is resumed and the price of the investment ticket. The price of the investment ticket in this case is set to be higher than the initial price. The calculation of the price of the investment ticket may be carried out on the basis of the above-described Table 1 and Table 2. When an investor already holding an investment ticket purchases an additional investment ticket or when a new investor newly purchases an investment ticket, the investor at step S552 purchases the investment ticket in accordance with the procedure of steps S506 to S514.

In the above-described investment system, since music tune data of an obscure amateur artist can be distributed free of charge for a predetermined period, it is possible to let many viewers/listeners listen to the music tune via the Internet 1 and thus make the new music tune better known. Moreover, since the downloading of the music tune data is made chargeable when the number of downloading times reaches or exceeds a threshold value, an artist who has become popular to a certain extent can gain a profit. On the side of the viewer/listener, since the popularity of chargeable music tunes is guaranteed to a certain extent though the chargeable downloading of the music tune data is undesirable, the viewer/listener can avoid regretting after downloading the music tune data because the music tune does not suit his/her taste. Furthermore, in this system, a foresighted investor can gain a dividend, that is, a profit, because the artist in which the investor invested becomes popular and the artist's music tune sells well. When the acceptance of investment is resumed with respect to an artist after the acceptance is once closed, greater investment can be expected and collected funds can be used for promotion and the like.

In this embodiment, an investment target is a new music tune before or after it is put on sale. However, an investment target may be an artist. The server device 10 may buy and sell investment tickets for a music tune similarly to the actual stock transaction. Moreover, in this system, the device for uploading investment target data to the server device 10 may be either the music firm client device 31 or the artist client device 32.

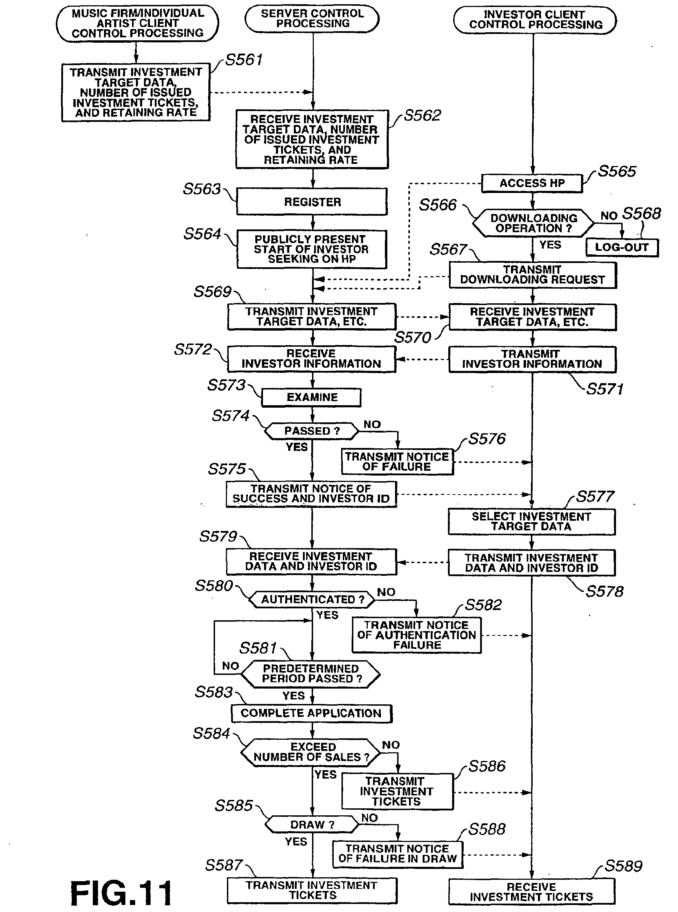

An example in which the music firm client device 31 or the artist client device 32 issues an investment ticket will now be described in detail with reference to Fig.11.

First, at step S561, when an artist or a person in charge at a record company carries out the operation to upload data related to the artist as an investment target and music tune data as an investment target to the server device 10 by using the keyboard and mouse of the music firm client device 31 or the artist client device 32, the music firm client device 31 or the artist client device 32 uploads these data to the server device 10 via the Internet 1. Moreover, at step S561, the artist or the person in charge at the record company transmits the total number of issued investment tickets and his/her retaining rate with respect to the total number of issued investment tickets to the server device 10 by using the music firm client device 31 or the artist client device 32.

At step S562, the server device 10 receives these data. Then, at step S563, the server device 10 carries out the processing to register the investment target data to the database constructed in the storage unit 11. At step S564, the server device 10 publicly presents the investment target data on the homepage. Specifically, together with the data related to the artist and the music tune data as the investment targets, the total number of investment tickets to be issued, the issuer's retaining rate of investment tickets, the number of investment tickets to be on sale, the face value of the investment ticket, the acceptance start date and the like are made public on the homepage.

At step S565, when an investor carries out the operation to access the homepage by using the investment client device 20, the investment client device 20 accesses the homepage of the genre desired by the user of the server device 10 and displays the homepage on the display unit 27. Using the displayed homepage, the investor finds an artist who seems promising or the investor's favorite artist, and carries out the operation to download the music tune data. At step S566, the investment client device 20 discriminates whether or not the user carried out the downloading operation. If the result of discrimination is YES, the processing goes to step S567. If the result of discrimination is NO, the processing goes to step S568 and the investment client device 20 carries out another processing corresponding to the operation by the user such as log-out processing to disconnect from the Internet 1.

At step S567, the investment client device 20 makes a downloading request to the server device 10, and on receiving the downloading request, the server device 10 at step S569 transmits necessary information for investment, that is, the data made public on the homepage, to the investment client device 20. At step S570, the investment client device 20 receives these data, then temporarily records the data in the HDD22 and displays the data on the screen.

Meanwhile, in selling investment tickets, it is necessary to examine the financial resources of the investor. Thus, the server device 10 publicly presents information on the homepage that user registration is necessary for purchasing investment tickets. At step S571, for example, the investor enters the identification number of his/her credit card and the like by using the keyboard and transmits these data to the server device 10 by the investment client device 20. At step S572, the server device 10 receives the credit card number and the like from the investment client device 20. At step S573, the server device 10 examines the financial resources of the investor. At step S574, when the data of the investor transmitted from the investment client device 20 is not less than a reference level, the processing goes to step S575 and the server device 10 transmits a notice of success and investor ID for using this system to the investment client device 20. On the other hand, when the data of the investor is less than the reference level, the processing goes to step S576 and the server device 10 transmits a notice of failure to the investment client device 20.

The investment client device 20 receives the notice of success and the investor ID from the server device 10. Thus, the investor can purchase investment tickets in this system. When the investor selects desired investment target data from the investment target data displayed on the display unit of the investment client device 20, the investment client device 20 at step S577 transmits investment data, that is, ID of the investment ticket to be purchased and the number of investment tickets, together with the investor ID, to the server device 10.

At step S579, the server device 10 carries out authentication to discriminate whether the incoming order is given by a registered investor or not, on the basis of the investor ID transmitted from the investment client device 20. When the investor is authenticated, the processing goes to step S581. When the investor is not authenticated, the processing goes to step S582 and the server device 10 transmits a notice of authentication failure to the investment client device 20.

At step S581, the server device 10 discriminates whether the selling period of the investment ticket ended or not. If the predetermined period has passed, the processing goes to step S583, the server device 10 ends the application for selling of the investment ticket and publicly presents information to that effect on the homepage. If the predetermined period has not passed, the server device 10 repeats step S581.

After the application period for selling the investment ticket ends, the server device 10 at step S584 discriminates whether or not the number of investment tickets for which the application is made exceeds the number of investment tickets scheduled to be on sale. If the number of investment tickets for which the application is made exceeds the number of investment tickets scheduled to be on sale, the processing goes to step S585. If the number of investment tickets for which the application is made does not exceed the number of investment tickets scheduled to be on sale, the processing goes to step S586 and the server device 10 transmits the investment tickets of the number requested in the application, to the investment client device 20 of the investor who applied for the purchase of the investment tickets.

When the number of investment tickets for which the application is made exceeds the number of investment tickets scheduled to be on sale, the server device 10 at step S585 holds the draw among the investors who want to buy the investment tickets. At step S587, the server device 10 transmits the investment tickets to the investment client device 20 of the investor who was successful in the draw. At step S588, the server device 10 transmits a notice of failure in the draw to the investment client device 20 of the investor who failed in the draw.

At step S589, the investment client device 20 receives the investment tickets. The server device 10 carries out accounting when transmitting the investment tickets to the investment client device 20.

With such a system, an artist can collect funds from investors while retaining investment tickets by himself/herself. Therefore, even an inexperienced artist can collect funds for his/her activity relatively easily.

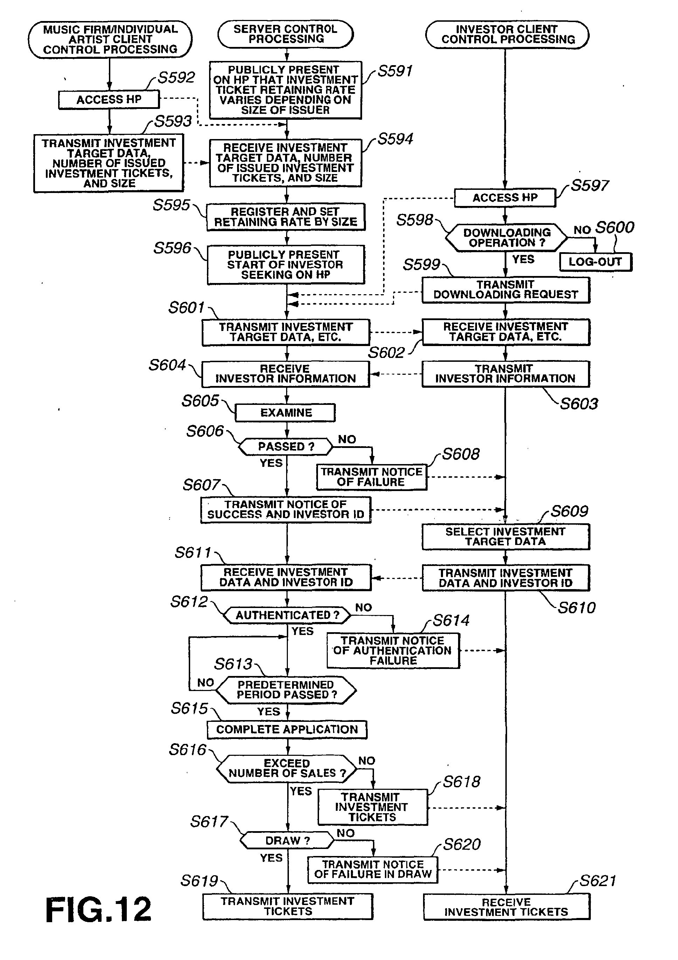

An example in which investment tickets are sold while the investment ticket retaining rate for the issuer is changed in accordance with the size of the issuer will now be described with reference to Fig.12. In the example of Fig.12, different investment ticket retaining rates are set in advance for the case where the issuer of investment tickets is an individual artist, the case where the issuer is a middle-sized record company, and the case where the issuer is a large-sized record company. In this example, the investment ticket retaining rate for a large-sized record company is set at 51% because a large-sized record company usually has large financial resources. The investment ticket retaining rate for a middle-sized record company is set at 40% because a medium-sized record company usually has less financial resources than a large-sized record company. The investment ticket retaining rate for an individual artist is set at 30% because an individual artist has the least financial resources of the three issuers. By having the investment ticket retaining rate of 51%, the large-sized record company has the authority to decide the course of activity of an artist and leaves the remaining investment tickets for investors, similarly to the case of ordinary stock certificates.

More specifically, first, at step S591, the server device 10 seeks, on the homepage, an investment ticket issuer which takes part in this system. On this homepage, it is made public that the investment ticket retaining rate for a large-sized record company is 51%, the investment ticket retaining rate for amedium-sized record company is 40% and the investment ticket retaining rate for an individual artist is 30%.

At step S592, when an individual artist or a person in charge at a record company carries out the operation to download these data by using the keyboard and mouse of the music firm client device 31 or the artist client device 32, the music firm client device 31 or the artist client device 32 downloads these data and displays the data on the display unit. When the artist or the person in charge at the record company uses this system, at step S593, the music firm client device 31 or the artist client device 32 transmits data related to the artist as investment target data and music tune data as an investment target to the server device 10. At the same time, the music firm client device 31 or the artist client device 32 transmits the total number of issued investment tickets, and the size of the issuer, that is, a large-sized record company, a medium-sized record company or an individual artist, to the server device 10.

At step S594, the server device 10 receives these data. Then, at step S595, the server device 10 carries out the processing to register the investment target data to the database constructed in the storage unit 11. The size of the investment ticket issuer is specified and the retaining rate of issued investment tickets is set at 51%, 40% or 30% on the basis of the specified size. Thus, the server device 10 calculates the number of investment tickets to be sold to general investors. Then, at step S596, the server device 10 publicly presents the investment target data on the homepage. Specifically, together with the data related to the artist and the music tune data as the investment targets, the total number of investment tickets to be issued, the issuer's retaining rate of investment tickets, the number of investment tickets to be on sale, the face value of the investment ticket, the acceptance start date and the like are made public on the homepage.

The server device 10 may transmit the retaining rate to the music firm client device 31 or the artist client device 32.

At step S597, when an investor carries out the operation to access the homepage by using the investment client device 20, the investment client device 20 accesses the homepage of the genre desired by the user of the server device 10 and displays the homepage on the display unit 27. Using the displayed homepage, the investor finds an artist who seems promising or the investor's favorite artist, and carries out the operation to download the music tune data. At step S598, the investment client device 20 discriminates whether or not the user carried out the downloading operation. If it is determined that the user carried out the downloading operation, the processing goes to step S599. If it is determined that the user did not carry out the downloading operation, the processing goes to step S600 and the investment client device 20 carries out another processing corresponding to the operation by the user such as log-out processing to disconnect from the Internet 1.

At step S599, the investment client device 20 makes a downloading request to the server device 10, and on receiving the downloading request, the server device 10 at step S601 transmits necessary information for investment, that is, the data made public on the homepage, to the investment client device 20. At step S602, the investment client device 20 receives these data, then temporarily records the data in the HDD22 and displays the data on the screen. Thus, the investor can determine whether the investment data is good or bad.

When the investor uses this system, for example, the investor at step S603 enters the identification number of his/her credit card and the like for settlement by using the keyboard and transmits these data to the server device 10 by the investment client device 20. At step S604, the server device 10 receives the credit card number and the like from the investment client device 20. At step S605, the server device 10 examines the financial resources of the investor. At step S606, when the data of the investor transmitted from the investment client device 20 is not less than a reference level, the processing goes to step S607 and the server device 10 transmits a notice of success and investor ID for using this system to the investment client device 20. On the other hand, when the data of the investor is less than the reference level, the processing goes to step S608 and the server device 10 transmits a notice of failure to the investment client device 20.

The investment client device 20 receives the notice of success and the investor ID from the server device 10. Thus, the investor can purchase investment tickets in this system. At step S609, the investor selects desired investment target data from the investment target data displayed on the display unit of the investment client device 20. Then, at step S610, the investment client device 20 transmits investment data, that is, ID of the investment ticket to be purchased and the number of investment tickets, together with the investor ID, to the server device 10.

At step S611, the server device 10 carries out authentication to discriminate whether'the incoming order is given by a registered investor or not, on the basis of the investor ID transmitted from the investment client device 20. When the investor is authenticated, the processing goes to step S613. When the investor is not authenticated, the processing goes to step S614 and the server device 10 transmits a notice of authentication failure to the investment client device 20.

At step S613, the server device 10 discriminates whether the selling period of the investment ticket ended or not. If the predetermined period has passed, the processing goes to step S615, the server device 10 ends the application for selling of the investment ticket and publicly presents information to that effect on the homepage. If the predetermined period has not passed, the server device 10 repeats step S613.

After the application period for selling the investment ticket ends, the server device 10 at step S616 discriminates whether or not the number of investment tickets for which the application is made exceeds the number of investment tickets scheduled to be on sale. If the number of investment tickets for which the application is made exceeds the number of investment tickets scheduled to be on sale, the processing goes to step S617. If the number of investment tickets for which the application is made does not exceed the number of investment tickets scheduled to be on sale, the processing goes to step S618 and the server device 10 transmits the investment tickets of the number requested in the application, to the investment client device 20 of the investor who applied for the purchase of the investment tickets.

When the number of investment tickets for which the application is made exceeds the number of investment tickets scheduled to be on sale, the server device 10 at step S617 holds the draw among the investors who want to buy the investment tickets. At step S619, the server device 10 transmits the investment tickets to the investment client device 20 of the investor who was successful in the draw. At step S620, the server device 10 transmits a notice of failure in the draw to the investment client device 20 of the investor who failed in the draw.

At step S621, the investment client device 20 receives the investment tickets. The server device 10 carries out accounting when transmitting the investment tickets to the investment client device 20.

With such a system, since an artist can collect funds from investors while retaining investment tickets by himself/herself, even an inexperienced artist can collect funds for his/her activity relatively easily. Moreover, since a large-sized record company has an investment ticket retaining rate of 51% or higher from the beginning, it can have the authority to decide the activity of artists and can freely develop its music business. As for an individual artist, the financial burden is small because of the retaining rate of 30%. The investment ticket retaining rates for the investment ticket issuers are not limited to the above-described examples. The retaining rates are not limited to the above-described values as long as the rate becomes smaller in the order of a large-sized record company, a medium-sized record company and an individual artist.

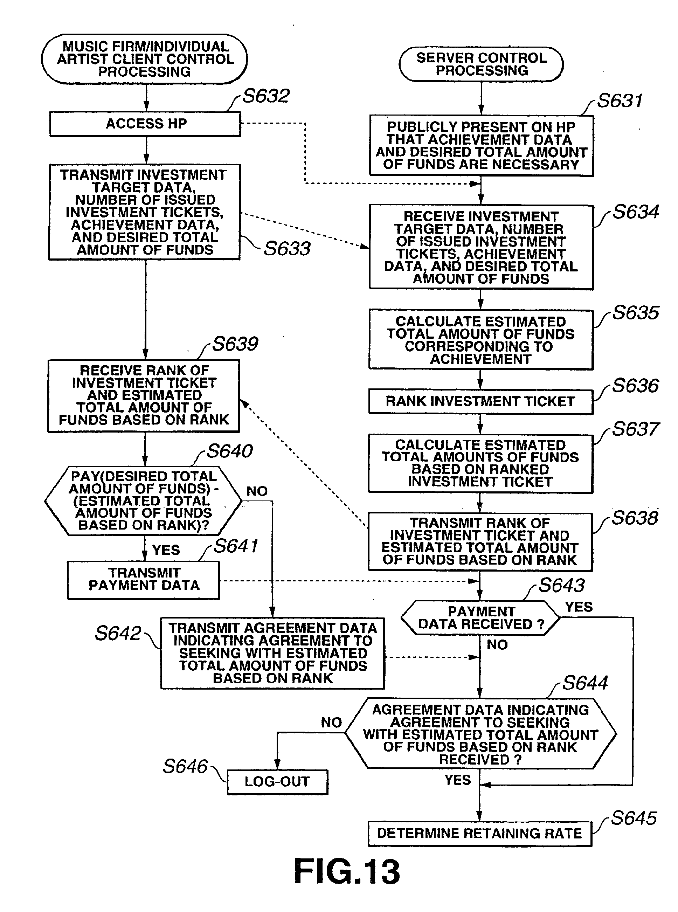

An example in which the investment retaining rate for an individual artist, a record company or a music firm to be an investment ticket issuer is set in accordance with the achievement of an investment target will now be described with reference to Figs.13 to 16.

First, at step S631, the server device 10 seeks an investment ticket issuer to take part in this system, on the homepage. On this homepage, it is made public that achievement data of an artist or a music tune to be an investment target is necessary for participation in this system and that the investment ticket retaining rate for the investment ticket issuer is set in accordance with the achievement data. On the homepage, it is also made public that an application can be made for the total amount of issued investment tickets desired by the investment ticket issuer, that is, the desired total amount of funds.

At step S632, when an artist or a person in charge at a record company carries out the operation to download these data by using the keyboard and mouse of the music firm client device 31 or the artist client device 32, the music firm client device 31 or the artist client device 32 downloads the homepage and displays the homepage on the display unit. When the artist or the person in charge at the record company uses this system, at step S633, the music firm client device 31 or the artist client device 32 transmits the data related to the artist as investment target data and the music tune data as an investment target, to the server device 10. Together with these data, the music firm client device 31 or the artist client device 32 transmits the total number of desired investment tickets to be issued, the desired total number of funds and the achievement data of the artist and the music tune as investment targets to the server device 10. The achievement data is the sales of contents such as the sales of recording media, for example, compact discs, the number of audience people in the case where a concert or the like is held, the sales of related products, the number of downloading times in the case where music distribution is carried out via the Internet 1, and the number of downloading times explained in the above-described embodiment.

At step S634, the server device 10 receives these data. At step S635, the server device 10 calculates the estimated total amount of funds to be calculated by the administrator of this system in accordance with the achievement data of the investment target for which the application was made.

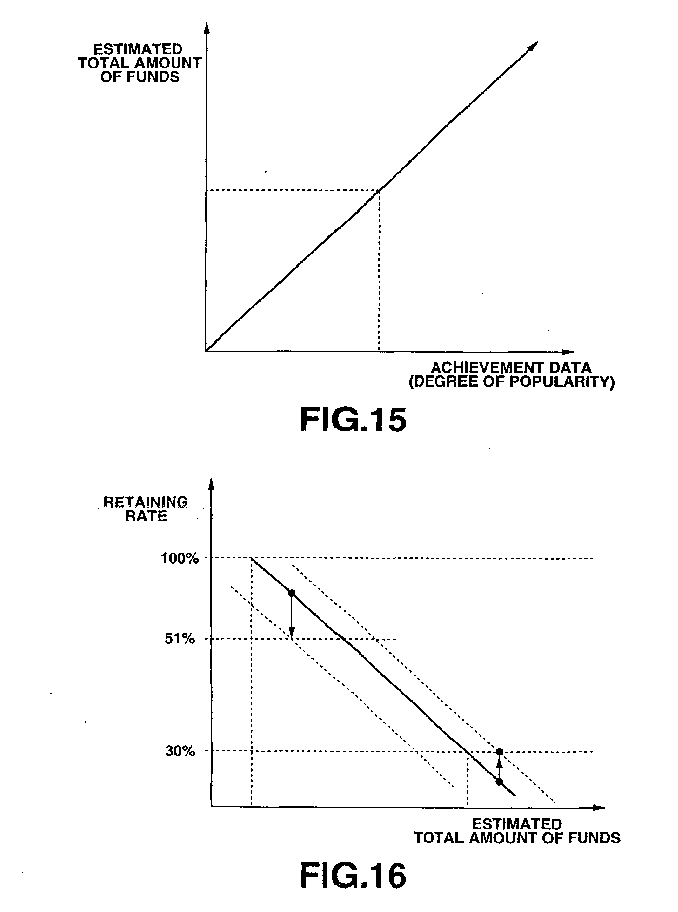

The estimated total amount of funds can be greater as the achievement is better, that is, as the achievement data is larger, as shown in Fig.15. Therefore, the server device 10 calculates the estimated total amount of funds from the achievement data by using the function shown in Fig.15. At step S636, the server device 10 divides the calculated estimated total amount of funds by the number of issued investment tickets transmitted from the music firm client device 31 or the artist client device 32 as expressed by the following equation, thus calculating the face value of the investment ticket.

Face value of investment ticket

= (estimated total amount of funds) /

(number of issued investment tickets)

Then, the server device 10 classifies the calculated investment tickets into three ranks in accordance with the face value, for example, rank A, rank B and rank C from the highest face value. The face values of the rank-corresponding tickets are predetermined for these ranks. The server device 10 ranks each investment ticket in the rank of the face value to which the face value of the investment ticket is closest. The investment tickets may be classified into subdivided ranks. At step S637, the server device 10 multiplies the face value of the ranked investment ticket by the number of issued investment tickets as expressed by the following equation, thus calculating the estimated total amount of funds corresponding to the rank of the investment ticket.

Estimated total amount of funds corresponding to rank of

investment ticket

= (face value of ranked investment ticket) $\times$

(number of issued investment tickets)

At step S638, the server device 10 transmits the rank of the investment ticket (face value based on the rank of the investment ticket) and the estimated total amount of funds corresponding to the rank of the investment ticket to the music firm client device 31 or the artist client device 32. Together with this information, the server device 10 transmits data for demanding a response as to whether the artist or the person in charge will pay the difference between the desired total amount of funds transmitted to the server device 10 at step S633 and the estimated total amount of funds based on the investment ticket of the rank calculated at step S673.

At step S639, the music firm client device 31 or the artist client device 32 receives these data transmitted from the server device 10. Then, at step S640, the music firm client device 31 or the artist client device 32 discriminates whether or not the individual artist or the person in charge at the record company entered a response as to whether the artist or the person in charge will pay the difference between the desired total amount of funds transmitted to the server device 10 at step S633 and the estimated total amount of funds based on the investment ticket of the rank calculated at step S673, by using the keyboard and the mouse. If the artist or the person in charge will pay the difference, the music firm client device 31 or the artist client device 32 at step S641 transmits payment data to the server device 10. If the artist or the person in charge will not pay the difference, the music firm client device 31 or the artist client device 32 at step S642 transmits to the server device 10 agreement data to the effect that the artist or the person in charge agrees to seeking investors with the estimated total amount of funds based on the rank of the investment ticket.

At step S643, the server device 10 discriminates whether or not the payment data is received from the music firm client device 31 or the artist client device 32. When the payment data is received, the processing goes to step S645. When the payment data is not received, the processing goes to step S644. At step S644, the server device 10 discriminates whether the agreement data is received or not. When the agreement data is received, the processing goes to step S645. When the agreement data is not received, the server device 10 logs out at step S646.

At step S645, the server device 10 determines the investment ticket retaining rate for the investment ticket issuer. Specifically, as indicated by a solid line in Fig.16, when the estimated total amount of funds is large, that is, when the achievement is high, it is expected that the number of applicants for purchase of investment tickets will increase and that the possibility of being able to sell the investment tickets will increase, too. Therefore, as the estimated total amount of funds increases, the retaining rate for the investment ticket issuer is reduced, thus enabling the music firm or the individual artist to collect funds from many investors. Thus, when the achievement is particularly good, that is, when the estimated total amount of funds is particularly large, the investment ticket retaining rate for the investment ticket issuer might be less than 30%. In such a case, as indicated by a dotted line in Fig.16, the server device 10 raises the investment ticket retaining rate for the investment ticket issuer to 30% and thus enables the artist to carry out the musical activity relatively freely. On the other hand, as shown in Fig.16, when the achievement is particularly low, that is, when the estimated total amount of funds is particularly small, the retaining rate is almost 100% and the investment tickets cannot be sold to general investors. In such a case, the server device 10 lowers the investment ticket retaining rate for the issuer to 51% so that the authority to decide the course of activity of the artist can be continuously maintained while the share of investment tickets for general investors can be secured.

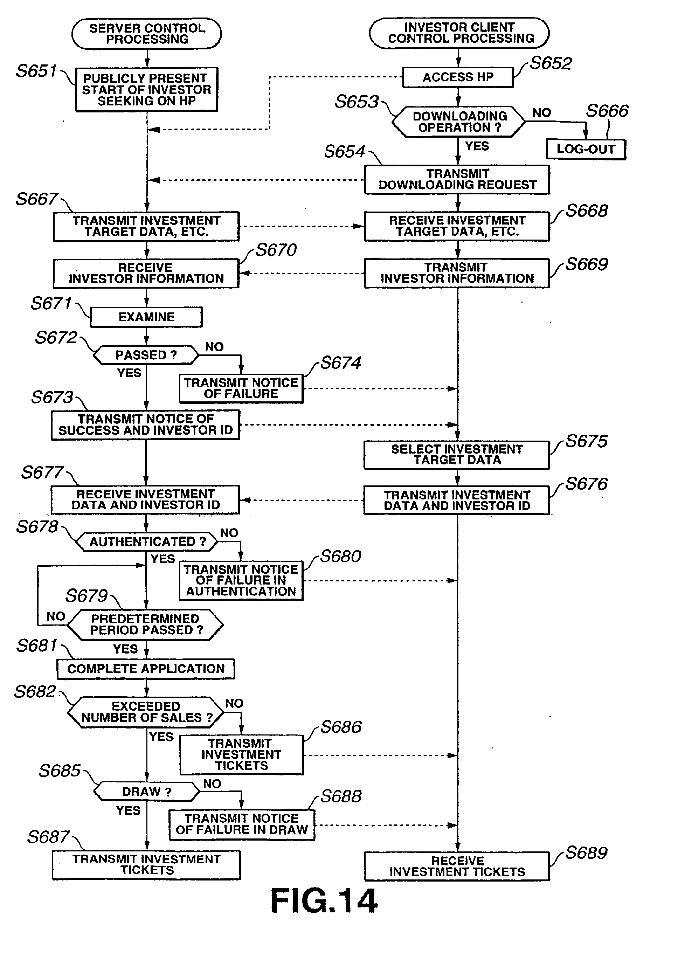

The server device 10 calculates the number of investment tickets retained by the investment ticket issuer on the basis of the retaining rate. As shown in Fig.14, at step S651, the server device 10 publicly presents on the homepage the remaining investment tickets as investment tickets to be sold to general investors. On this homepage, together with the data related to the artist and music tune as investment targets, the total number of investment tickets to be issued, the retaining rate for the investment ticket issuer, the number of investment tickets to be on sale, the face value of the investment ticket, the acceptance start date and the like are made public.

The server device 10 may transmit the retaining rate to the music firm client device 31 or the artist client device 32.

At step S652, when an investor carries out the operation to access the homepage by using the investment client device 20, the investment client device 20 accesses the homepage of the genre desired by the user of the server device 10 and displays the homepage on the display unit 27. Using the displayed homepage, the investor finds an artist who seems promising or the investor's favorite artist, and carries out the operation to download the music tune data. At step S653, the investment client device 20 discriminates whether or not the user carried out the downloading operation. If it is determined that the user carried out the downloading operation, the processing goes to step S654. If it is determined that the user did not carry out the downloading operation, the processing goes to step S666 and the investment client device 20 carries out another processing corresponding to the operation by the user such as log-out processing to disconnect from the Internet 1.

At step S654, the investment client device 20 makes a downloading request to the server device 10, and on receiving the downloading request, the server device 10 at step S667 transmits necessary information for investment, that is, the data made public on the homepage, to the investment client device 20. At step S668, the investment client device 20 receives these data, then temporarily records the data in the HDD22 and displays the data on the screen. Thus, the investor can determine whether the investment data is good or bad.

When the investor uses this system, for example, the investor at step S669 enters the identification number of his/her credit card and the like for settlement by using the keyboard and transmits these data to the server device 10 by the investment client device 20. At step S670, the server device 10 receives the credit card number and the like from the investment client device 20. At step S671, the server device 10 examines the financial resources of the investor. At step S672, when the data of the investor transmitted from the investment client device 20 is not less than a reference level, the processing goes to step S673 and the server device 10 transmits a notice of success and investor ID for using this system to the investment client device 20. On the other hand, when the data of the investor is less than the reference level, the processing goes to step S674 and the server device 10 transmits a notice of failure to the investment client device 20.

The investment client device 20 receives the notice of success and the investor ID from the server device 10. Thus, the investor can purchase investment tickets in this system. At step S675, the investor selects desired investment target data from the investment target data displayed on the display unit of the investment client device 20. Then, at step S676, the investment client device 20 transmits investment data, that is, ID of the investment ticket to be purchased and the number of investment tickets, together with the investor ID, to the server device 10.

At step S677, the server device 10 carries out authentication to discriminate whether the incoming order is given by a registered investor or not, on the basis of the investor ID transmitted from the investment client device 20. When the investor is authenticated, the processing goes to step S679. When the investor is not authenticated, the processing goes to step S680 and the server device 10 transmits a notice of authentication failure to the investment client device 20.

At step S679, the server device 10 discriminates whether the selling period of the investment ticket ended or not. If the predetermined period has passed, the processing goes to step S681, the server device 10 ends the application for selling of the investment ticket and publicly presents information to that effect on the homepage. If the predetermined period has not passed, the server device 10 repeats step S679.

After the application period for selling the investment ticket ends, the server device 10 at step S681 discriminates whether or not the number of investment tickets for which the application is made exceeds the number of investment tickets scheduled to be on sale. If the number of investment tickets for which the application is made exceeds the number of investment tickets scheduled to be on sale, the processing goes to step S685. If the number of investment tickets for which the application is made does not exceed the number of investment tickets scheduled to be on sale, the processing goes to step S686 and the server device 10 transmits the investment tickets of the number requested in the application, to the investment client device 20 of the investor who applied for the purchase of the investment tickets.

When the number of investment tickets for which the application is made exceeds the number of investment tickets scheduled to be on sale, the server device 10 at step S685 holds the draw among the investors who want to buy the investment tickets. At step S687, the server device 10 transmits the investment tickets to the investment client device 20 of the investor who was successful in the draw. At step S688, the server device 10 transmits a notice of failure in the draw to the investment client device 20 of the investor who failed in the draw.

At step S689, the investment client device 20 receives the investment tickets. The server device 10 carries out accounting when transmitting the investment tickets to the investment client device 20.

With such a system, since an artist can collect funds from investors while retaining investment tickets by himself/herself in accordance with the achievement, even an inexperienced artist can collect funds for his/her activity relatively easily.

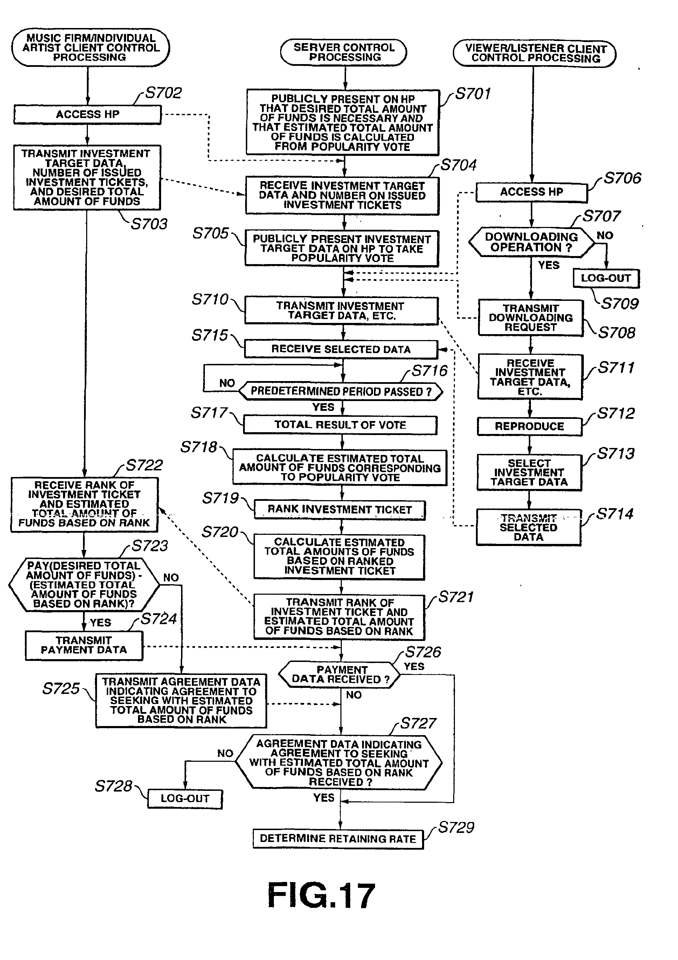

An example in which the investment ticket retaining rate for an individual artist, a record company or a music firm to be an investment ticket issuer is set in accordance with the result of popularity vote will now be described with reference to Fig.17.

First, at step S701, the server device 10 seeks an investment ticket issuer to take part in this system, on the homepage. On this homepage, it is made public that achievement data of an artist or a music tune to be an investment target is necessary for participation in this system and that the investment ticket retaining rate for the investment ticket issuer is set in accordance with the result of popularity vote. On the homepage, it is also made public that an application can be made for the total amount of issued investment tickets desired by the investment ticket issuer, that is, the desired total amount of funds.

At step S702, when an artist or a person in charge at a record company carries out the operation to download these data by using the keyboard and mouse of the music firm client device 31 or the artist client device 32, the music firm client device 31 or the artist client device 32 downloads the homepage and displays the homepage on the display unit. When the artist or the person in charge at the record company uses this system, at step S703, the music firm client device 31 or the artist client device 32 transmits the data related to the artist as investment target data and the music tune data as an investment target, to the server device 10. Together with these data, the music firm client device 31 or the artist client device 32 transmits the total number of desired investment tickets to be issued and the desired total number of funds to the server device 10.

At step S704, the server device 10 receives these data. At step S705, the server device 10 publicly presents on the homepage a plurality of investment target data for which applications were made, and takes the popularity vote for the artists or music tune data for which the applications were made, in order to determine the investment ticket retaining rate.

At step S706, when a viewer/listener carries out the operation to access the homepage, the viewer/listener client device 39 accesses the homepage of the genre desired by the user of the server device 10 and displays the homepage on the display unit. On the homepage, it is made public that the popularity vote is taken and that the viewer/ listener can download the investment target data free of charge or at a charge.

Using the homepage displayed on the display unit of the viewer/listener client device 39, the viewer/listener finds an artist who seems promising or the viewer/listener's favorite artist, and carries out the operation to download the music tune data. At step S707, the viewer/listener client device 39 discriminates whether or not the viewer/listener carried out the downloading operation. If it is determined that the viewer/listener carried out the downloading operation, the processing goes to step S708. If not, the viewer/listener client device 39 at step S709 carries out another processing corresponding to the operation by the user such as log-out processing to disconnect from the Internet 1.

At step S708, the viewer/listener client device 39 makes a downloading request to the server device 10. On receiving the downloading request from the viewer/listener client device 39, the server device 10 at step S710 transmits the investment target data and the like to the viewer/listener client device 39. At step S711, the viewer/listener client device 39 receives these data free of charge or at a charge, then temporarily stores the data in the storage unit and displays the data on the screen. At step S712, when the viewer/listener carries out the operation to reproduce the music tune data to listen to the music tune, the viewer/listener client device 39 outputs music based on the music tune data from the speaker. Thus, the music tune of the artist selected by the viewer/listener is reproduced and the viewer/ listener can determine the investment target data such as the artist to vote for.

When finding the viewer/listener's favorite music tune data from the downloaded investment target data and voting for the artist, the viewer/listener selects one or a plurality of investment target data from the investment target data displayed on the display unit and carries out the operation to transmit the selected data, by using the keyboard and the mouse constituting the operating unit. That is, at step S713, the viewer/listener client device 39 selects the investment target data in accordance with the operation by the viewer/listener. At step S714, the viewer/listener client device 39 transmits the selected data of the selected investment target data to the server device 10.

At step S715, the server device 10 receives the selected data from the viewer/listener client device 39. Then, at step S716, the server device 10 discriminates whether the period for taking the popularity vote has passed or not. If the predetermined period has passed, the processing goes to step S717. If the predetermined period has not passed, the server device 10 repeats step S716.

At step S717, the server device 10 totals the result of the popularity vote. At step S718, the server device 10 calculates the estimated total amount of funds to be calculated by the administrator of this system in accordance with the result of the popularity vote.

The estimated total amount of funds can be greater as the artist is more popular, that is, as the degree of popularity is higher, as shown in Fig.15. Therefore, the server device 10 calculates the estimated total amount of funds from the degree of popularity by using the function shown in Fig.15. At step S719, the server device 10 divides the calculated estimated total amount of funds by the number of issued investment tickets transmitted from the music firm client device 31 or the artist client device 32 as expressed by the following equation, thus calculating the face value of the investment ticket.

$$\text{Face value of investment ticket}$$

$$= \text{(estimated total amount of funds)} /$$

$$\text{(number of issued investment tickets)}$$

Then, the server device 10 classifies the calculated investment tickets into three ranks in accordance with the face value, for example, rank A, rank B and rank C. At step S720, the server device 10 multiplies the face value of the ranked investment ticket by the number of issued investment tickets as expressed by the following equation, thus calculating the estimated total amount of funds corresponding to the rank of the investment ticket.

$$\text{Estimated total amount of funds corresponding to rank of}$$

$$\text{investment ticket}$$

$$= \text{(face value of ranked investment ticket)} \times$$

$$\text{(number of issued investment tickets)}$$

At step S721, the server device 10 transmits the rank of the investment ticket (face value based on the rank of the investment ticket) and the estimated total amount of funds corresponding to the rank of the investment ticket to the music firm client device 31 or the artist client device 32. Together with this information, the server device 10 transmits data for demanding a response as to whether the artist or the person in charge will pay the difference between the desired total amount of funds transmitted to the server device 10 at step S703 and the estimated total amount of funds based on the investment ticket of the rank calculated at step S720.

At step S722, the music firm client device 31 or the artist client device 32 receives these data transmitted from the server device 10. Then, at step S723, the music firm client device 31 or the artist client device 32 discriminates whether or not the individual artist or the person in charge at the record company entered a response as to whether the artist or the person in charge will pay the difference between the desired total amount of funds transmitted to the server device 10 at step S703 and the estimated total amount of funds based on the investment ticket of the rank calculated at step S720, by using the keyboard and the mouse. If the artist or the person in charge will pay the difference, the music firm client device 31 or the artist client device 32 at step S724 transmits payment data to the server device 10. If the artist or the person in charge will not pay the difference, the music firm client device 31 or the artist client device 32 at step S725 transmits to the server device 10 agreement data to the effect that the artist or the person in charge agrees to seeking investors with the estimated total amount of funds based on the rank of the investment ticket.

At step S726, the server device 10 discriminates whether or not the payment data is received from the music firm client device 31 or the artist client device 32. When the payment data is received, the processing goes to step S729. When the payment data is not received, the processing goes to step S727. At step S727, the server device 10 discriminates whether the agreement data is received or not. When the agreement data is received, the processing goes to step S729. When the agreement data is not received, the server device 10 logs out at step S728.

At step S729, the server device 10 determines the investment ticket retaining rate for the investment ticket issuer within a range of 30% to 51% as described above with reference to Fig.16. Thus, the server device 10 determines the retaining rate for the investment ticket issuer. The subsequent issue of investment tickets to investors is carried out in accordance with the procedure shown in Fig.14. With such a system, since an artist can collect funds from investors while retaining investment tickets by himself/herself in accordance with the degree of popularity, even an inexperienced artist can collect funds for his/her activity relatively easily.

As is described above, investment tickets are issued to general investors. Not less than 30% and less than 100% of the issued investment tickets are retained by the music firm, the record company or the individual artist as the issuer, and the remaining investment tickets are for general investors.

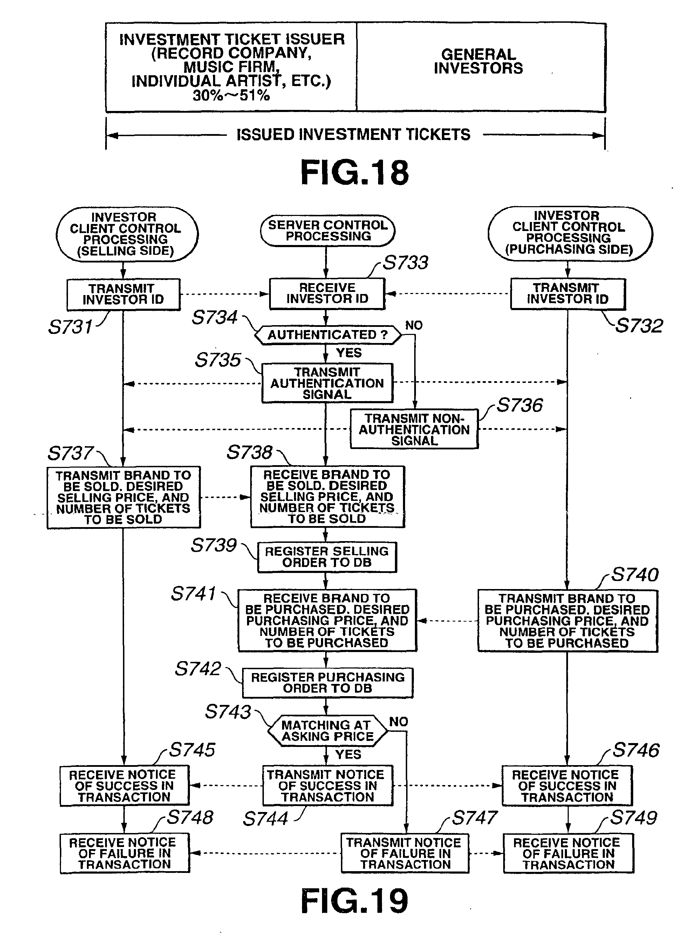

The selling and buying of investment tickets carried out between investors similarly to ordinary stock transactions will now be described with reference to Fig.19. In the example described below, investment tickets are sold and bought at asking prices.

First, at step S731, the investment client device 20 on the investment ticket selling side transmits the investor ID obtained by the investor in advance for using this system to the server device 10. At step S732, the investment client device 20 on the investment ticket purchasing side, too, transmits the investor ID obtained by the investor in advance for using this system to the server device 10. At step S733, the server device 10 receives the investor IDs from the investment client device 20 on the selling side and the investment client device 20 on the purchasing side. Then, at step S734, the server device 10 carries out authentication with IDs that are registered in advance. When the investor IDs are authenticated, the server device 10 at step S735 transmits an authentication signal to the investment client device 20 on the selling side and the investment client device 20 on the purchasing side. When the investor IDs are not authenticated, the server device 10 at step S736 transmits a non-authentication signal to the investment client device 20 on the selling side and the investment client device 20 on the purchasing side.

At step S737, the investment client device 20 on the investment ticket selling side transmits the brand of the investment ticket to be sold, the desired selling price (asking price) of the investment ticket, the number of investment tickets to be sold and the like to the server device 10. At step S738, the server device 10 receives the data from the investment client device 20 on the selling side. At step S739, the server device 10 registers a selling order to the database provided in the storage unit.

At step S740, the investment client device 20 on the investment ticket purchasing side transmits the brand of the investment ticket to be purchased, the desired purchasing price (asking price) of the investment ticket, the number of investment tickets to be purchased and the like to the server device 10. At step S741, the server device 10 receives the data from the investment client device 20 on the investment ticket purchasing side. At step S742, the server device 10 registers a purchasing order to the database provided in the storage unit.

At step S743, the server device 10 searches to determine whether or not there is a purchasing order of a price that is matched with the asking price of the investment ticket designated by the selling order from the investment client device 20 on the selling side, and when a purchasing order matched with the asking price of the brand in the selling order is found, the server device 10 causes a transaction to be made. Then, the processing goes to step S744. If there are more purchasing orders than selling orders, the purchasing side may be determined on a first-come first-served basis or by the draw. When there is no purchasing order matched with the asking price of the brand in the selling order, the server device 10 determines failure in transaction and the processing goes to step S747.

When a transaction is made, the server device 10 at step S744 transmits a notice of success in transaction to the investment client devices 20 on the selling side and the purchasing side. At step S745, the investment client device 20 on the selling side receives the notice of success in transaction and thus can learn that its investment ticket was sold. At step S746, the investment client device 20 on the purchasing side receives the notice of success in transaction and thus can learn that it purchased the desired investment ticket.

When no transaction is made, the server device 10 at step S747 transmits a notice of failure in transaction to the investment client devices 20 on the selling side and the purchasing side. At step S748, the investment client device 20 on the selling side receives the notice of failure in transaction and thus can learn that its investment ticket was not sold. At step S749, the investment client device 20 on the purchasing side receives the notice of failure in transaction and thus can learn that it could not purchase the desired investment ticket.

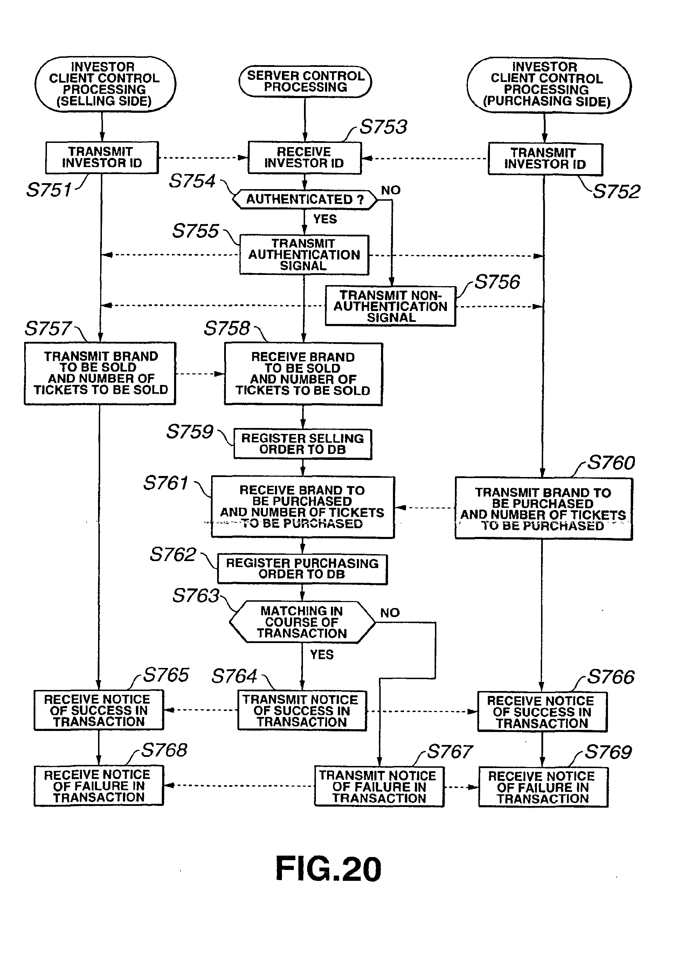

An example in which selling and buying of investment tickets are carried out at a floating price will now be described with reference to Fig.20. First, at step S751, the investment client device 20 on the investment ticket selling side transmits the investor ID obtained by the investor in advance for using this system to the server device 10. At step S752, the investment client device 20 on the investment ticket purchasing side, too, transmits the investor ID obtained by the investor in advance for using this system to the server device 10. At step S753, the server device 10 receives the investor IDs from the investment client device 20 on the selling side and the investment client device 20 on the purchasing side. Then, at step S754, the server device 10 carries out authentication with IDs that are registered in advance. When the investor IDs are authenticated, the server device 10 at step S755 transmits an authentication signal to the investment client device 20 on the selling side and the investment client device 20 on the purchasing side. When the investor IDs are not authenticated, the server device 10 at step S756 transmits a non-authentication signal to the investment client device 20 on the selling side and the investment client device 20 on the purchasing side.

At step S757, the investment client device 20 on the investment ticket selling side transmits the brand of the investment ticket to be sold, the number of investment tickets to be sold, and indication data indicating that it sells the investment tickets at a floating price, to the server device 10. At step S758, the server device 10 receives the data from the investment client device 20 on the selling side. At step S759, the server device 10 registers a selling order with a floating price to the database provided in the storage unit.

At step S760, the investment client device 20 on the investment ticket purchasing side transmits the brand of the investment ticket to be purchased, the number of investment tickets to be purchased, and indication data indicating that it purchases investment tickets at a floating price, to the server device 10. At step S761, the server device 10 receives the data from the investment client device 20 on the investment ticket purchasing side. At step S762, the server device 10 registers a purchasing order with a floating price to the database provided in the storage unit.

At step S763, the server device 10 searches for the brands for which the selling order and the purchasing order were given, and carries out selling and buying at a floating price in the market. When a transaction is made, the server device 10 goes to step S764. When no transaction is made, the server device 10 goes to step S767.

When a transaction is made, the server device 10 at step S764 transmits a notice of success in transaction to the investment client devices 20 on the selling side and the purchasing side. At step S765, the investment client device 20 on the selling side receives the notice of success in transaction and thus can learn that its investment tickets were sold. At step S766, the investment client device 20 on the purchasing side receives the notice of success in transaction and thus can learn that it purchased the desired investment tickets.

When no transaction is made, the server device 10 at step S767 transmits a notice of failure in transaction to the investment client devices 20 on the selling side and the purchasing side. At step S768, the investment client device 20 on the selling side receives the notice of failure in transaction and thus can learn that its investment tickets were not sold. At step S769, the investment client device 20 on the purchasing side receives the notice of failure in transaction and thus can learn that it could not purchase the desired investment tickets.

In this system, the selling and buying of investment tickets at an asking price as described with reference to Fig.19 and the selling and buying of investment tickets at a floating price as described with reference to Fig.20 may be combined. Specifically, the server device 10 may cause a transaction to be made between a selling side who wants to sell investment tickets at a floating price and a purchasing side who wants to purchase investment tickets at an asking price. Alternatively, the server device 10 may cause a transaction to be made between a selling side who wants to sell investment tickets at an asking price and a purchasing side who wants to purchase investment tickets at a floating price.

The selling and buying of investment tickets may also be carried out, providing some margins for the desired selling price on the selling side and the desired purchasing price on the purchasing side. First, at step S771, the investment client device 20 on the investment ticket selling side transmits the investor ID obtained by the investor in advance for using this system to the server device 10. At step S772, the investment client device 20 on the investment ticket purchasing side, too, transmits the investor ID obtained by the investor in advance for using this system to the server device 10. At step S773, the server device 10 receives the investor IDs from the investment client device 20 on the selling side and the investment client device 20 on the purchasing side. Then, at step S774, the server device 10 carries out authentication with IDs that are registered in advance. When the investor IDs are authenticated, the server device 10 at step S775 transmits an authentication signal to the investment client device 20 on the selling side and the investment client device 20 on the purchasing side. When the investor IDs are not authenticated, the server device 10 at step S776 transmits a non-authentication signal to the investment client device 20 on the selling side and the investment client device 20 on the purchasing side.

At step S777, the investment client device 20 on the investment ticket selling side transmits the brand of the investment ticket to be sold, the number of investment tickets to be sold, and the margin of the desired selling price of the investment ticket, that is, the desired selling price range, to the server device 10. At step S778, the server device 10 receives the data from the investment client device 20 on the selling side. At step S779, the server device 10 registers a selling order to the database provided in the storage unit.

At step S780, the investment client device 20 on the investment ticket purchasing side transmits the brand of the investment ticket to be purchased, the number of investment tickets to be purchased, and the margin of the desired purchasing price of the investment ticket, that is, the desired purchasing price range, to the server device 10. At step S781, the server device 10 receives the data from the investment client device 20 on the investment ticket purchasing side. At step S782, the server device 10 registers a purchasing order to the database provided in the storage unit.

At step S783, the server device 10 carries out matching in the order of lower prices in the selling order and in the order of higher prices in the purchasing order. The server device 10 carries out this matching at every lapse of a predetermined period, for example, every other day, every other hour, or every 15 minutes. When matching is made within the predetermined period, the server device 10 determines that a transaction is made and the processing goes to step S784. When matching is not made, the server device 10 determines that no transaction is made and the processing goes to step S787.

When a transaction is made, the server device 10 at step S784 transmits a notice of success in transaction to the investment client devices 20 on the selling side and the purchasing side. At step S785, the investment client device 20 on the selling side receives the notice of success in transaction and thus can learn that its investment tickets were sold. At step S786, the investment client device 20 on the purchasing side receives the notice of success in transaction and thus can learn that it purchased the desired investment tickets.

When no transaction is made, the server device 10 at step S787 transmits a notice of failure in transaction to the investment client devices 20 on the selling side and the purchasing side. At step S788, the investment client device 20 on the selling side receives the notice of failure in transaction and thus can learn that its investment tickets were not sold. At step S789, the investment client device 20 on the purchasing side receives the notice of failure in transaction and thus can learn that it could not purchase the desired investment tickets.

The server device 10 may carry out selling and buying of investment tickets also when one of the selling side and the purchasing side has a margin of the desired price while the other wants to make a transaction at an asking price or at a floating price.

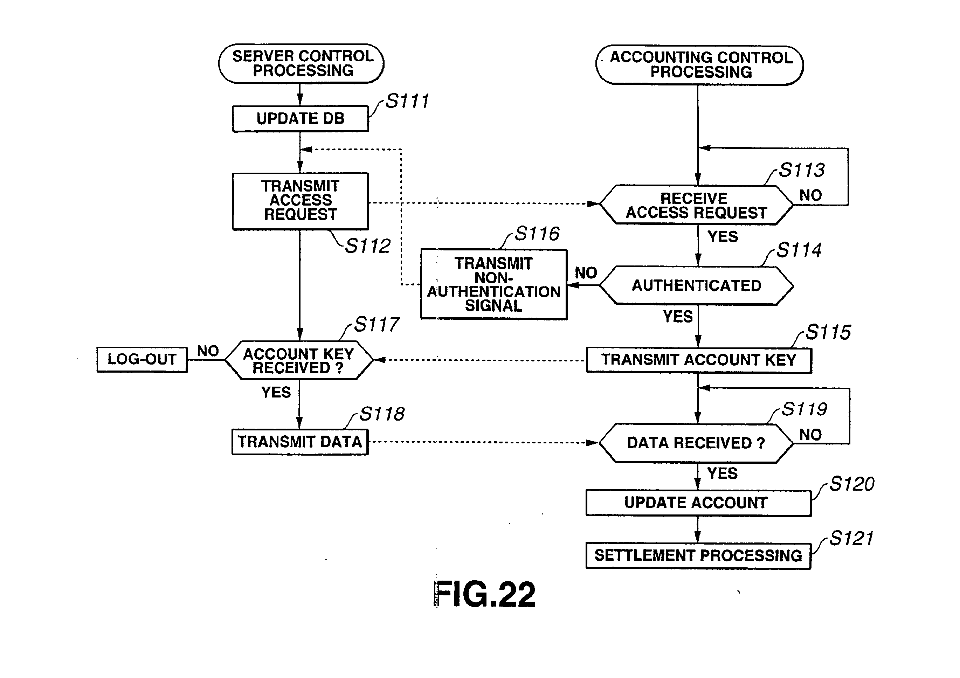

An accounting method in the above-described embodiment will now be described with reference to Fig.22. First, at step S111, the server device 10 updates an investment amount database on the basis of the result of calculation of dividends to the investor, the artist and the music firm, the result of calculation of the profit for the manager of the server device 10 and the profit as a result of the selling and buying of investment tickets by the investors. Specifically, the server device 10 updates server device profit data, user dividend data, artist dividend data, and investment ticket selling/buying data.

At step S112, the server device 10 transmits the user ID and an access request for accessing the user and artist accounts, to the accounting center 35 via the leased line 37.

At step S113, the accounting center 35, which is in the standby state for receiving an access request, receives the server ID and the access request from the server device 10. At step S114, the accounting center 35 carries out authentication processing with the server ID. In this case, the user and the artist designate bank accounts in advance for the service of this system, and by this bank account designation processing, the server ID of this system, and a user account key and an artist account key are associated with each other and stored in the accounting center 35. Therefore, the accounting center 35 carries out authentication by collating the server ID received from the server device 10 with the server ID stored in the storage unit 4. When authentication is made, the accounting center 35 goes to step S115. When authentication is not made, the processing goes to step S116 and the accounting center 35 transmits a non-authentication signal to the server device 10. On receiving the non-authentication signal, the server device 10 ends the processing.

At step S115, the accounting center 35 transmits the user account key and the artist account key to the server device 10. At step S117, the server device 10 receives the user account key and the artist account key from the accounting center 35. At step S118, the server device 10 transmits the user account key, the artist account key, a server account key stored in advance in the server device, the total selling/buying data, user and artist dividends data, server profit data, and data of selling and buying of investment tickets carried out by investors, to the accounting center 35. On completion of the transmission, the server device 10 ends the processing. If the server device 10 does not receive these data at step S117, the server device 10 carries out another processing corresponding to the operation by the user such as log-out processing to disconnect from the Internet 1.

At step S119, the accounting center 35, which is in the standby state for receiving the investor and artist account keys, receives the data from the server device 10. At step S120, the accounting center 35 carries out the processing to update the database stored in the storage unit 4. Specifically, the accounting center 35 accesses user account management data for the investor or the viewer/listener by using the user account key and updates the date, the expenditure/receipt record and the remainder on the basis of the total of selling and buying by each user. The accounting center 35 also updates the date, the expenditure/receipt record and the remainder on the basis of the dividend data for the user. Moreover, the accounting center 35 accesses artist account management data by using the artist account key and updates the date, the expenditure/receipt record and the remainder on the basis of the dividend data for each artist. Furthermore, the accounting center 35 accesses server account management data by using the server account key and updates the date, the expenditure/receipt record and the remainder on the basis of the server profit.

On the basis of the update of the account management data, the accounting center 35 at step S121 automatically carries out settlement processing with respect to the bank account of the bank ID by transmitting and receiving data to and from the bank center 36. That is, the update of the account management data is directly reflected on the update of the bank account data. On completion of the update of the account management data, the accounting center 35 ends the processing.

For example, in the above-described embodiment in which an artist is an investment target and in the above-described embodiment in which a music tune is an investment target, an investment ticket may contain information about the investor such as the name of the investor, the date of selling/buying, the date of birth, address, telephone number, e-mail address, occupation and the like of the investor who purchased, as shown in the following Table 3, every time the investment ticket is sold and bought, in addition to the name of the investment target of the investment ticket and the price thereof. This is because the record on the investment ticket may influence the price of the investment ticket when a celebrity such as a famous artist or a famous producer owns the investment ticket. The investment ticket is managed by the server device 10.

## Table 3

<Ticket (2)>

○/△ (date)   Investor Mr./Ms.b purchases

    Mr./Ms.b: date of birth   ○/×/19○○

            address

            telephone number

            e-mail

            occupation

○/× (date)   Investor Mr./Ms.b sells

○/◉ (date)   Investor Mr./Ms.c

    Mr./Ms.c: date of birth   ○/××/19○○

            address

            telephone number

            e-mail

            occupation

For example, in the case where an investor uses the investment client device 20 to browse the homepage set up on the server device 10 and select an investment ticket to be purchased, when the investor selects one investment ticket, the server device 10 transmits the selling/buying record of the investment ticket, that is, data of a list of owners who owned the investment ticket in the past, to the investment client device 20. Having received the data, the investment client device 20 displays the list of owners who owned the investment ticket in the past, on the display unit. The investor views the list of owners who owned the investment ticket in the past, thus judging value of the investment ticket and determining whether to purchase it or not.

In the case where the information contained in the investment ticket shown in Table 3 is constituted by image data, a watermark may be provided. In this case, by providing a decoder for a watermark in the investment client device 20 of the investor registered to the server device 10, it is possible to enable only the qualified investor registered to the server device 10 to view the contents of the investment ticket. The investor views the selling/buying record of the investment ticket, thus judging the value of the investment ticket.

It is also possible to enable a person in charge at a music firm or an individual artist to view the contents of the investment ticket, by providing a decoder for a watermark in the music firm client device 31 or the artist client device 32 as the investment ticket issuer. Thus, the investment ticket issuer can learn what types of persons sell and buy the issued investment ticket and therefore can learn the characteristics of people who are interested in the artist or music tune as the investment target, for example, the age, gender, occupation and region of such people.

Although an artist, that is, his/her talent or music tune is used as an investment target in the above-described embodiment, the investment target may also be the contents of a cartoon, a painting or a novel.

Another investment system will now be described in which not only a place for presenting the contents (work) is provided for an artist who produces the contents of music, a cartoon, a painting, a novel, a movie or the like, but also a contents purchaser is allowed to select ordinary accounting or accounting for the purpose of investment to enable individual investment, when selling the contents.

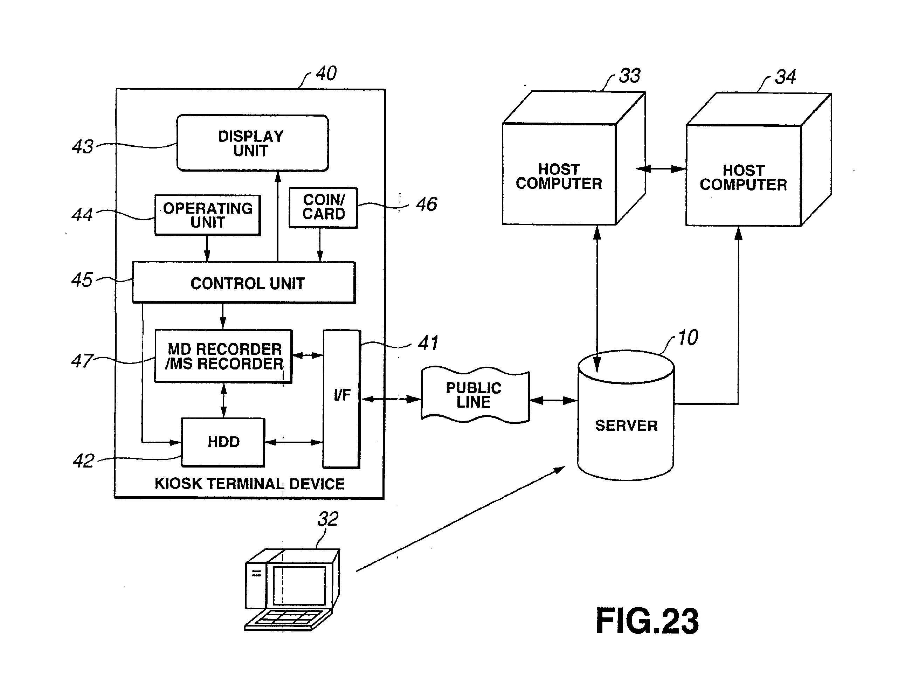

This investment system has a server device 10 for storing the contents produced by a contents producer, an artist client device 32 for uploading the contents produced voluntarily by the contents producer to the server device 10, a host computer 33 for managing the copyrights, a host computer 34 for managing investment funds, and a kiosk terminal device 40 which sells the contents and can selectively carry out payment for the contents and payment for the investment, as shown in Fig.23. Since the server device 10 and the artist client device 32 have the same structures as the server device 10 and the artist client device 32 shown in Fig.1, respectively, the corresponding portions are denoted by the same numerals and their structures will not be described further in detail.

When the contents producer carries out the operation to record the contents of music, a cartoon, a painting, a novel, a movie or a photograph, voluntarily produced by the contents producer, onto a recording medium such as an optical disc, a magneto-optical disc or a non-volatile memory and to upload the contents by the artist client device 32 made up of a personal computer at the contents producer's home, the artist client device 32 uploads the contents to the server device 10. In this case, the artist client device 32 uploads not only the contents but also information about the height, weight, photograph and personal history of the contents producer. Such information is used as reference information for examination at an agency. The uploading may also be carried out by using, for example, a set top box at home.

As another embodiment, the contents producer may record the voluntarily produced contents onto a recording medium such as an optical disc, a magneto-optical disc or a non-volatile memory and upload the contents to a large-capacity memory in the kiosk terminal device 40 installed in a public place such as a chain store of a nationwide chain connected via a network, or a station. The contents uploaded to the kiosk terminal device 40 are further uploaded to the server device 10, for example, via a public line such as an ISDN line, a telephone line, a satellite link or radio waves.

Specifically, the kiosk terminal device 40 has an interface circuit (hereinafter referred to as I/F circuit) 41 connected to the public line, a hard disk device 42 as a large-capacity memory, a display unit 43 for displaying images, an operating unit 44 for the user to operate in order to purchase the contents, and a control unit 45 for controlling each circuit of the kiosk terminal device 40, as shown in Fig.23. When the contents producer loads, for example, a magneto-optical disc having the voluntarily produced contents recorded thereon to a recording medium recorder 47 and carries out the operation to upload the contents to the kiosk terminal device 40 by using the operating unit 44, the control unit 45 carries out control to store the contents read out from the recording medium recorder 47 into the hard disk device 42. Moreover, the control unit 45 carries out control to further upload the contents stored in the hard disk device 42 to the storage unit 11 in the server device 10 via the I/F circuit 41 and the public line.

The user of the kiosk terminal device 40 can freely try all or a part of the contents uploaded to the kiosk terminal device 40. Specifically, when the user carries out the operation to reproduce music, an image or a text, the control unit 45carries out control to read out the contents stored in the hard disk device 42 in accordance with the user's operation and to display the contents on the display unit 43 or reproduce the music. In this case, the control unit 45 allows viewing/listening of the music, image or text, and also displays the brief personal history of the contents producer on the display unit 43, thus introducing the contents producer to the user. That is, since the appearance and the like as well as the talent is used for determining investment, the entered personal history of the contents producer is referred to.

The operation in the case where the user purchases the contents will now be described. If the user like the contents which the user viewed/listened to on trial, the user pays a predetermined amount in cash or by a credit card by using the coin/card device 46. The control unit 45 carries out control to record the contents onto a recording medium such as a CD-R, an MD or a non-volatile memory, loaded into the recording medium recorder 47 by the user. The control unit 45 then transmits sales information of the contents from the I/F circuit 41 to the server device 10 via the public line, and the server device 10 stores the sales information into the storage unit 11. The contents which are downloaded more frequently may be stored in the hard disk device 42 in the kiosk terminal device 40, and the contents which are downloaded less frequently may be downloaded to the kiosk terminal device 40 every time a request to download the contents from the storage unit 11 in the server device is made.

The operation in the case where the user uses the kiosk terminal device 40 for the purpose of investment will now be described. The user with the purpose of investment determines to invest in the talent of a contents producer with reference to the contents and the brief personal history of the contents producer by using the kiosk terminal device 40. Then, the user pays a predetermined amount in cash or by a credit card via the coin/card device 46. In the payment, the user enters investor identification data such as the name, address and bank account number for deposit by using the operating unit 44 so that the user will be able to receive compensation when the artist achieves a big hit in the future. The control unit 45 transfers the investor identification data, the contents identifier and the investment amount to the server device 10 via the public line. Such information is transferred also to the host computer 34 installed at an investment funds management company. The investment funds management company is, for example, a producing company which manages and uses the invested funds, or a credit company which only manages the invested funds. The contents produced by the contents producer are transferred also to the host computer 33 installed at a copyright management company via the server device 10. The host computer 33 manages the copyright of the contents. The copyright management company is, for example, a record company, a publishing company, a motion picture company or the like. The copyright management company uses the funds invested from the host computer 34 of the investment funds management company as the cost for future activity of the artist, for example, as the production cost for recording media (books, CDs, DVDs, VTRs and the like) aiming at distribution of the contents produced by the contents producer which achieved predetermined sales on the kiosk terminal device 40, or as the cost for advertising the contents producer and the contents. Although investment is made in the contents which achieved predetermined sales on the kiosk terminal device 40 in this embodiment, investment may also be made in the contents that achieved low sales but received many applications as an investment target. When the sales by distribution of these recording media reaches or exceeds a predetermined amount, the copyright management company pays compensation to the investor. As the compensation, it is possible to return an amount corresponding to sales-to-investment amount, or distribute tickets for a concert, an exhibition of paintings or presentation of a movie, or the contents produced by the contents producer only for the investors in consideration of a possible future premium. Moreover, goods related with the contents producer may be distributed.

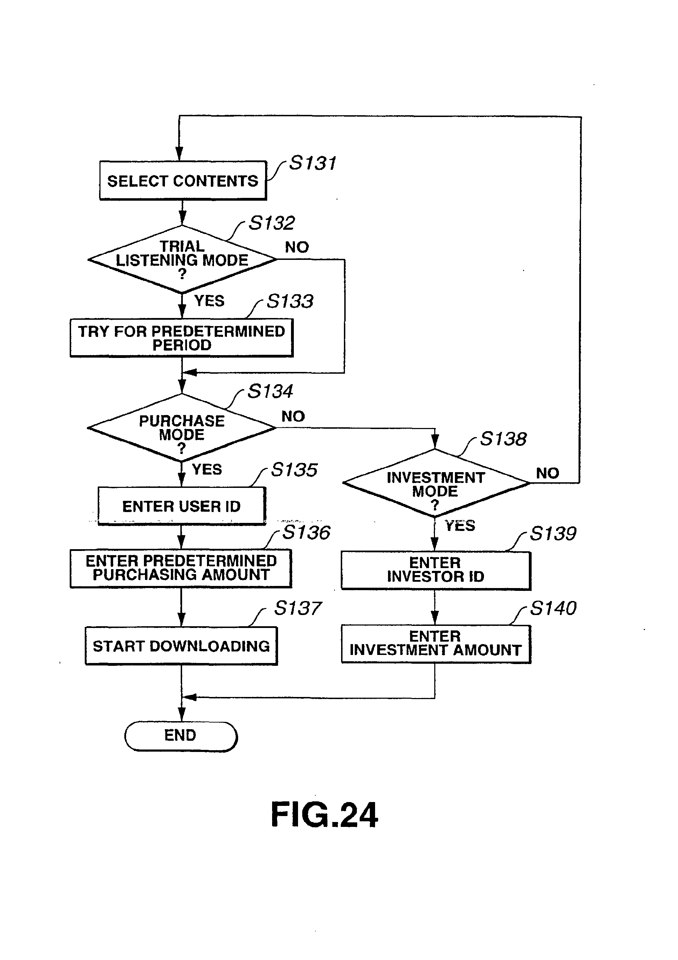

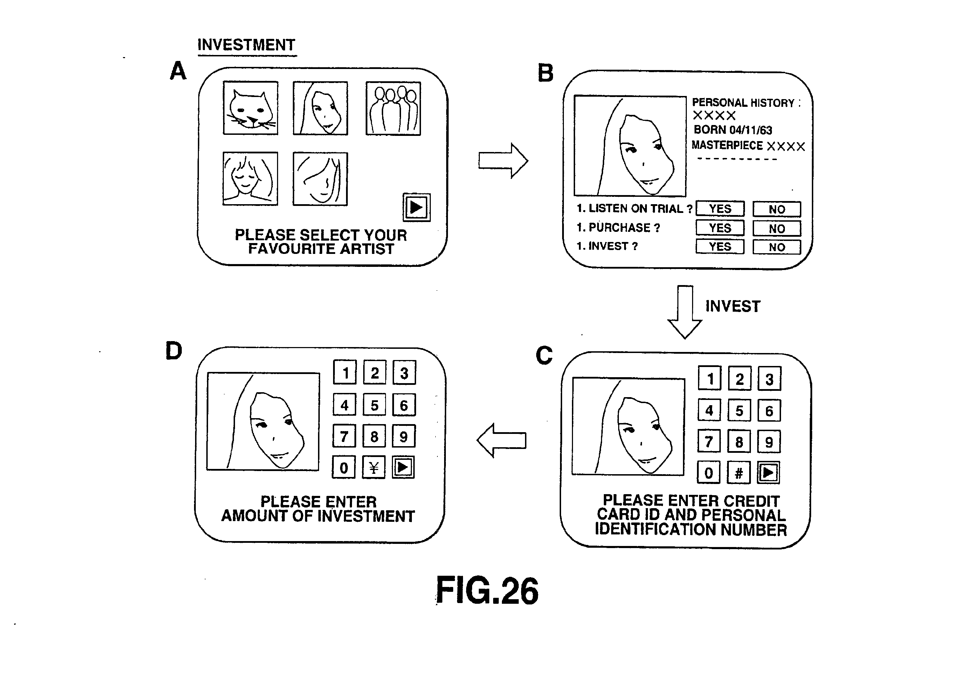

The operation procedure at the kiosk terminal device 40 and the operation of the kiosk terminal device 40 will now be described with reference to Figs.24, 25A to 25C and 26A to 26D. As shown in Fig.26A, the titles of music tunes of a plurality of artists are displayed on the display unit 43 of the kiosk terminal device 40. At step S131, the user selects the contents by using the operating unit 44, and then at step S132, a selection screen for selecting one of three modes, that is, viewing/listening mode, purchase mode, and investment mode, is displayed on the display unit 43, as shown in Fig.26B. The control unit 45 determines whether the user selected the viewing/listening mode or not. If it is determined that the user selected the viewing/listening mode, the processing goes to step S133. If it is determined that the user did not select the viewing/listening mode, the processing goes to step S134.

At step S133, the control unit 45 reproduces, for example, a part of the music and the processing then goes to step S134. At step S134, the control unit 45 determines whether the purchase mode was selected or not. If it is determined that the purchase mode was selected, the processing goes to step S135. If not, the processing goes to step S138.

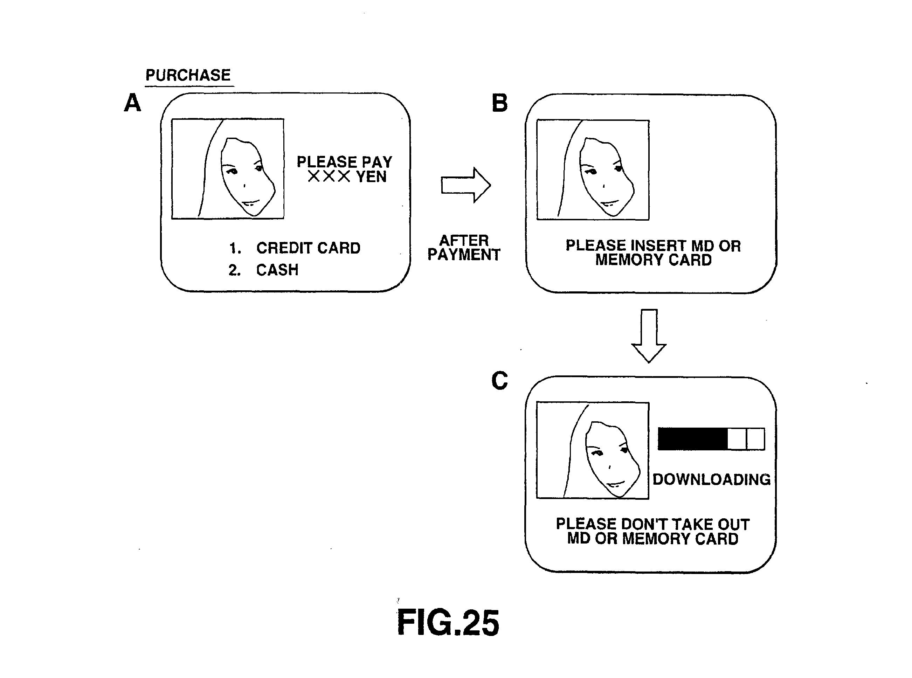

At step S135, when the user selects payment by a credit card or in cash in accordance with the display shown in Fig.25A, the control unit 45 takes therein ID such as the card number or the personal identification number of the credit card and the processing then goes to step S136. At step S136, when the user enters a predetermined purchasing amount, the control unit 45 takes the purchasing amount therein and the processing then goes to step S137. At step S137, the control unit 45 displays on the display unit 43 a screen for urging the user to insert a recording medium into the recording medium recorder 47, as shown in Fig.25B. When a recording medium is inserted in the recording medium recorder 47, the control unit 45 downloads the contents selected by the user onto the recording medium owned by the user. During the downloading, the control unit 45 displays on the display unit 43 a screen indicating to the user that the contents are being downloaded, as shown in Fig.25C.

If it is determined at step S134 that the user did not select the purchasing mode, the control unit 45 goes to step S138. At step S138, the control unit 45 determines whether the user selected the investment mode or not. If it is determined that the user selected the investment mode, the processing goes to step S139. If not, the processing returns to step S131. At step S139, the control unit 45 displays on the display unit 43 a screen for urging the user to enter the credit card number (ID) and the like, as shown in Fig.26C. When the credit card ID and the personal identification number are entered, the control unit 45 takes these as investor ID and the processing goes to step S140. At step S140, the control unit 45 displays on the display unit 43 a screen for urging the user to enter the amount of investment, as shown in Fig.26D. When the investment amount is entered, the control unit 45 takes the amount of investment therein.

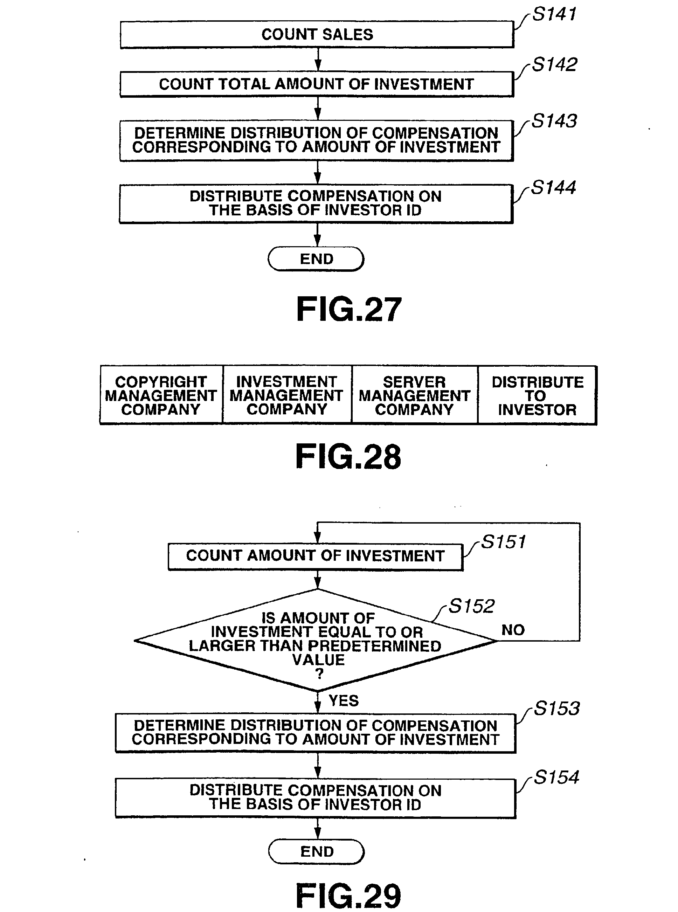

The processing operation at the host computer 34 of the investment funds management company will now be described with reference to Figs.27 and 28. At step S141, the host computer 34 totals the sales of contents. In this case, the sales of contents include the sales in the case where the user purchased the music tune via the kiosk terminal device 40 and the sales of CDs. At step S142, the host computer 34 calculates the total amount of investment. At step S143, the host computer 34 calculates the distribution of compensation to the copyright management company, the investment management company, the server management company and the investors. With respect to the distribution of compensation to the investors, the host computer 34 determines the distribution of compensation in accordance with the number of investors and the amounts of investment by the investors. At step S144, the host computer 34 distributes the compensation on the basis of the investor ID and also distributes the compensation to the copyright management company, the investment management company and the server management company.

The host computer 34 of the investment funds management company may also carry out the processing operation as shown in Fig.29. At step S151, the host computer 34 totals the amount of investment. At step S152, the host computer 34 determines whether or not the amount of investment reached or exceeded a predetermined value.

If it is determined that the amount of investment reached or exceeded the predetermined value, the processing goes to step S153. If not, the processing returns to step S151. That is, the host computer 34 waits until the amount of investment reaches or exceeds the predetermined value.

When the amount of investment reaches or exceeds the predetermined value, the host computer 34 at step S153 determines the distribution of compensation in accordance with the amount of investment. At the same time, the host computer 34 determines the distribution of compensation to the copyright management company, the investment management company and the server management company. At step S154, the host computer 34 distributes the compensation on the basis of the investor ID and also distributes the compensation to the copyright management company, the investment management company and the server management company.

As is described above, in the investment system of this embodiment, since the fixed compensation is paid in accordance with the sales of contents and the amount of investment, calculation of floating compensation based on the so-called stock price index is not necessary and the burden on the investment system can be reduced.

An investment system using a mobile communication system to which the present invention is applied will now be described with reference to the drawings.

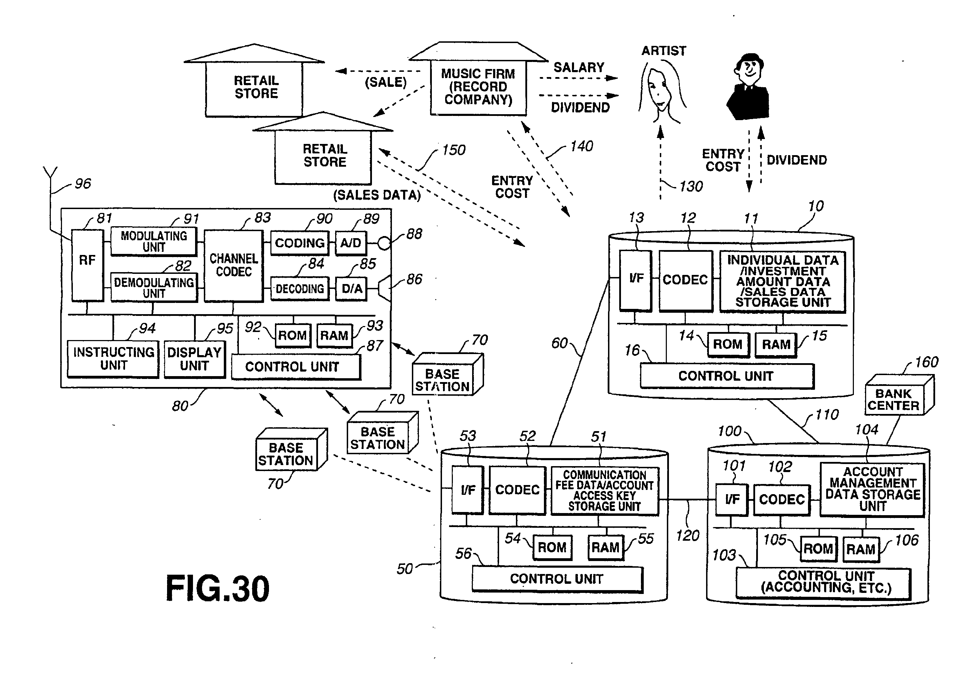

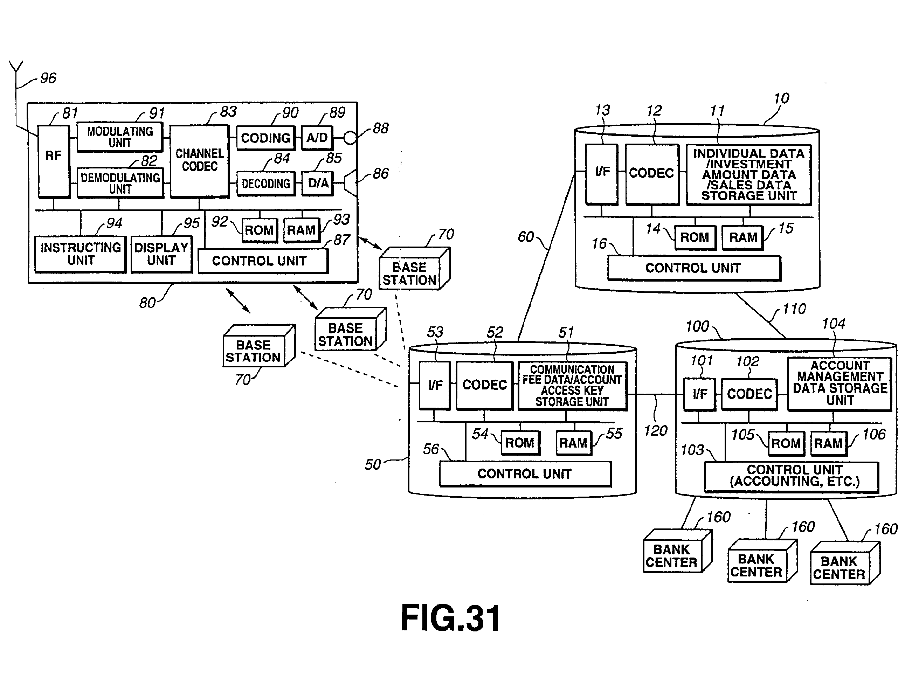

Fig.30 shows the overall structure of the system. Fig.31 shows a mobile communication investment system. A server device 10 has a plurality of contents stored therein and has a storage unit 11 in which the producers (artists) of the respective contents, the prices of the contents and the user ID for taking part in this service are recorded. The data stored in the storage unit 11 are encoded and decoded by a codec and are communicated to outside via an interface 13. The server device 10 also has a ROM 14 and a RAM 15, similarly to an ordinary computer. A control unit 16 temporarily loads to the RAM 15 a program for controlling the operation of the server device 10, stored in the ROM 14, and then executes the program to control the operation of the whole device.

The contents, which are audio signals, are encoded and decoded by the codec 12 in accordance with a system such as ATRAC3 (Adaptive Transform Acoustic Coding 3, trademark), MPEG-2AAC (Motion Picture Expert Group 2 Advanced Audio Coding, trademark), MP3 (MPEG-1 Audio Layer 3, trademark), Twin VQ (Transform-Domain Weighted Interleave Vector Quantization, trademark), MS Audio (WMA: Windows Media Audio, trademark), or Ogg Vorbis (trademark). The contents, which are the video signals, are encoded and decoded in accordance with a system such as MPEG4 or MPEG7.

A central control center 50 manages the whole radio communication network. The central control center 50 has a storage unit 51 for storing telephone charge data calculated from the call time of each user of a mobile terminal device and for storing account access key data to access the account of each user. The data stored in the storage unit 51 are encoded and decoded by a codec 52 and are communicated to outside via an interface 53. The central control center 50 has a ROM 54 and a RAM 55, similarly to the server device 10. A control unit 56 temporarily loads into the RAM 55 a program for controlling the whole operation, stored in the ROM 54, and executes the program to control the operation of the whole device. The interface 53 is connected with the interface 13 via a leased line 60 and carries out bidirectional communication of digital data. The digital data may be encrypted. Also, analog data may be used for bidirectional communication. Although not described in detail, the central control center 50 has a control function for controlling the whole radio communication network of mobile terminal devices, particularly, portable telephones. That is, the central control center 50 functions as a switching center to control a plurality of base stations 70 and to enable calls between mobile terminal devices 80. In this example, since only the data for managing the telephone charge data of the users of the mobile terminal devices 80 are concerned, the operation at the time of calling will not be described.

The mobile terminal device 80 has an RF unit 81 for receiving data transmitted as RF signals from the base station 70. The data received by the RF unit 81 is demodulated by a demodulating unit 82 in accordance with the quadrature phase shift keying (QPSK) system and is channel-coded by a channel codec unit 83 in accordance with the time-division multi-access (TDMA) system. Then, audio data is extracted from the resultant data. Hereinafter, the flow of data in data transmission/reception by the mobile terminal device 80 and the respective structures will be described.

For example, when the user uses the mobile terminal device 80 as a portable telephone, audio data is extracted from channel-coded data and the extracted audio data is decoded by a decoding unit 84 in accordance with the ADPCM system. Then, the decoded audio data is converted to an analog signal by a D/A converter 85 and is outputted from a speaker 86.

When the contents stored in the server device 10 are downloaded, contents data is extracted from channel-coded data. The contents data are decoded by the decoding unit 84 in accordance with the ATRAC3 or MP3 system. In this case, a control unit 87 controls the operation to switch the function of the decoding unit 84 in accordance with the type of the data extracted from the channel-coded data. The decoded contents data is converted to analog data by the D/A converter 85 and is outputted from the speaker 86. In this case, the analog data may also be outputted from a headphone terminal or the like.

When the use uses the mobile terminal device 80 as a portable telephone, an analog audio signal is inputted from a microphone 88. The inputted analog audio signal is converted to a digital signal by an A/D converter 89 and is coded by a coding unit 90 in accordance with the ADPCM system or the like. The coded data is channel-coded by the channel codec unit 83 and is modulated by a modulating unit 91 in accordance with the QPSK system or the like. The modulated data is transmitted from the RF unit 81 to the base station 70 via an antenna 96.

The operation of the whole mobile terminal device 80 is controlled by the control unit 87, similarly to the server device 10 and the central control center 50. A control program for controlling the operation of the mobile terminal device 80 is stored in a ROM 92. The control unit 87 temporarily loads the control program into a RAM 93 and executes the control program on the RAM 93. Moreover, an instructing unit 94 is ten keys or the like provided on an ordinary portable telephone. The instructing unit 94 carries out an instruction to download the contents data stored in the server device 10 and an instruction to upload the contents data which is downloaded and temporarily stored in the RAM 93. A display unit 95 provides display of a list of contents data stored in the server device 10 and display of the current contents value of the contents data downloaded by the user, in addition to the telephone number display provided on an ordinary portable telephone.

An accounting center 100 manages the account of an artist who registers contents data or a music firm to which the artist belongs, the account of a retail store which sells the contents in the form of CDs, and the account of a user who uses a telephone via this radio communication network. The accounting center 100 also carries out accounting to each account. The accounting center 100 is connected with the server device 10 via a leased line 110 and is also connected with the central control center 50 via a leased line 120. An access request and an account access key which are encoded are transmitted to the accounting center 100 from the server device 10 and the central control center 50, and the accounting center 100 receives these access request and account access key by using an interface 101. The received data may be encrypted. When data decoded by a codec 102 is access request data, a control unit 103 carries out authentication processing. When data decoded by the codec 102 is account access key data, the control unit 103 accesses account management data stored in a storage unit 104 and updates the account management data. On the basis of the updated account management data, the control unit 103 carries out control so that settlement processing to a predetermined bank account is carried out by communicating with a bank center 106 via the interface 101. The result of the authentication processing by the control unit 103 is coded by the codec 102 and is transmitted to the server device 10 or the central control center 50 via the interface 101. Similarly to the server device 10, a control program for controlling the operation of the whole accounting center 100 is stored in a ROM 105, and this control program is temporarily loaded into a RAM 106 and is executed on the RAM 106.

By updating the account of the artist, of the account management data in the storage unit 104 of the accounting center 100, settlement processing with respect to the dividend and the contents data entry fee of the artist is carried out, as indicated by 130. By updating the account of the firm, settlement processing with respect to the dividend and the contents data entry fee of the firm is carried out, as indicated by 140. By updating the account of the retail store, settlement processing with respect to the dividend to the retail store is carried out, as indicated by 150. The sale of CDs from the firm to the retail store, the payment of salary from the firm to the artist, and the dividends are not directly related with the present system. The CD sales data from the retail store or the firm is used for dividend processing to provide a dividend to a person who downloaded the contents, which will be described later.

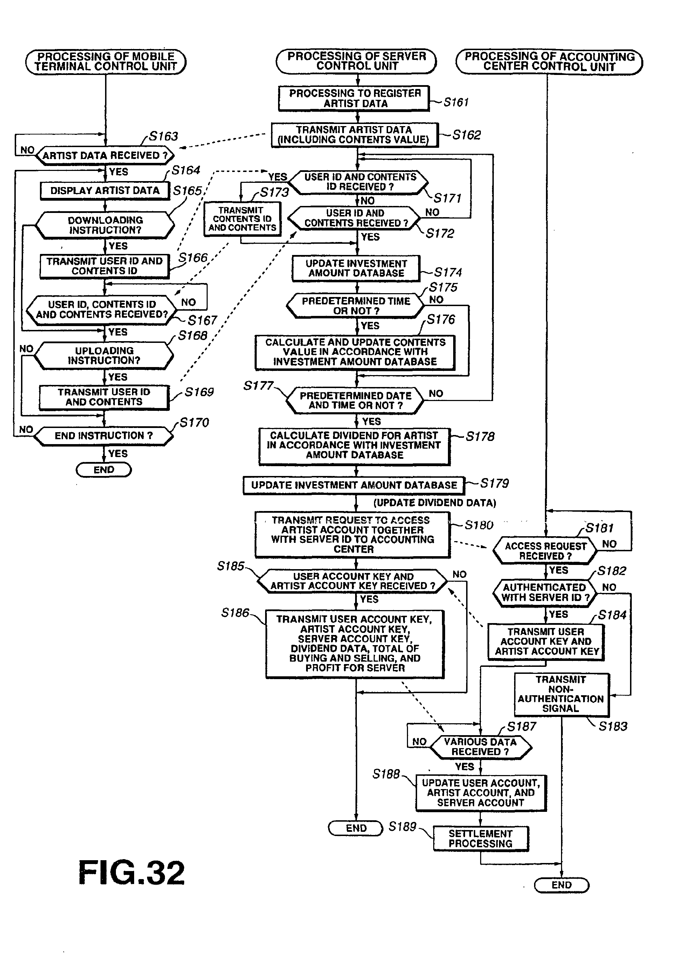

The operation in the case where the user of the mobile terminal device 80 downloads and uploads the contents registered to the server device 10 by an individual artist of the mobile communication investment system will now be described with reference to Fig.32.

At step S161, the control unit 16 of the server device 10 carries out the processing to register artist data. Specifically, the individual artist directly accesses the server device 10 by using his/her own PC or the like and transmits the artist ID and the contents to the serve device 10. The server device 10 stores the artist ID, the contents ID, the contents data indicated by the contents ID, the initial price of the contents, that is, the starting value of the contents (contents value), to a database stored in the storage unit 11 shown in the following Table 4(A).

## Table 4

(A)

| Server ID | | | | | | |
|---|---|---|---|---|---|---|
| Artist ID | Contents ID | Contents value | User ID | Number of down-loads | Number of uploads | Total selling/ buying |
| MIKE | AAA | 100 | A123B | 1 | 0 | 100 |
| | | | A325B | 2 | 1 | 100 |
| | | | A457C | 5 | 1 | 400 |
| | AAA2 | 120 | A875D | 2 | 2 | 0 |
| CAR | BBB | 200 | D451A | 2 | 1 | 200 |
| CAT | CCC | 1000 | F719B | 2 | 0 | 2000 |

| | | | | | |
|---|---|---|---|---|---|
| Profit for server | Dividend for user | Dividend for artist | User account key | Artist account key | Server account key |
| 26000 | 1 | 100000 | k1 | k1 | Se |
| | 1 | | k2 | | |
| | 4 | | k3 | | |
| | 0 | | k4 | | |
| | 10 | | k5 | k2 | |
| | 100 | | k6 | k3 | |

(B)

| ID | Bank ID | Account number | Date | Expenditure/ receipt record | Remainder | Account key |
|---|---|---|---|---|---|---|
| A123B | ○△ Bank | 12345678 9 | 2000.02. 10 | 10000 | 110000 | k1 |
| | | | 2000.02. 13 | 10000 | 120000 | |
| | | | 2000.02. 15 | -20000 | 100000 | |
| | | ○ | 2000.02. 15 | -20000 | 80000 | |
| | | | 2000.02. 18 | -30000 | 50000 | |
| | | | 2000.02. 20 | -10000 | 40000 | |
| CAR | ×■ Bank | 32145678 5 | 2000.02. 05 | -20000 | 100000 | K2 |
| | | | 2000.02. 13 | -10000 | 90000 | |
| SERVER 1 | △△ Bank | 54879543 1 | 2000.02. 13 | 260000 | 260000 | Se |

At step S162, the control unit 16 of the server device 10 transmits artist data to the mobile terminal device 80. The artist data includes the artist ID, the contents ID and the contents value.

The control unit 87 of the mobile terminal device 80, which is in the standby state for receiving the artist data, completes reception of the artist data at step S163. Then, the processing goes to step S164 and the control unit 87 displays the artist data on the display unit 95.

At step S165, the control unit 87 accepts an instruction to download the contents data corresponding to the operation of the instructing unit 94 by the user. Then, the processing goes to step S166 and the control unit 87 transmits the user ID and the contents ID to the server device 10. The control unit 87 of the mobile terminal device 80, which is in the standby state for receiving the user ID, the contents ID and the contents data transmitted from the server device 10, completes reception of the user ID, the contents ID and the contents data at step S167. Then, the processing goes to step S168. If there is no instruction to download the contents data by the user at step S165, the control unit 87 goes to step S168.

At step S168, an instruction to upload the contents which are previously downloaded by the user and stored in RAM 93 is supplied to the control unit 87 from the instructing unit 94. Then, the processing goes to step S169 and the control unit 87 transmits the user ID and the contents to the server device 10. If there is no instruction to upload the contents by the user at step S168, the control unit 87 goes to step S170.

At step S170, the control unit 87 determines whether there is an end instruction from the user or not. If there is no instruction, the processing returns to step S164 and the control unit 87 displays the same artist data again or displays the artist data which is already stored in the storage unit 11. On the other hand, if it is determined that there is an end instruction from the user, the control unit 87 ends the processing at the mobile terminal device 80.

If the control unit 16 of the server device 10, which is in the standby state for receiving a downloading request, determines that the user ID and the contents ID are not received at step S171, the processing goes to step S172 and the control unit 16 enters the standby state for receiving the user ID and the contents. If the user ID and the contents ID are received, the control unit 16 goes to step S173. If neither the user ID nor the contents are received, that is, uploaded at step S172, the control unit 16 returns to step S171 and the control unit 16 continues the standby state for receiving the user ID, the contents ID and the contents.

Having received the user ID and the contents ID, the control unit 16 at step S173 transmits the user ID, the contents ID and the contents data to the mobile terminal device 80 in response to the downloading request from the user received at step S171. On completion of transmission, the control unit 16 goes to step S174.

At step S174, the control unit 16 of the server device 10 updates the database shown in Table 4(A). For example, when the user ID and the contents ID are received (downloaded), the control unit 16 stores the user ID correspondingly to the contents ID. The control unit 16 increments the number of downloading times by one. Although downloading one content once is permitted by one downloading instruction from the user in this example, downloading the same content or different contents for a plurality of times may be permitted by one downloading operation.

When the user ID and the contents are received (uploaded), the control unit 16 increments the number of uploading times corresponding to the user ID and the contents, by one. Although uploading one content once is permitted by one uploading instruction from the user in this example, uploading the same content or different contents for a plurality of times may be permitted by one uploading operation.

On completion of update of the investment amount database at step S174, the control unit 16 goes to step S175. At step S175, the control unit 16 determines whether a predetermined time is counted or not. In this example, the predetermined time is 10 minutes. That is, at step S175, the control unit 16 controls the operation so that the processing goes to step S176 every 10 minutes.

At step S176, the control unit 16 calculates the contents value in accordance with the investment amount database shown in Table 4(A) and updates the contents value and the total amount of selling/buying in the database.

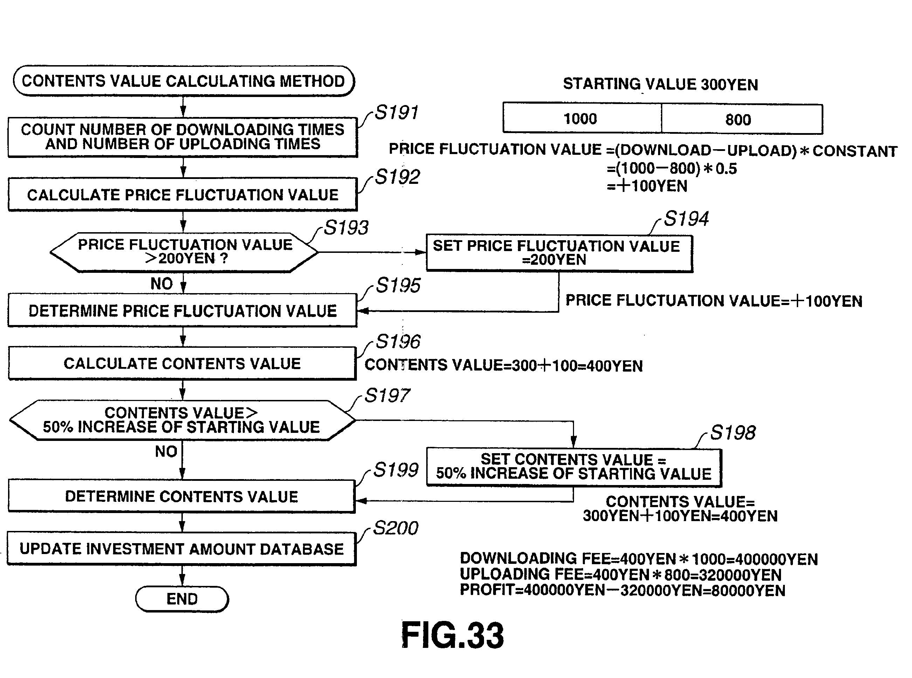

Four exemplary methods for calculating the contents value are shown in Figs.33 to 36. First, a method for calculating the contents value will be described with reference to Fig.33. The calculation of the contents value is carried out by the control unit 16 of the server device 10. It is now assumed, for example, that the starting value of the contents value is 300 yen. At step S191, the control unit 16 counts the number of downloading times and the number of uploading times during the period of 10 minutes, which is counted at the above-described step S173. For example, when the number of downloading times is 1,000 and the number of uploading times is 800, the control unit 16 at step S192 calculates the price fluctuation value in accordance with the following formula.

$$\text{(Number of downloading times - number of uploading times)}$$

$$\times \text{ constant}$$

In this example, the constant is 0.5. The price fluctuation value is +100 yen.

Next, at step S193, the control unit 16 determines whether the price fluctuation value is larger than 200 yen or not. This serves as a limiter for preventing abrupt price fluctuation. Therefore, the reference value is not limited to 200 yen. If the price fluctuation value is larger than 200 yen, the control unit 16 goes to step S194 to set the price fluctuation value at 200 yen and then goes to step S195. In this example, since the price fluctuation value is +100 yen, the control unit 16 goes to step S195 to set the price fluctuation value at +100 yen. At step S196, the control unit 16 calculates the contents value, which is 300+100=400 yen.

At step S197, the control unit 16 determines whether or not the calculated contents value is larger than a 50% increase of the today's starting value. This serves as a limiter for preventing abrupt price fluctuation in one day. If the contents value is larger than a 50% increase of the starting value, the control unit 16 goes to step S198 to set the contents value at a 50% increase of the starting value and then goes to step S199. In this example, since 400 yen is less than 450 yen, the control unit 16 goes to step S199 to determine the contents value of 400 yen.

At step S200, the control unit 16 updates the corresponding contents value and total amount of selling/buying based on the determined contents value, in the investment amount database shown in Table 4(A). The sum of total amounts of selling/buying will be a profit for the manager of the server device 10, who administers the present system. As shown in Fig.33, the profit for the manager of the server device 10 based on this selling and buying is 80,000 yen.

Although only the upper limiter of the price is considered in this example, the lower limit of the price or the lower limit of the price fluctuation may also be used as a limiter.

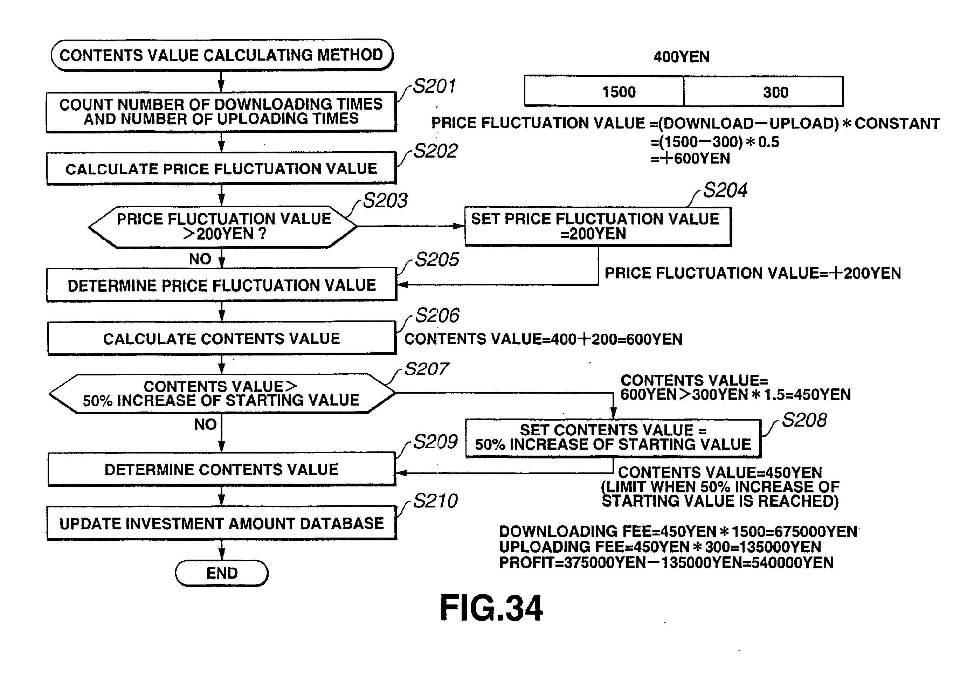

Another method for calculating the contents value will be described with reference to Fig.34. The calculation of the contents value is carried out by the control unit 16 of the server device 10, similarly to the above-described example. The current contents value is 400 yen. At step S201, the control unit 16 counts the number of downloading times and the number of uploading times during the period of 10 minutes, which is counted at the above-described step S173. When the number of downloading times is 1,500 and the number of uploading times is 300, the control unit 16 at step S202 calculates the price fluctuation value in accordance with the following formula.

$$\text{(Number of downloading times - number of uploading times)} \times \text{constant}$$

In this example, the constant is 0.5. The price fluctuation value is +600 yen.

Next, at step S203, the control unit 16 determines whether the price fluctuation value is larger than 200 yen or not. If the price fluctuation value is larger than 200 yen, the control unit 16 goes to step S204. If the price fluctuation value is smaller than 200 yen, the control unit 16 goes to step S205 to determine the price fluctuation value. In this example, since the price fluctuation value is +600 yen, the control unit 16 goes to step S204 set the price fluctuation value at 200 yen and then goes to step S195. At step S205, the control unit 16 determines the price fluctuation value of +200 yen.

Moreover, at step S206, the control unit 16 calculates the contents value, which is 400+200=600 yen.

At step S207, the control unit 16 determines whether or not the calculated contents value is larger than a 50% increase of the today's starting value. If the contents value is larger than a 50% increase of the starting value, the control unit 16 goes to step S208. If the contents value is not larger than a 50% increase of the starting value, the control unit 16 goes to step S209. In this example, since 600 yen is larger than 450 yen, the control unit 16 goes to step S208 to set the contents value at 450 yen. Moreover, the control unit 16 at step S209 determine the contents value of 450 yen.

At step S210, the control unit 16 updates the corresponding contents value and total amount of selling/buying based on the determined contents value, in the investment amount database shown in Table 4(A). As shown in Fig. 34, the profit for the manager of the server device 10 based on this selling and buying is 540,000 yen.

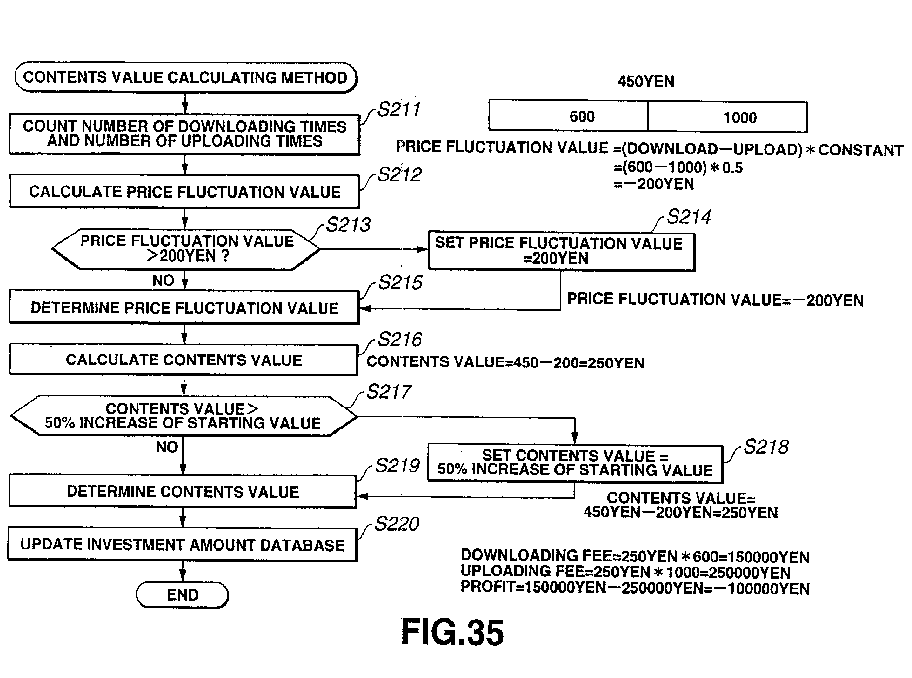

Still another method for calculating the contents value will be described with reference to Fig.35. The calculation of the contents value is carried out by the control unit 16 of the server device 10, similarly to the above-described examples. The current contents value is 450 yen. At step S211, the control unit 16 counts the number of downloading times and the number of uploading times during the period of 10 minutes, which is counted at the above-described step S173. When the number of downloading times is 600 and the number of uploading times is 1,000, the control unit 16 at step S212 calculates the price fluctuation value in accordance with the following formula.

$$\text{(Number of downloading times - number of uploading times)} \times \text{constant}$$

In this example, the constant is 0.5. The price fluctuation value is -200 yen.

Next, at step S213, the control unit 16 determines whether the price fluctuation value is larger than 200 yen or not. If the price fluctuation value is larger than 200 yen, the control unit 16 goes to step S214 to set the price fluctuation value at 200 yen and at step S195 determines the price fluctuation value of 200 yen. If the price fluctuation value is smaller than 200 yen, the control unit 16 goes to step S215. In this example, since the price fluctuation value is -200 yen, the control unit 16 goes to step S215 to determine the price fluctuation value of -200 yen.

Moreover, at step S216, the control unit 16 calculates the contents value, which is 450-200 = 250 yen.

At step S217, the control unit 16 determines whether or not the calculated contents value is larger than a 50% increase of the today's starting value. If the contents value is larger than a 50% increase of the starting value, the control unit 16 goes to step S218. If the contents value is not larger than a 50% increase of the starting value, the control unit 16 at step S219 determines the contents value. In this example, since 250 yen is less than 450 yen, the control unit 16 goes to step S219 to determine the contents value of 250 yen.

At step S220, the control unit 16 updates the corresponding contents value and total amount of selling/buying based on the determined contents value, in the investment amount database shown in Table 4(A). As shown in Fig. 35, the profit for the manager of the server device 10 based on this selling and buying is -100,000 yen.

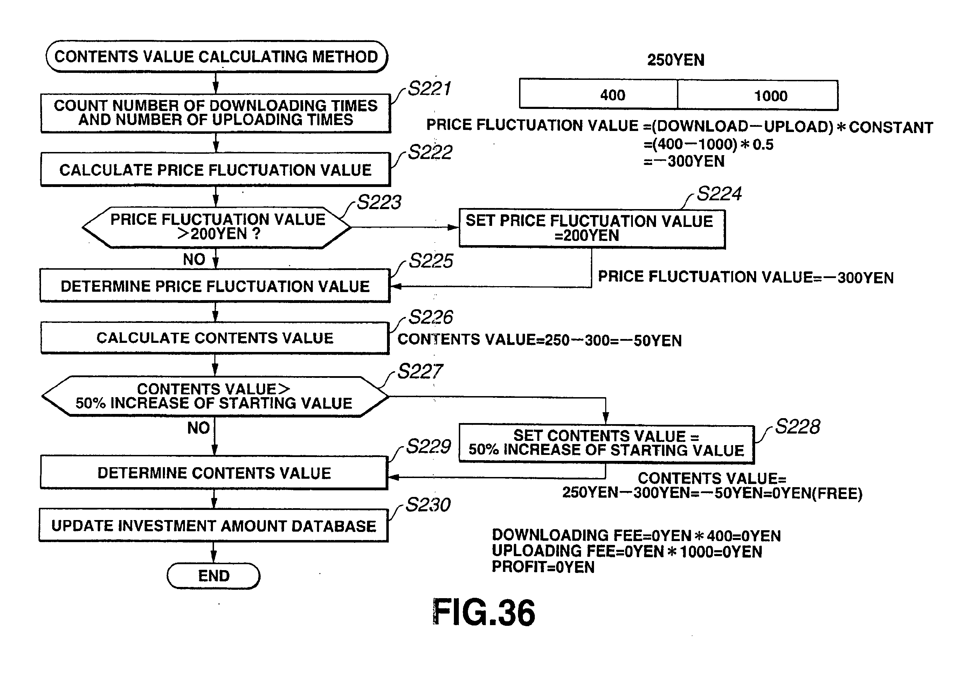

Still another method for calculating the contents value will be described with reference to Fig.36. The calculation of the contents value is carried out by the control unit 16 of the server device 10, similarly to the above-described examples. The current contents value is 250 yen. At step S221, the control unit 16 counts the number of downloading times and the number of uploading times during the period of 10 minutes, which is counted at the above-described step S173. When the number of downloading times is 400 and the number of uploading times is 1,000, the control unit 16 at step S222 calculates the price fluctuation value in accordance with the following formula.

$$\text{(Number of downloading times - number of uploading times)}$$

$$\times \text{ constant}$$

In this example, the constant is 0.5. The price fluctuation value is -300 yen.

Next, at step S223, the control unit 16 determines whether the price fluctuation value is larger than 200 yen or not. If the price fluctuation value is larger than 200 yen, the control unit 16 goes to step S224. If the price fluctuation value is smaller than 200 yen, the control unit 16 goes to step 225 to determine the price fluctuation value. In this example, since the price fluctuation value is -300 yen, the control unit 16 goes to step S225 to determine the price fluctuation value of -300 yen.

Moreover, at step S226, the control unit 16 calculates the contents value, which is 250-300 = -50 yen.

At step S227, the control unit 16 determines whether or not the calculated contents value is larger than a 50% increase of the today's starting value. If the contents value is larger than a 50% increase of the starting value, the control unit 16 goes to step S228. If the contents value is not larger than a 50% increase of the starting value, the control unit 16 at step S229 determines the contents value. In this example, since -50 yen is less than 450 yen, the control unit 16 goes to step S229 to change the contents value from the negative value to 0 yen for permitting free downloading and thus determines the contents value of 0 yen.

At step S230, the control unit 16 updates the corresponding contents value and total amount of selling/buying based on the determined contents value, in the investment amount database shown in Table 4. As shown in Fig.36, the profit for the manager of the server device 10 based on this selling and buying is 0 yen.

The explanation of the flowchart of Fig.32 will now be continued. On completion of the calculation of the contents value and the update of the database by the control unit 16 as described above, the control unit 16 goes to step S177. At step S177, the control unit 16 judges, for example, whether one month has passed or not. If one month has not passed, the processing at the control unit 16 returns to step S171 to continue the standby state for downloading and uploading. In this flowchart, the processing for selling and buying through downloading and uploading and the processing for providing dividends for the user and the artist are carried out by batch processing every month. The processing for selling and buying through downloading and uploading may also be carried out, for example, every 10 minutes.

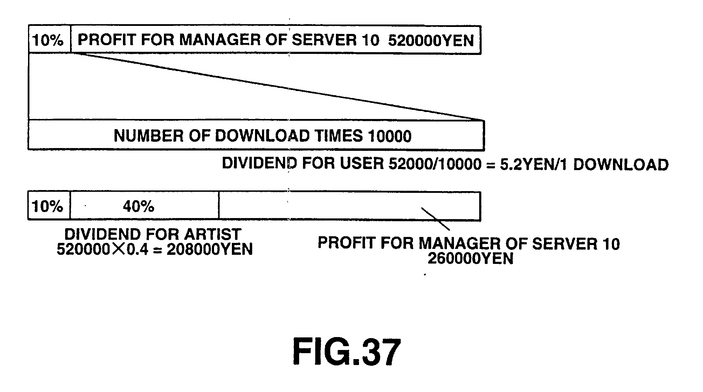

If the control unit 16 judges that one month has passed, the control unit 16 goes to step S178. At step S178, the control unit 16 calculates dividends for the user and the artist on the basis of the profit for the manager of the server device 10. The calculation of dividends will now be described with reference to Fig.37. In this case, dividends based on only one content are described. The dividends are calculated on the basis of the total profit of 520,000 yen shown in Figs.33 to 36.

First, as a dividend for the user, 10% of the profit of 520,000 yen for the manager of the server device 10 is allocated. Then, if the number of downloading times of this content at present (more precisely, the total number of units of this content currently owned by the user) is 10,000, a dividend of 5.2 yen per unit of this content is allocated to the user. For example, a user who owns three units of the same content receives a dividend of $5.2 \times 3 = 15.6$ yen.

As a dividend for the artist, 40% of the profit of 520,000 yen for the manager of the server device 10 is allocated. That is, the dividend for the artist is 208,000 yen. Then, the ultimate profit for the manager of the server device 10 is 260,000 yen.

Next, at step S179, the control unit 16 updates the investment amount database on the basis of the results of the calculation of the dividends for the user and the artist and the calculation of the profit for the manager of the server device 10. Specifically, the control unit 16 updates server device profit data, user dividend data, and artist dividend data.

At step S180, the control unit 16 transmits the server ID and a request to access the user and artist accounts, to the accounting center 100 via the leased line 110.

The control unit 103 of the accounting center 100, which is in the standby state for receiving an access request, receives at step S181 the server ID and the access request from the server device 10, and then goes to step S182. If the server ID and the access request are not received, step S181 is repeated. At step S182, the control unit 103 carries out authentication processing with the server ID. In this case, the user and the artist designate bank accounts in advance for the service of this system, and by this bank account designation processing, the server ID of this system, and a user account key and an artist account key are associated with each other and stored in the storage unit 104 of the accounting center 100. Therefore, the control unit 103 carries out authentication by collating the received server ID with the stored server ID.

When authentication is not made between the received server ID and the stored server ID, the control unit 103 goes to step S183 and transmits a non-authentication signal to the server device 10. When authentication is made, the control unit 103 at step S184 transmits the user account key and the artist account key to the server device 10.

At step S185, on receiving the non-authentication signal from the accounting center 100, the control unit 16 of the server device 10 ends the processing. On the other hand, on receiving the user account key and the artist account key from the accounting center 100, the control unit 16 at step S186 transmits the user account key, the artist account key, a server account key stored in advance in the server device, the total selling/buying data, user and artist dividends data and server profit data, to the accounting center 100. On completion of the transmission, the server device 10 ends the processing.

The control unit 103 of the accounting center 100, which is in the standby state for receiving the user and artist account keys, receives the data at step S187 and then goes to step S188. If the data is not received, the control unit 103 repeats step S187. At step S188, the control unit 103 carries out the processing to update the database stored in the storage unit 104, which is shown in Table 4(B).

Specifically, the control unit 103 accesses user account management data by using the user account key and updates the date, the expenditure/receipt record and the remainder on the basis of the total of selling and buying by each user. The control unit 103 also updates the date, the expenditure/receipt record and the remainder on the basis of the dividend data for the user. Moreover, the control unit 103 accesses artist account management data by using the artist account key and updates the date, the expenditure/receipt record and the remainder on the basis of the dividend data for each artist. Furthermore, the control unit 103 accesses server account management data by using the server account key and updates the date, the expenditure/receipt record and the remainder on the basis of the server profit.

On the basis of the update of the account management data, the control unit 103 at step S189 automatically carries out settlement processing with respect to the bank account of the bank ID shown in Table 4(B) by transmitting and receiving data to and from the bank center 160 via the interface 101. That is, the update of the account management data is directly reflected on the update of the bank account data. On completion of the update of the account management data, the control unit 103 of the accounting center 100 ends the processing.

As described above, in the present system, the individual artist registers the contents produced by himself/herself to the server device 10 and the user repeats downloading and uploading of the contents such as music tunes, by the processing of Fig.32. Since the price of the contents is controlled to fluctuate, the frequently downloaded content becomes expensive and gains a premium. Thus, a new game-like feature of predicting and downloading a content which is likely to gain a premium can be provided.

Moreover, the present system has the settlement processing function, whereby the manager of the server device 10 can gain a profit from repeated downloading and uploading of contents by the user and predetermined percentages of the profit are distributed as dividends to the user and the artist who registers the contents. Thus, the user can obtain compensation by discovering an artist who can achieve a hit. The artist can obtain large compensation by registering contents which can be downloaded frequently.

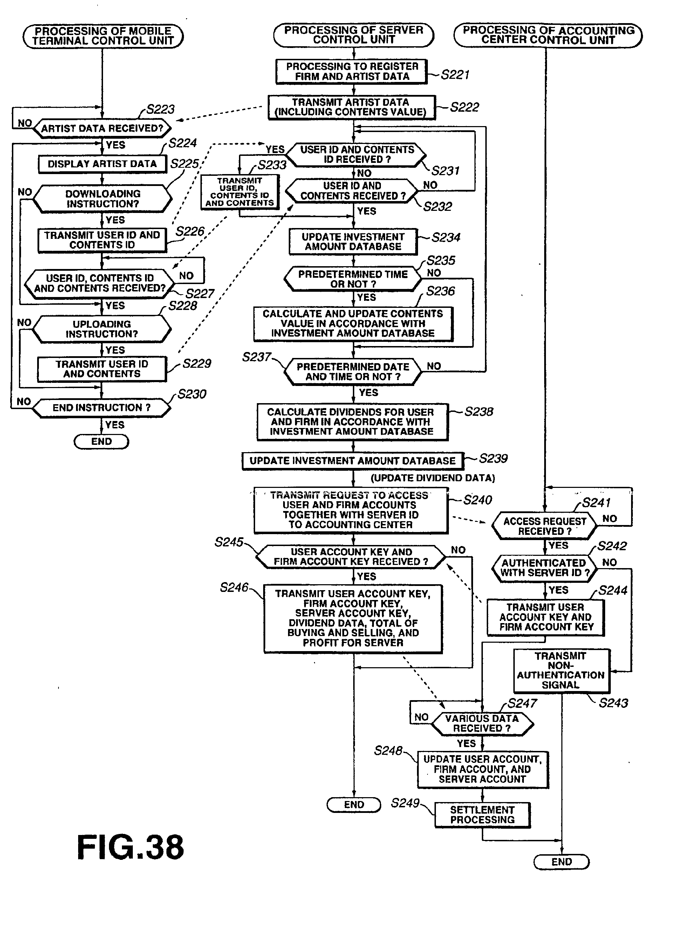

The operation in the case where a user of the mobile terminal device 80 downloads and uploads the contents registered to the server device 10 by an artist belonging to a music firm or a record company will now be described with reference to the flowchart of Fig.38.

At step S221, the control unit 16 of the server device 10 carries out the processing to register firm and artist data. Specifically, the artist or a person related with the firm directly accesses the server device 10 by using his/her own PC or the like, and transmits firm ID, artist ID and contents to the server device 10. The server device 10 stores the firm ID, the artist ID, the contents data indicated by the contents ID, and the initial price of the contents, that is, the starting value of the contents (contents value), into a database stored in the storage unit 11 shown in the following Table 5(A).

Table 5

(A)

| Server ID | | | | | | |
|---|---|---|---|---|---|---|
| Firm ID | Artist ID | Contents ID | Contents value | User ID | Number of down-loads | Number of uploads |
| ○○○ Firm | MIKE | AAA | 100 | A123B | 1 | 0 |
| | | | | A325B | 2 | 1 |
| | | | | A457C | 5 | 1 |
| | | AAA2 | 120 | B875D | 2 | 2 |
| | CAR | BBB | 200 | D451A | 2 | 1 |
| △△△ Firm | CAT | CCC | 1000 | F719B | 2 | 0 |

| Total selling/ buying | Server profit | Dividend for user | Dividend for firm | User account key | Firm account key | Server account key |
|---|---|---|---|---|---|---|
| 100 | 26000 | 1 | 200000 | k1 | X1 | Se |
| 100 | | 1 | | k2 | | |
| 400 | | 4 | | k3 | | |
| 0 | | 0 | | k4 | | |
| 200 | | 10 | | k5 | | |
| 2000 | | 100 | | k6 | X2 | |

(B)

| ID | Bank ID | Account number | Date | Expenditure/ receipt record | Remainder | Account key |
|---|---|---|---|---|---|---|
| A123B | ○△ Bank | 123456789 | 2000.02.10 | 10000 | 110000 | k1 |
| | | | 2000.02.13 | 10000 | 120000 | |
| | | | 2000.02.15 | -20000 | 100000 | |
| | | | 2000.02.15 | -20000 | 80000 | |
| | | | 2000.02.18 | -30000 | 50000 | |
| | | | 2000.02.20 | -10000 | 40000 | |
| △△△ Firm | ×■ Bank | 321456785 | 2000.02.05 | -20000 | 100000 | X2 |
| | | | 2000.02.13 | -10000 | 90000 | |
| SERVER 1 | △△ Bank | 548795431 | 2000.02.13 | 260000 | 260000 | Se |

At step S222, the control unit 16 of the server device 10 transmits the artist data to the mobile terminal device 80. The artist data includes the artist ID, the contents ID and the contents value. The control unit 87 of the mobile terminal device 80, which is in the standby state for receiving the artist data, completes reception of the artist data at step S223 and the goes to step S224. If the artist data is not received, the control unit 87 repeats step S223. When the artist data is received, the control unit 87 displays the artist data on the display unit 95 at step S224.

At step S225, the control unit 87 accepts an instruction to download the contents data corresponding to the operation of the instructing unit 94 by the user. Then, the processing goes to step S226 and the control unit 87 transmits the user ID and the contents ID to the server device 10. The control unit 87 of the mobile terminal device 80, which is in the standby state for receiving the user ID, the contents ID and the contents data transmitted from the server device 10, completes reception of the user ID, the contents ID and the contents data at step S227. Then, the processing goes to step S228. If there is no instruction to download the contents data by the user at step S225, the control unit 87 goes to step S228.

At step S228, an instruction to upload the contents which are previously downloaded by the user and stored in RAM 93 is supplied to the control unit 87 from the instructing unit 94. Then, the processing goes to step S229 and the control unit 87 transmits the user ID and the contents to the server device 10. If there is no instruction to upload the contents by the user at step S228, the control unit 87 goes to step S230.

At step S230, the control unit 87 determines whether there is an end instruction from the user or not. If there is no instruction, the processing returns to step S224 and the control unit 87 displays the same artist data again or displays the artist data which is already stored in the storage unit 11. On the other hand, if it is determined that there is an end instruction from the user, the control unit 87 ends the processing at the mobile terminal device 80.

If the control unit 16 of the server device 10, which is in the standby state for receiving the user ID and the contents ID, determines that the user ID and the contents ID are not received at step S231, the processing goes to step S232 and the control unit 16 enters the standby state for receiving the user ID and the contents. If the user ID and the contents ID are received, the control unit 16 goes to step S233. If neither the user ID nor the contents are received, that is, uploaded at step S232, the control unit 16 returns to step S231 and the control unit 16 continues the standby state for receiving the user ID, the contents ID and the contents.

Having received the user ID and the contents ID, the control unit 16 at step S233 transmits the user ID, the contents ID and the contents data to the mobile terminal device 80 in response to the downloading request from the user received at step S231. On completion of transmission, the control unit 16 goes to step S234.

At step S234, the control unit 16 of the server device 10 updates the database shown in Table 5(A). For example, when the user ID and the contents ID are received (downloaded), the control unit 16 stores the user ID correspondingly to the contents ID. The control unit 16 increments the number of downloading times by one. Although downloading one content once is permitted by one downloading instruction from the user in this example, downloading the same content or different contents for a plurality of times may be permitted by one downloading operation.

When the user ID and the contents are received (uploaded), the control unit 16 increments the number of uploading times corresponding to the user ID and the contents, by one. Although uploading one content once is permitted by one uploading instruction from the user in this example, uploading the same content or different contents for a plurality of times may be permitted by one uploading operation.

On completion of update of the investment amount database at step S234, the control unit 16 goes to step S235. At step S235, the control unit 16 determines whether a predetermined time is counted or not. In this example, the predetermined time is 10 minutes. That is, at step S235, the control unit 16 controls the operation so that the processing goes to step S236 every 10 minutes.

At step S236, the control unit 16 calculates the contents value in accordance with the investment amount database shown in Table 5(A) and updates the contents value and the total amount of selling/buying in the database. The methods for calculating the contents value are similar to the methods shown in Figs.33 to 36.

On completion of the calculation of the contents value and the update of the database by the control unit 16, the control unit 16 goes to step S237. At step S237, the control unit 16 judges, for example, whether one month has passed or not. If one month has not passed, the control unit 16 returns to step S181 to continue the standby state for downloading and uploading. In this flowchart, the processing for selling and buying through downloading and uploading and the processing for providing dividends for the user and the firm are carried out by batch processing every month. The processing for selling and buying through downloading and uploading may also be carried out, for example, every 10 minutes.

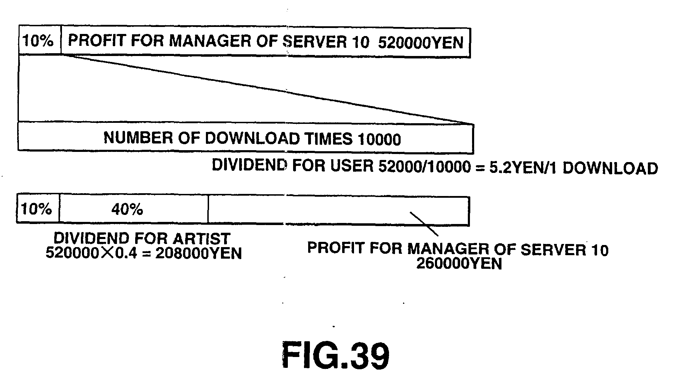

If the control unit 16 judges that one month has passed, the control unit 16 goes to step S238. At step S238, the control unit 16 calculates dividends for the user and the firm on the basis of the profit for the manager of the server device 10. The calculation of dividends will now be described with reference to Fig.39. In this case, dividends based on only one content are described. The dividends are calculated on the basis of the total profit of 520,000 yen shown in Figs.33 to 36. The dividend for the firm may also be calculated by distributing the profit of a plurality of contents for the manager of the server device 10.

First, as a dividend for the user, 10% of the profit of 520,000 yen for the manager of the server device 10 is allocated. Then, if the number of downloading times of this content at present (more precisely, the total number of units of this content currently owned by the user) is 10,000, a dividend of 5.2 yen per unit of this content is allocated to the user. For example, a user who owns three units of the same content receives a dividend of $5.2 \times 3 = 15.6$ yen.

As a dividend for the firm, 40% of the profit of 520,000 yen for the manager of the server device 10 is allocated. That is, the dividend for the firm is 208,000 yen. Then, the ultimate profit for the manager of the server device 10 is 260,000 yen.

Next, at step S239, the control unit 16 updates the investment amount database on the basis of the results of the calculation of the dividends for the user and the firm and the calculation of the profit for the manager of the server device 10. Specifically, the control unit 16 updates server device profit data, user dividend data, and firm dividend data.

At step S240, the control unit 16 transmits the server ID and a request to access the user and firm accounts, to the accounting center 100 via the leased line 110. The control unit 103 of the accounting center 100, which is in the standby state for receiving an access request, receives at step S241 the server ID and the access request from the server device 10, and then goes to step S242. If the server ID and the access request are not received, step S241 is repeated. At step S242, the control unit 103 carries out authentication processing with the server ID. In this case, the user and the firm designate bank accounts in advance for the service of this system, and by this bank account designation processing, the server ID of this system, and a user account key and a firm account key are associated with each other and stored in the storage unit 104 of the accounting center 100. Therefore, the control unit 103 carries out authentication by collating the received server ID with the stored server ID.

When authentication is not made between the received server ID and the stored server ID, the control unit 103 goes to step S243 and transmits a non-authentication signal to the server device 10. When authentication is made, the control unit 103 goes to step S244 and transmits the user account key and the firm account key to the server device 10.

At step S245, on receiving the non-authentication signal from the accounting center 100, the control unit 16 of the server device 10 ends the processing. On the other hand, on receiving the user account key and the firm account key from the accounting center 100, the control unit 16 at step S246 transmits the user account key, the firm account key, a server account key stored in advance in the server device, the total selling/buying data, user and firm dividends data and server profit data, to the accounting center 100. On completion of the transmission, the server device 10 ends the processing.

The control unit 103 of the accounting center 100, which is in the standby state for receiving the user and firm account keys, receives the data at step S247 and then goes to step S248. If the data is not received, the control unit 103 repeats step S247. At step S248, the control unit 103 carries out the processing to update the database stored in the storage unit 104, which is shown in Table 5(B).

Specifically, the control unit 103 accesses user account management data by using the user account key and updates the date, the expenditure/receipt record and the remainder on the basis of the total of selling and buying by each user. The control unit 103 also updates the date, the expenditure/receipt record and the remainder on the basis of the dividend data for the user. Moreover, the control unit 103 accesses firm account management data by using the firm account key and updates the date, the expenditure/receipt record and the remainder on the basis of the dividend data for each firm. Furthermore, the control unit 103 accesses server account management data by using the server account key and updates the date, the expenditure/receipt record and the remainder on the basis of the server profit.

On the basis of the update of the account management data, the control unit 103 at step S249 automatically carries out settlement processing with respect to the bank account of the bank ID shown in Table 5(B) by transmitting and receiving data to and from the bank center 160 via the interface 101. That is, the update of the account management data is directly reflected on the update of the bank account data. On completion of the update of the account management data, the control unit 103 of the accounting center 100 ends the processing.

As described above, in the present system, the firm or the artist belonging to the firm registers the produced contents to the server device 10 and the user repeats downloading and uploading of the contents such as music tunes, by the processing of Fig.38. Since the price of the contents is controlled to fluctuate, the frequently downloaded content becomes expensive and gains a premium. Thus, a new game-like feature can be provided such that the user predicts and downloads a content which is likely to gain a premium.

Moreover, the present system has the settlement processing function, whereby the manager of the server device 10 can gain a profit from repeated downloading and uploading of contents by the user and predetermined percentages of the profit are distributed as dividends to the user and the firm who registers the contents. Thus, the user can obtain compensation by discovering an artist who can achieve a hit. The firm can obtain large compensation by registering contents which can be downloaded frequently. Furthermore, by distributing the dividend from the firm to the artist together with the salary as shown in Fig.26, the artist can gain a large profit.

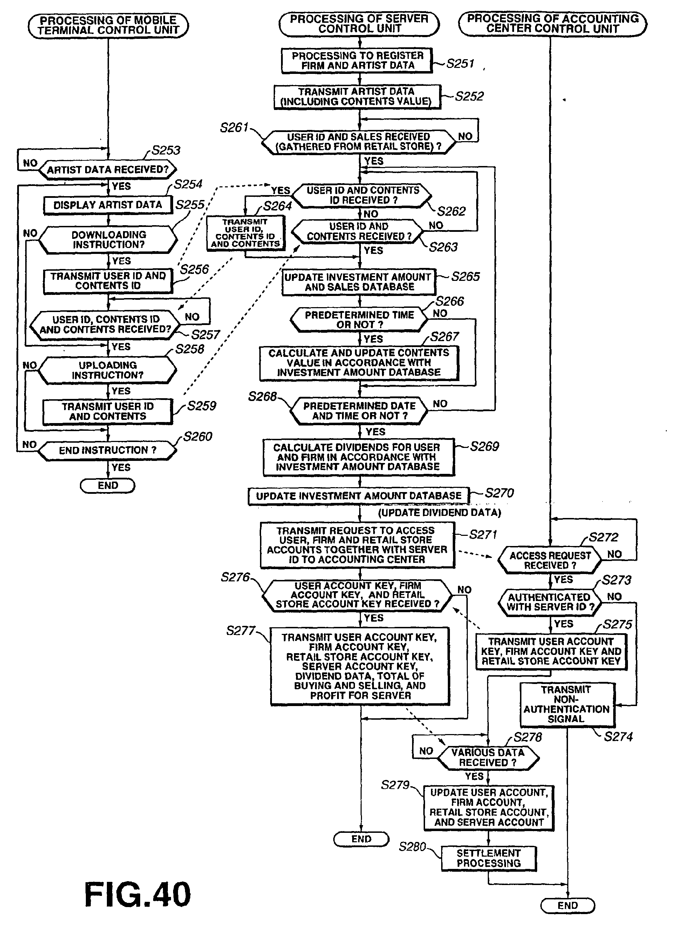

The operation in the case where a user of the mobile terminal device 80 downloads and uploads the contents registered to the server device 10 by an artist belonging to a music firm or a record company will now be described with reference to Fig.40. In this example, dividends are given to the user, the firm and a retail store in accordance with the sales data provided from the retail store or the music firm.

At step S251, the control unit 16 of the server device 10 carries out the processing to register firm and artist data. Specifically, the artist or a person related with the firm directly accesses the server device 10 by using his/her own PC or the like, and transmits firm ID, artist ID and contents to the server device 10. The server device 10 stores the firm ID, the artist ID, the contents ID, the contents data indicated by the contents ID, and the initial price of the contents, that is, the starting value of the contents (contents value), into a database stored in the storage unit 11 shown in the following Table 6(A).

## Table 6

(A)

| Server ID | | | | | | | | |
|---|---|---|---|---|---|---|---|---|
| Firm ID | Artist ID | Contents ID | Contents Value | Retail store ID | Sales | User ID | Number of down-loads | Number of uploads |
| ○○○ Firm | MIKE | AAA | 100 | red | 100000 | A123B | 1 | 0 |
| | | | | yellow | 150000 | A325B | 2 | 1 |
| | | | | blue | 10000 | A457C | 5 | 1 |
| | | AAA2 | 120 | | 0 | B875D | 2 | 2 |
| | CAR | BBB | 200 | brown | 20000 | D451A | 2 | 1 |
| △△△ Firm | CAT | CCC | 1000 | black | 120000 | F719B | 2 | 0 |

| Total selling/ buying | Server profit | Dividend for user | Dividend for firm | Dividend for retail store | User account key | Firm account key | Server account key | Retail store account key |
|---|---|---|---|---|---|---|---|---|
| 100 | 260000 | 1 | 200000 | 1000 | k1 | X1 | Se | Y1 |
| 100 | | 1 | | 1500 | k2 | | | Y2 |
| 400 | | 4 | | 100 | k3 | | | Y3 |
| 0 | | 0 | | 0 | k4 | | | |
| 200 | | 10 | | 200 | k5 | | | Y4 |
| 2000 | | 100 | | 1200 | k6 | X2 | | Y5 |

(B)

| ID | Bank ID | Account number | Date | Expenditure/ receipt record | Remainder | Account key |
|---|---|---|---|---|---|---|
| A123B | ○△ Bank | 123456789 | 2000.02.10 | 10000 | 110000 | k1 |
| | | | 2000.02.13 | 10000 | 120000 | |
| | | | 2000.02.15 | -20000 | 100000 | |
| | | | 2000.02.15 | -20000 | 80000 | |
| | | | 2000.02.18 | -30000 | 50000 | |
| | | | 2000.02.20 | -10000 | 40000 | |
| △△△ Firm | ×■ Bank | 321456785 | 2000.02.05 | -20000 | 100000 | X2 |
| | | | 2000.02.13 | -10000 | 90000 | |
| red | △◎ Bank | 321456785 | 2000.02.06 | -20000 | 100000 | Y1 |
| | | | 2000.02.13 | -10000 | 90000 | |
| SERVER1 | △△ Bank | 548795431 | 2000.02.13 | 260000 | 260000 | Se |

At step S252, the control unit 16 of the server device 10 transmits the artist data to the mobile terminal device 80. The artist data includes the artist ID, the contents ID and the contents value. The control unit 87 of the mobile terminal device 80, which is in the standby state for receiving the artist data, completes reception of the artist data at step S253 and the goes to step S254. If the artist data is not received, the control unit 87 repeats step S253. When the artist data is received, the control unit 87 displays the artist data on the display unit 95 at step S254.

At step S255, the control unit 87 accepts an instruction to download the contents data corresponding to the operation of the instructing unit 94 by the user. Then, the processing goes to step S256 and the control unit 87 transmits the user ID and the contents ID to the server device 10. The control unit 87 of the mobile terminal device 80, which is in the standby state for receiving the user ID, the contents ID and the contents data transmitted from the server device 10, completes reception of the user ID, the contents ID and the contents data at step S257. Then, the processing goes to step S258. If there is no instruction to download the contents data by the user at step S255, the control unit 87 goes to step S258.

At step S258, an instruction to upload the contents which are previously downloaded by the user and stored in RAM 93 is supplied to the control unit 87 from the instructing unit 94. Then, the processing goes to step S259 and the control unit 87 transmits the user ID and the contents to the server device 10. If there is no instruction to upload the contents by the user at step S258, the control unit 87 goes to step S260.

At step S260, the control unit 87 determines whether there is an end instruction from the user or not. If there is no instruction, the processing returns to step S254 and the control unit 87 displays the same artist data again or displays the artist data which is already stored in the storage unit 11. On the other hand, if it is determined that there is an end instruction from the user, the control unit 87 ends the processing at the mobile terminal device 80.

If the control unit 16 of the server device 10, which is in the standby state for reception, receives the sales data of the contents ID recorded in the database of Table 6(A) at step S261, the processing goes to step S262. If the sales data is not received, step S261 is repeated. As for the sales data, the music firm or the retail store directly accesses the server device 10 by using its own PC or the like and transmits the retail store ID (or music firm ID), the contents ID and the sales data to the server device 10. If the retail store ID, the contents ID and the sales data corresponding to each sales ID are received at step S261, the control unit 16 goes to step S262.

If the control unit 16 of the server device 10, which is in the standby state for receiving the user ID and the contents ID, does not receive these data at step S262, the processing goes to step S263 and the control unit 16 enters the standby state for receiving the user ID and the contents. If neither the user ID nor the contents are received, the control unit 16 returns to step S262 and the control unit 16 continues the standby state for receiving the user ID, the contents ID and the contents.

If the control unit 16 receives the user ID and the contents ID at step S262, the control unit 16 at step S264 transmits the user ID, the contents ID and the contents data to the mobile terminal device 80 in response to the downloading request from the user received at step S262. On completion of transmission, the control unit 16 at step S265 updates the database shown in Table 6(A). For example, when the user ID and the contents ID are received (downloaded), the control unit 16 stores the user ID correspondingly to the contents ID. The control unit 16 increments the number of downloading times by one. Although downloading one content once is permitted by one downloading instruction from the user in this example, downloading the same content or different contents for a plurality of times may be permitted by one downloading operation.

When the user ID and the contents are received (uploaded), the control unit 16 increments the number of uploading times corresponding to the user ID and the contents, by one. Although uploading one content once is permitted by one uploading instruction from the user in this example, uploading the same content or different contents for a plurality of times may be permitted by one uploading operation. The control unit 16 stores the retail store ID and the sales data received at step S261, correspondingly to the contents ID.

On completion of update of the investment amount database at step S265, the control unit 16 goes to step S266. At step S266, the control unit 16 determines whether a predetermined time is counted or not. In this example, the predetermined time is 10 minutes. That is, at step S266, the control unit 16 controls the operation so that the processing goes to step S267 every 10 minutes.

At step S267, the control unit. 16 calculates the contents value in accordance with the investment amount database shown in Table 6(A) and updates the contents value and the total amount of selling/buying in the database. The methods for calculating the contents value are similar to the methods shown in Figs.33 to 36.

On completion of the calculation of the contents value and the update of the database by the control unit 16, the control unit 16 goes to step S268. At step S268, the control unit 16 judges, for example, whether one month has passed or not. If one month has not passed, the control unit 16 returns to step S262 to continue the standby state for downloading and uploading. In this flowchart, the processing for selling and buying through downloading and uploading and the processing for providing dividends for the user, the firm and the retail store are carried out by batch processing every month. The processing for selling and buying through downloading and uploading may also be carried out, for example, every 10 minutes.

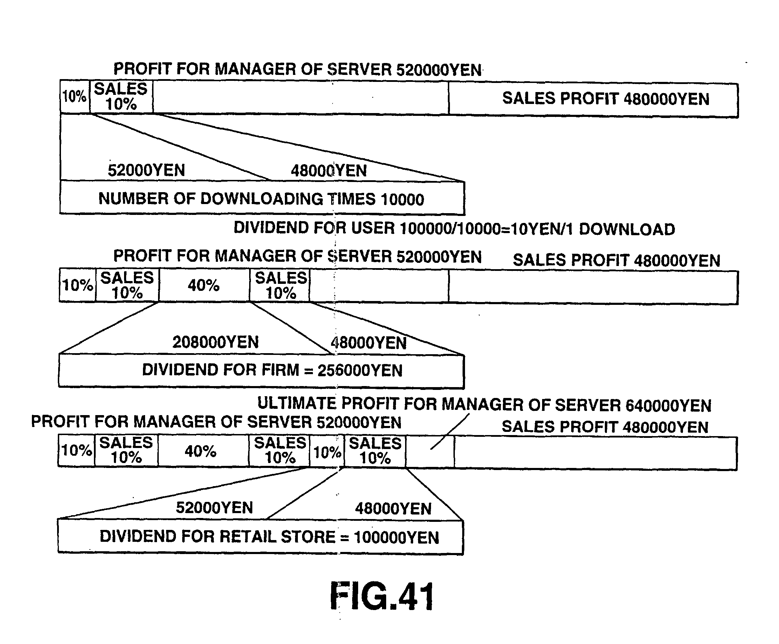

If the control unit 16 judges that one month has passed, the control unit 16 goes to step S269. At step S269, the control unit 16 calculates dividends for the user and the firm on the basis of the profit for the manager of the server device 10. The calculation of dividends will now be described with reference to Fig.41. In this case, dividends based on only one content are described. The dividends are calculated on the basis of the total profit of 520,000 yen and the sale profit of 480,000 yen shown in Figs.33 to 36. The dividend for the firm may also be calculated by distributing the profit of a plurality of contents for the manager of the server device 10.

First, as dividend for the user, 10% of the profit of 520,000 yen for the manager of the server device 10 and 10% of the sales profit of the content are allocated. Then, if the number of downloading times of this content at present (more precisely, the total number of units of this content currently owned by the user) is 10,000, a dividend of 10 yen per unit of this content is allocated to the user. For example, a user who owns three units of the same content receives a dividend of $10 \times 3 = 30$ yen.

As a dividend for the firm, 40% of the profit of 520,000 yen for the manager of the server device 10 and 10% of the sales profit are allocated. That is, the dividend for the firm is 208,000+48,000 yen.

As a dividend for the retail store, 10% of the profit of 520,000 yen for the manager of the server device 10 and 10% of the sales profit are allocated. That is, the dividend for the retail store is 52,000+48,000 yen. Then, the ultimate profit for the manager of the server device 10 is 64,000 yen.

Next, at step S270, the control unit 16 updates the investment amount database on the basis of the results of the calculation of the dividends for the user, the firm and the retail store, and the result of the calculation of the profit for the manager of the server device 10. Specifically, the control unit 16 updates server device profit data, user dividend data, firm dividend data, and retail store dividend data.

At step S271, the control unit 16 transmits the server ID and a request to access the user, firm and retail store accounts, to the accounting center 100 via the leased line 110. The control unit 103 of the accounting center 100, which is in the standby state for receiving an access request, receives at step S272 the server ID and the access request from the server device 10, and then goes to step S273. If the server ID and the access request are not received, step S272 is repeated. At step S273, the control unit 103 carries out authentication processing with the server ID. In this case, the user, the firm and the retail store designate bank accounts in advance for the service of this system, and by this bank account designation processing, the server ID of this system, and a user account key, a firm account key and a retail store account key are associated with each other and stored in the storage unit 104 of the accounting center 100. Therefore, the control unit 103 carries out authentication by collating the received server ID with the stored server ID.

When authentication is not made between the received server ID and the stored server ID, the control unit 103 goes to step S274 and transmits a non-authentication signal to the server device 10. When authentication is made, the control unit 103 goes to step S275 and transmits the user account key, the firm account key and the retail store account key to the server device 10.

At step S276, on receiving the non-authentication signal from the accounting center 100, the control unit 16 of the server device 10 ends the processing. On the other hand, on receiving the user account key, the firm account key and the retail store account key from the accounting center 100, the control unit 16 at step S277 transmits the user account key, the firm account key, the retail store account key, a server account key stored in advance in the server device, the total selling/buying data, user, firm and retail store dividends data, and server profit data, to the accounting center 100. On completion of the transmission, the server device 10 ends the processing.

The control unit 103 of the accounting center 100, which is in the standby state for receiving the user, firm and retail store account keys, receives the data at step S278 and then goes to step S279. If the data is not received, the control unit 103 repeats step S278. At step S279, the control unit 103 carries out the processing to update the database stored in the storage unit 104, which is shown in Table 6(B).

Specifically, the control unit 103 accesses user account management data by using the user account key and updates the date, the expenditure/receipt record and the remainder on the basis of the total of selling and buying by each user. The control unit 103 also updates the date, the expenditure/receipt record and the remainder on the basis of the dividend data for the user. Moreover, the control unit 103 accesses firm account management data by using the firm account key and updates the date, the expenditure/receipt record and the remainder on the basis of the dividend data for each firm. The control unit 103 also accesses retail store account management data by using the retail store account key and updates the date, the expenditure/receipt record and the remainder on the basis of the dividend data for each retail store. Furthermore, the control unit 103 accesses server account management data by using the server account key and updates the date, the expenditure/receipt record and the remainder on the basis of the server profit.

On the basis of the update of the account management data, the control unit 103 at step S280 automatically carries out settlement processing with respect to the bank account of the bank ID shown in Table 6(B) by transmitting and receiving data to and from the bank center 160 via the interface 101. That is, the update of the account management data is directly reflected on the update of the bank account data. On completion of the update of the account management data, the control unit 103 of the accounting center 100 ends the processing.

As described above, in the present system, the firm or the artist belonging to the firm registers the produced contents to the server device 10 and the user repeats downloading and uploading of the contents such as music tunes, by the processing of Fig.40. Since the price of the contents is controlled to fluctuate, the frequently downloaded content becomes expensive and gains a premium. Thus, a new game-like feature can be provided such that the user predicts and downloads a content which is likely to gain a premium.

Moreover, in the present system, the manager of the server device 10 can gain a profit from repeated downloading and uploading of contents by the user. In this third example, the control unit 16 carries out automatic settlement processing by calculating dividends for the user, the firm and the retail store in accordance with the sales profit based on the sales data of the contents recorded on media. Thus, the user can obtain compensation by discovering an artist who can achieve a hit. The firm can obtain large compensation by registering contents which can be downloaded frequently or which can make large sales. The retail store can gain not only a large sales profit but also a large dividend from the manager of the server device 10, by selling more of the contents. Furthermore, by distributing the dividend from the firm to the artist together with the salary as shown in Fig.41, the artist can gain a large profit.

Although uploading and downloading of contents are employed as transactions of financial goods in the above-described examples, any kind of transaction may be employed such as an ordinary stock transaction or dealings in futures. Whereas the contents value fluctuates in the above-described examples, the contents value may be fixed and dividends may be calculated in accordance with the sales. Moreover, though a portable telephone is used as a mobile terminal device in the above-described examples, any mobile unit may be used such as an automobile, a PDA or a portable computer.

The notifying means in the second embodiment is a display and vibrations, but it may also be a sound. For example, notification may be made by a beep tone stored in a memory in advance. Alternatively, contents (music tune) may be reproduced in accordance with the contents ID transmitted together with interrupt information.

The examples of downloading music tune data to a terminal device and reproducing the music tune data are described above. When the music tune data is received, the terminal device may carry out so-called streaming play for reproducing the data in real time without saving it into a storage unit.

Industrial Applicability

The present invention provide a place for artists who produce contents such as music, cartoons, paintings, novels and movies, to contribute their contents (works). Therefore, highly talented persons can be discovered. Since a contents purchaser is allowed to select ordinary accounting or accounting for an individual for the purpose of investment which enables investment in selling the contents, active circulation of the contents can be realized, by investing in a highly talented artist and receiving compensation for investment when the artist achieves a hit. Moreover, the present invention can provide a system such that fixed compensation is paid in accordance with the sales of contents and the amount of investment and thus the need to calculate fluctuating compensation based on the stock price index is eliminated, thus reducing the burden. Furthermore, by paying compensation in the form of not only money but also goods (tickets for the places of presentation of contents by artists, contents limited for investors only, and artist-related products), activation of the music market can be realized.

**Claims**

1. An investment system comprising:

   a server device for storing investment target data to be an investment target; and
   a terminal device capable of receiving the investment target data from the server device and capable of transmitting investment data for the investment target data to the server device.

2. The investment system as claimed in claim 1, wherein the terminal device further has terminal communication means for transmitting the investment data for the investment target data to the server device.

3. The investment system as claimed in claim 1, wherein the server device transmits price data of an investment ticket of the investment target data together with the investment target data to the terminal device, and the terminal device transmits data of the number of investment tickets to be purchased to the server device in accordance with the operation by a user.

4. The investment system as claimed in claim 3, further comprising another terminal device,
   wherein the server device accumulates the data of the number of investment tickets transmitted from the terminal device, and when the resultant total number of tickets exceeds a predetermined value, the server device transmits notification data made up of at least one of the price of the investment ticket, the total number of investment tickets and the number of investors to said another terminal device.

5. The investment system as claimed in claim 1, further comprising at least another terminal device for transmitting the investment target data to the server device,
   wherein the server device accumulates the investment target data transmitted from said another terminal device.

6. The investment system as claimed in claim 1, wherein the server device transmits the investment target data to the terminal device in response to a request signal from the terminal device and counts the number of transmission times of the investment target data, and when the number of transmission times exceeds a predetermined value, the server device carries out accounting to a user who receives the investment target data.

7. The investment system as claimed in claim 6, wherein when the number of transmission times of the investment target data exceeds the predetermined value, the server device stops accepting the investment data.

8. The investment system as claimed in claim 6, wherein the server device distributes a profit obtained in association with the investment target data, to a use who transmitted the investment data.

9. The investment system as claimed in claim 5, wherein the server device sets a retaining rate transmitted from said another terminal device as the retaining rate of an investment ticket issuer of the investment target data.

10. The investment system as claimed in claim 5, wherein the server device determines the retaining rate of an investment ticket issuer of the investment target data in accordance with the size of the issuer.

11. The investment system as claimed in claim 5, wherein the server device determines the retaining rate of an investment ticket issuer of the investment target data in accordance with the achievement of the investment target data.

12. The investment system as claimed in claim 5, wherein the server device determines the retaining rate of an investment ticket issuer of the investment target data in accordance with the popularity vote.

13. The investment system as claimed in claim 5, wherein the server device sets the retaining rate of an investment ticket issuer of the investment target data at 30% to 51%.

14. The investment system as claimed in claim 5, wherein when selling and buying of investment tickets of the investment target data is carried out between investors, the server device causes a transaction to be made on the basis of an asking price by the investors.

15. The investment system as claimed in claim 5, wherein when selling and buying of investment tickets of the investment target data is carried out between investors, the server device causes a transaction to be made at a floating price.

16. The investment system as claimed in claim 5, wherein when selling and buying of investment tickets of the investment target data is carried out between investors, the server device causes a transaction to be made in the order of lower prices in the selling order and in the order of higher prices in the purchasing order.

17. The investment system as claimed in claim 1, wherein the investment target data is music tune data, and the terminal device has music tune data reproducing means for reproducing music tune data downloaded from the server device and outputting music signals.

18. The investment system as claimed in claim 1, wherein the investment target data is artist data, and a user of the terminal device purchases an investment ticket on the basis of the artist data.

19. A data transmitting/receiving method comprising:

   a step of storing investment target data to be an investment target into a server device;
   a step of causing a terminal device to receive the investment target data from the server device; and
   a step of transmitting investment data for the investment target data from the terminal device to the server device.

20. The data transmitting/receiving method as claimed in claim 19, further comprising a step of causing the server device to transmit price data of an investment ticket of the investment target data together with the investment target data to the terminal device, and
   a step of transmitting data of the number of investment tickets to be purchased from the terminal device to the server device in accordance with the operation by a user.

21. The data transmitting/receiving method as claimed in claim 20, further comprising a step of causing the server device to accumulate the data of the number of investment tickets transmitted from the terminal device, and to transmit notification data made up of at least one of the price of the investment ticket, the total number of investment tickets and the number of investors to another terminal device when the resultant total number of tickets exceeds a predetermined value.

22. The data transmitting/receiving method as claimed in claim 19, further comprising a step of transmitting the investment target data from another terminal device to the server device, and
   a step of accumulating the investment target data transmitted from said another terminal device into the server device.

23. The data transmitting/receiving method as claimed in claim 19, further comprising a step of causing the server device to transmit the investment target data to the terminal device in response to a request signal from the terminal device, and
   a step of counting the number of transmission times of the investment target data, and carrying out accounting to a user who receives the investment target data when the number of transmission times exceeds a predetermined.

24. The data transmitting/receiving method as claimed in claim 23, further comprising a step of causing the server device to stop accepting the investment data when the number of transmission times of the investment target data exceeds the predetermined value.

**25.** The data transmitting/receiving method as claimed in claim 23, further comprising a step of causing the server device to distribute a profit obtained in association with the investment target data, to a use who transmitted the investment data.

**26.** The data transmitting/receiving method as claimed in claim 20, wherein the server device sets a retaining rate transmitted from said another terminal device as the retaining rate of an investment ticket issuer of the investment target data.

**27.** The data transmitting/receiving method as claimed in claim 20, wherein the server device determines the retaining rate of an investment ticket issuer of the investment target data in accordance with the size of the issuer.

**28.** The data transmitting/receiving method as claimed in claim 20, wherein the server device determines the retaining rate of an investment ticket issuer of the investment target data in accordance with the achievement of the investment target data.

**29.** The data transmitting/receiving method as claimed in claim 20, wherein the server device determines the retaining rate of an investment ticket issuer of the investment target data in accordance with the popularity vote.

**30.** The data transmitting/receiving method as claimed in claim 20, wherein the server device sets the retaining rate of an investment ticket issuer of the investment target data at 30% to 51%.

**31.** The data transmitting/receiving method as claimed in claim 20, wherein when selling and buying of investment tickets of the investment target data is carried out between investors, the server device causes a transaction to be made on the basis of an asking price by the investors.

**32.** The data transmitting/receiving method as claimed in claim 20, wherein when selling and buying of investment tickets of the investment target data is carried out between investors, the server device causes a transaction to be made at a floating price.

**33.** The data transmitting/receiving method as claimed in claim 20, wherein when selling and buying of investment tickets of the investment target data is carried out between investors, the server device causes a transaction to be made in the order of lower prices in the selling order and in the order of higher prices in the purchasing order.

**34.** An investment system comprising:

storage means for storing investment target data to be an investment target;
downloading means for downloading the investment target data in accordance with the operation by a user; and
uploading means for transmitting investment data for the investment target data downloaded by the downloading means, in accordance with the operation by the user.

**35.** The investment system as claimed in claim 34, further comprising receiving means for receiving the investment data,
transmitting means for transmitting the investment target data and transmitting an investment ticket corresponding to the investment data received by the receiving means to the downloading means, and
accounting means for carrying out accounting in accordance with the investment data received by the receiving means.

**36.** The investment system as claimed in claim 35, wherein the transmitting means transmits price data of the investment ticket together with the investment target data to the terminal device, and the uploading means transmits data of the number of investment tickets to be purchased to the receiving means in accordance with the operation by the user.

**37.** The investment system as claimed in claim 34, further comprising accumulating means for accumulating the data of the number of investment tickets transmitted from the uploading means,
wherein when the resultant total number of tickets exceeds a predetermined value, the transmitting means transmits notification data made up of at least one of the price of the investment ticket, the total number of investment tickets and the number of investors to another receiving means.

**38.** The investment system as claimed in claim 35, further comprising another uploading means for transmitting the investment target data to the receiving means,
wherein the accumulating means accumulates the investment target data received by the receiving means.

**39.** The investment system as claimed in claim 35, further comprising counting means for counting the number of transmission times of the investment target data,
wherein when the number of transmission times exceeds a predetermined value, accounting is carried out to a user who downloads the investment target data.

**40.** The investment system as claimed in claim 39, wherein when the number of transmission times of the investment target data exceeds the predetermined value, the receiving means prohibits reception of the investment data from the uploading means.

**41.** The investment system as claimed in claim 39, further comprising distributing means for distributing a profit obtained in association with the investment target data, to a use who transmitted the investment data.

**42.** The investment system as claimed in claim 38, further comprising determining means for setting a retaining rate transmitted from said another uploading means as the retaining rate of an investment ticket issuer of the investment target data.

**43.** The investment system as claimed in claim 38, further comprising determining means for determining the retaining rate of an investment ticket issuer of the investment target data in accordance with the size of the issuer.

**44.** The investment system as claimed in claim 38, further comprising determining means for determining the retaining rate of an investment ticket issuer of the investment target data in accordance with the achievement of the investment target data.

**45.** The investment system as claimed in claim 38, further comprising determining means for determining the retaining rate of an investment ticket issuer of the investment target data in accordance with the popularity vote.

**46.** The investment system as claimed in claim 38, further comprising determining means for prohibiting transmission of the investment ticket when a request for purchasing a predetermined number of investment tickets or more is made.

**47.** The investment system as claimed in claim 38, further comprising transaction means for causing a transaction to be made on the basis of an asking price by investors when selling and buying of investment tickets of the investment target data is carried out between the investors.

**48.** The investment system as claimed in claim 38, further comprising transaction means for causing a transaction to be made at a floating price when selling and buying of investment tickets of the investment target data is carried out between investors.

**49.** The investment system as claimed in claim 38, further comprising transaction means for causing a transaction to be made in the order of lower prices in the selling order and in the order of higher prices in the purchasing order when selling and buying of investment tickets of the investment target data is carried out between investors.

**50.** A server device comprising:

storage means for storing investment target data to be an investment target;
communication means for communicating with a terminal device which transmits investment data for the investment target data; and
control means for controlling the operation of the whole device;

wherein the control means transmits the investment target data stored in the storage means from the communication means to the terminal device, and receives the investment data for the investment target data transmitted to the terminal device, by the communication means.

**51.** The server device as claimed in claim 50, wherein the control means transmits price data of an investment ticket of the investment target data together with the investment target data when transmitting the investment target data to the terminal device, and receives data of the number of investment tickets to be purchased from the terminal device.

52. The server device as claimed in claim 51, wherein the control means accumulates the data of the number of investment tickets transmitted from the terminal device, and when the resultant total number of tickets exceeds a predetermined value, the control means transmits notification data made up of at least one of the price of the investment ticket, the total number of investment tickets and the number of investors to another terminal device.

53. The server device as claimed in claim 50, wherein the control means accumulates investment target data transmitted from another terminal device to the storage means.

54. The server device as claimed in claim 50, wherein the control means transmits the investment target data to the terminal device in response to a request signal from the terminal device and counts the number of transmission times of the investment target data, and when the number of transmission times exceeds a predetermined value, the control means carries out accounting to a user who receives the investment target data.

55. The server device as claimed in claim 54, wherein when the number of transmission times of the investment target data exceeds the predetermined value, the control means stops accepting the investment data.

56. The server device as claimed in claim 54, wherein the control means distributes a profit obtained in association with the investment target data, to a use who transmitted the investment data.

57. The server device as claimed in claim 53, wherein the control means sets a retaining rate transmitted from said another terminal device as the retaining rate of an investment ticket issuer of the investment target data.

58. The server device as claimed in claim 53, wherein the control means determines the retaining rate of an investment ticket issuer of the investment target data in accordance with the size of the issuer.

59. The server device as claimed in claim 53, wherein the control means determines the retaining rate of an investment ticket issuer of the investment target data in accordance with the achievement of the investment target data.

60. The server device as claimed in claim 53, wherein the control means determines the retaining rate of an investment ticket issuer of the investment target data in accordance with the popularity vote.

61. The server device as claimed in claim 53, wherein the control means prohibits transmission of the investment ticket when a request for purchasing a predetermined number of investment tickets or more is made.

62. The server device as claimed in claim 53, wherein when selling and buying of investment tickets of the investment target data is carried out between investors, the control means causes a transaction to be made on the basis of an asking price by the investors.

63. The server device as claimed in claim 53, wherein when selling and buying of investment tickets of the investment target data is carried out between investors, the control means causes a transaction to be made at a floating price.

64. The server device as claimed in claim 53, wherein when selling and buying of investment tickets of the investment target data is carried out between investors, the control means causes a transaction to be made in the order of lower prices in the selling order and in the order of higher prices in the purchasing order.

65. The server device as claimed in claim 50, wherein the investment target data is music tune data.

66. The server device as claimed in claim 50, wherein the investment target data is artist data.

67. A data transmitting/receiving method for a server device comprising:

a step of storing investment target data to be an investment target into storage means;
a step of transmitting the investment target data stored in the storage means to a terminal device; and
a step of receiving investment data for the investment target data transmitted to the terminal device.

**68.** The data transmitting/receiving method for a server device as claimed in claim 67, wherein price data of an investment ticket of the investment target data is transmitted together with the investment target data when transmitting the investment target data to the terminal device, and data of the number of investment tickets to be purchased is received from the terminal device.

**69.** The data transmitting/receiving method for a server device as claimed in claim 67, further comprising a step of accumulating the data of the number of investment tickets transmitted from the terminal device, and transmitting notification data made up of at least one of the price of the investment ticket, the total number of investment tickets and the number of investors to another terminal device when the resultant total number of tickets exceeds a predetermined value.

**70.** The data transmitting/receiving method for a server device as claimed in claim 67, wherein the investment target data transmitted from another terminal device is stored into the storage means.

**71.** The data transmitting/receiving method for a server device as claimed in claim 67, further comprising a step of transmitting the investment target data to the terminal device in response to a request signal from the terminal device, then counting the number of transmission times of the investment target data, and carrying out accounting to a user who receives the investment target data when the number of transmission times exceeds a predetermined value.

**72.** The data transmitting/receiving method for a server device as claimed in claim 71, further comprising a step of stopping acceptance of the investment data when the number of transmission times of the investment target data exceeds the predetermined value.

**73.** The data transmitting/receiving method for a server device as claimed in claim 71, further comprising a step of distributing a profit obtained in association with the investment target data, to a use who transmitted the investment data.

**74.** The data transmitting/receiving method for a server device as claimed in claim 70, further comprising a step of setting a retaining rate transmitted from said another terminal device as the retaining rate of an investment ticket issuer of the investment target data.

**75.** The data transmitting/receiving method for a server device as claimed in claim 70, further comprising a step of determining the retaining rate of an investment ticket issuer of the investment target data in accordance with the size of the issuer.

**76.** The data transmitting/receiving method for a server device as claimed in claim 70, further comprising a step of determining the retaining rate of an investment ticket issuer of the investment target data in accordance with the achievement of the investment target data.

**77.** The data transmitting/receiving method for a server device as claimed in claim 70, further comprising a step of determining the retaining rate of an investment ticket issuer of the investment target data in accordance with the popularity vote.

**78.** The data transmitting/receiving method for a server device as claimed in claim 70, further comprising a step of prohibiting transmission of the investment ticket when a request for purchasing a predetermined number of investment tickets or more is made.

**79.** The data transmitting/receiving method for a server device as claimed in claim 70, further comprising a step of causing a transaction to be made on the basis of an asking price by investors when selling and buying of investment tickets of the investment target data is carried out between the investors.

**80.** The data transmitting/receiving method for a server device as claimed in claim 70, further comprising a step of causing a transaction to be made at a floating price when selling and buying of investment tickets of the investment target data is carried out between investors.

**81.** The data transmitting/receiving method for a server device as claimed in claim 70, further comprising a step of causing a transaction to be made in the order of lower prices in the selling order and in the order of higher prices in the purchasing order when selling and buying of investment tickets of the investment target data is carried out between investors.

**82.** A terminal device comprising:

communication means for communicating with a server device in which investment target data is stored; and control means for controlling the operation of the whole device;

wherein the control means receives the investment target data from the server device in accordance with the operation by a user, and transmits investment data for the received investment target data in accordance with the operation by the user.

**83.** The terminal device as claimed in claim 82, wherein the control means receives from the server device an investment ticket corresponding to the investment data transmitted to the server device.

**84.** The terminal device as claimed in claim 82, wherein the control means receives price data of the investment ticket together with the investment target data from the server device, and transmits data of the number of investment tickets to be purchased to the server device in accordance with the operation by the user.

**85.** The terminal device as claimed in claim 82, wherein the control means transmits an asking price of the investment ticket to the server device.

**86.** The terminal device as claimed in claim 82, wherein the control means transmits instruction data to the effect that selling and buying of the investment ticket is carried out at a floating price, to the server device.

**87.** The terminal device as claimed in claim 82, wherein the control means transmits a price margin in selling and buying the investment ticket.

**88.** The terminal device as claimed in claim 82, further comprising reproducing means for reproducing the investment target data received from the server device.

**89.** A data transmitting/receiving method for a terminal device comprising:

a step of receiving investment target data from a server device in accordance with the operation by a user; and a step of transmitting investment data for the received investment target data to the server device.

**90.** The data transmitting/receiving method for a terminal device as claimed in claim 89, further comprising a step of receiving from the server device an investment ticket corresponding to the investment data transmitted to the server device.

**91.** The data transmitting/receiving method for a terminal device as claimed in claim 89, wherein price data of the investment ticket is received together with the investment target data from the server device, and data of the number of investment tickets to be purchased is transmitted to the server device in accordance with the operation by the user.

**92.** Thedatatransmitting/receiving method for a terminal device as claimed in claim 89, further comprising a step of transmitting an asking price of the investment ticket to the server device.

**93.** The data transmitting/receiving method for a terminal device as claimed in claim 89, further comprising a step of transmitting instruction data to the effect that selling and buying of the investment ticket is carried out at a floating price, to the server device.

**94.** The data transmitting/receiving method for a terminal device as claimed in claim 89, further comprising a step of transmitting a price margin in selling and buying the investment ticket.

**95.** The data transmitting/receiving method for a terminal device as claimed in claim 89, further comprising a step of reproducing the investment target data when the investment target data is received.

**96.** An investment system comprising:

memory means for storing contents produced by a contents producer;
selecting means for selecting a desired content from the contents stored in the memory means;
recording means for recording the content selected by the selecting means onto a recording medium;
first accounting instructing means for instructing to carry out accounting for the recording to the recording medium; and
second accounting instructing means for instructing to carry out accounting for investment associated with the content.

**97.** The investment system as claimed in claim 96, further comprising supply means for supplying compensation corresponding to the amount of accounting, to a user who instructed accounting with respect to investment by the second accounting instructing means.

**98.** The investment system as claimed in claim 97, wherein the supply means supplies compensation corresponding to the sales of the contents, to the user.

**99.** The investment system as claimed in claim 97, wherein the supply means pays an amount equivalent to the compensation to an account of the user.

**100.** The investment system as claimed in claim 97, wherein the supply means provides new contents produced by the contents producer to the user, free of charge.

**101.** The investment system as claimed in claim 97, wherein the supply means outputs an instruction to deliver a related product of the contents producer to the user.

**102.** The investment system as claimed in claim 97, wherein the supply means outputs an instruction to deliver a ticket for a contents presentation meeting by the contents producer, to the user.

**103.** The investment system as claimed in claim 97, wherein the supply means provides compensation corresponding to the degree of popularity with respect to investment in the contents, to the user.

**104.** The investment system as claimed in claim 96, wherein the contents are one of a text, music, and a movie.

**105.** The investment system as claimed in claim 96, further comprising output means for outputting the selected content.

**106.** The investment system as claimed in claim 105, wherein the output means one of printing means for printing on paper, a speaker for outputting a sound, and display means for outputting an image.

**107.** The investment system as claimed in claim 96, wherein the recording medium is one of paper, a disc, and a semiconductor memory.

**108.** A data transmitting/receiving method comprising:

a step of storing contents produced by a contents producer into memory means;
a step of recording a content selected by selecting means onto a recording medium by recording means;
a step of instructing to carry out accounting for the recording to the recording medium; and
a step of instructing to carry out accounting for investment associated with the content.

**109.** The data transmitting/receiving method as claimed in claim 108, further comprising a step of supplying, by supply means, compensation corresponding to the amount of accounting to a user who instructed accounting with respect to investment.

**110.** The data transmitting/receiving method as claimed in claim 109, wherein the supply means supplies compensation corresponding to the sales of the contents, to the user.

**111.** The data transmitting/receiving method as claimed in claim 109, wherein the supply means pays an amount equivalent to the compensation to an account of the user.

**112.** The data transmitting/receiving method as claimed in claim 109, wherein the supply means provides new contents produced by the contents producer to the user, free of charge.

**113.** The data transmitting/receiving method as claimed in claim 109, wherein the supply means outputs an instruction to deliver a related product of the contents producer to the user.

**114.** The data transmitting/receiving method as claimed in claim 109, wherein the supply means outputs an instruction to deliver a ticket for a contents presentation meeting by the contents producer, to the user.

**115.** The data transmitting/receiving method as claimed in claim 109, wherein the supply means provides compensation corresponding to the degree of popularity with respect to investment in the contents, to the user.

**116.** An investment system comprising:

storage means in which a database having contents data stored therein is provided;
first selecting means for selecting the contents data stored in the storage means;
receiving means for receiving the contents data stored in the storage means and selected by the first selecting means;
memory means in which the contents data received by the receiving means is recorded;
second selecting means for selecting the contents data recorded in the memory means;
transmitting means for transmitting the contents data recorded in the memory means and selected by the second selecting means; and
providing means for providing the compensation for a user when the contents data recorded in the memory means is transmitted.

**117.** The investment system as claimed in claim 116, further comprising settlement means for charging an amount corresponding to the received contents data to the user in response to the reception and paying compensation corresponding to the transmitted contents data to the user in response to the transmission.

**118.** The investment system as claimed in claim 117, further comprising value calculating means for calculating the value of the contents data,
wherein the value calculating means calculates the value of the contents data on the basis of the total number of receptions by the receiving means and the total number of transmissions by the transmitting means for each contents data.

**119.** The investment system as claimed in claim 117, wherein when carrying out accounting corresponding to the contents data received by the receiving means, the settlement means charges an amount corresponding to the value of the contents data calculated by the value calculating means.

**120.** The investment system as claimed in claim 117, wherein paying to the user the compensation for the contents data transmitted by the transmitting means, the settlement means pays an amount corresponding to the value of the contents data calculated by the value calculating means.

**121.** A data transmitting/receiving method comprising:

a step of selecting contents data stored in storage means by first selecting means;
a step of receiving, by receiving means, the contents data stored in the storage means and selected by the first selecting means;
a step of recording the contents data received by the receiving means to memory means;
a step of selecting the contents data recorded in the memory means by second selecting means;
a step of transmitting the contents data recorded in the memory means and selected by the second selecting means; and
a step of providing the compensation for a user by providing means when the contents data recorded in the memory means is transmitted.

**122.** The data transmitting/receiving method as claimed in claim 121, further comprising a step of charging an amount corresponding to the received contents data to the user in response to the reception, by settlement means, and
a step of paying compensation corresponding to the transmitted contents data to the user in response to the transmission, by the settlement means.

**123.** The data transmitting/receiving method as claimed in claim 122, further comprising a step of calculating the value of the contents data on the basis of the total number of receptions by the receiving means and the total number of transmissions by the transmitting means for each contents data, by the value calculating means.

**124.** The data transmitting/receiving method as claimed in claim 122, wherein when carrying out accounting corresponding to the contents data received by the receiving means, an amount corresponding to the value of the contents data calculated by the value calculating means is charged by the value calculating means.

**125.** The data transmitting/receiving method as claimed in claim 122, wherein paying to the user the compensation for the contents data transmitted by the transmitting means, an amount corresponding to the value of the contents data calculated by the value calculating means is paid by the settlement means.

**FIG.1**

EP 1 209 608 A1

EP 1 209 608 A1

```
INVESTMENT CLIENT            SERVER                  ARTIST CLIENT
CONTROL PROCESSING      CONTROL PROCESSING       CONTROL PROCESSING
```

- INVESTMENT CLIENT CONTROL PROCESSING
- SERVER CONTROL PROCESSING
  - S2 — RECEIVE INVESTMENT TARGET DATA
  - S3 — PROCESSING TO REGISTER INVESTMENT TARGET DATA
- ARTIST CLIENT CONTROL PROCESSING
  - S1 — UPLOAD INVESTMENT TARGET DATA

- S4 — ACCESS HP
- S5 — DOWNLOADING OPERATION ?
  - NO → LOG-OUT
  - YES
- S6 — TRANSMIT INVESTMENT TARGET DATA
- S7 — DOWNLOAD INVESTMENT TARGET DATA
- S8 — INVESTMENT OPERATION ?
  - NO → LOG-OUT
  - YES
- S9 — TRANSMIT NUMBER OF TICKETS TO BE PURCHASED
- S10 — RECEIVE DATA OF NUMBER OF TICKETS TO BE PURCHASED
- S11 — MANAGE NUMBER OF INVESTORS, AMOUNT OF INVESTMENT AND PRICE OF TICKET

**FIG.2**

FIG.3

EP 1 209 608 A1

EP 1 209 608 A1

```
   INVESTOR CLIENT                    SERVER                        FIRM CLIENT
 CONTROL PROCESSING            CONTROL PROCESSING              CONTROL PROCESSING
                                                          S32                            S31
                              RECEIVE INVESTMENT TARGET DATA  ◄----  UPLOAD INVESTMENT TARGET DATA

                                 PROCESSING TO REGISTER        S33
                                 INVESTMENT TARGET DATA

                S35                                            S34
  ACCESS HP OF RECORD COMPANY  ---------►   PUBLICLY PRESENT ON HP

              S36
        NO   DOWNLOADING
 LOG-OUT ◄---  OPERATION ?

        S38          YES  ------------------------------------►        S37
  DOWNLOAD INVESTMENT TARGET DATA  ◄-----  TRANSMIT INVESTMENT TARGET DATA

              S39
        NO   PURCHASING
 LOG-OUT ◄---  OPERATION ?

             YES        S40                                    S41
  TRANSMIT PURCHASE OF TICKETS  ---------►  RECEIVE PURCHASE OF TICKETS

                                                               S42
                                          PROCESSING TO TOTAL SALES

                S45                                            S43
  ACCESS HP OF RECORD COMPANY  --------    CALCULATE PRICE OF TICKET

              S46                                              S44
        NO   SELLING/PURCHASING           PUBLICLY PRESENT PRICE
 LOG-OUT ◄---  OPERATION ?                   OF TICKET, ETC.

             YES        S47                                    S48
    TRANSMIT SELLING/        --------►       RECEIVE SELLING/
  PURCHASE OF TICKETS                       PURCHASE OF TICKETS
```

## FIG.4

FIG.5

FIG.6

MUSIC
FIRM/INDIVIDUAL
ARTIST CLIENT
CONTROL
PROCESSING

INVESTOR CLIENT
CONTROL PROCESSING

SERVER CONTROL
PROCESSING

VIEWER/LISTENER CLIENT
CONTROL PROCESSING

S72
RECEIVE INVESTMENT
TARGET DATA

S71
UPLOAD
INVESTMENT
TARGET DATA

S73
PROCESSING TO
REGISTER INVESTMENT
TARGET DATA

S79
ACCESS HP

S74
PUBLICLY PRESENT
ON HP

S75
ACCESS HP

S80
DOWNLOADING
OPERATION ?

NO

LOG-OUT

YES

S76
DOWNLOADING
OPERATION ?

NO

LOG-OUT

YES

S77
TRANSMIT MUSIC TUNE

S82
DOWNLOAD
INVESTMENT
TARGET DATA

S81
TRANSMIT INVESTMENT
TARGET DATA

S78
DOWNLOAD MUSIC
TUNE FREE OF CHARGE

S83
PURCHASING
OPERATION ?

NO

LOG-OUT

YES

S84
TRANSMIT
PURCHASE OF
TICKETS

S85
RECEIVE PURCHASE
OF TICKETS

S86
COUNT NUMBER OF
USERS WHO DOWNLOAD

S87
NUMBER OF USERS WHO
DOWNLOAD≧THRESHOLD ?

NO

YES

S88
END INVESTMENT
ACCEPTANCE

S90
RECEIVE END OF
INVESTMENT
ACCEPTANCE

S89
NOTIFY OF END OF
INVESTMENT ACCEPTANCE

S91
NOTIFY OF CHANGE
TO CHARGEABLE
DOWNLOADING ON HP

S92
ACCESS HP

S93
DOWNLOADING
OPERATION ?

NO

LOG-OUT

YES

S94
TRANSMIT MUSIC TUNE

S96
PREDETERMINED
PERIOD PASSED ?

NO

YES

S95
DOWNLOAD
CHARGEABLE
MUSIC TUNE

S97
CALCULATE DIVIDEND

S99
RECEIVE NOTICE
OF DIVIDEND

S98
TRANSMIT NOTICE
OF DIVIDEND

# FIG.7

INVESTOR CLIENT
CONTROL PROCESSING

SERVER CONTROL
PROCESSING

*S91*

NOTIFY OF
CHANGE TO
CHARGEABLE
DOWNLOADING
ON HP

*S100*

SEEK NEW
INVESTOR ?

NO

YES

*S101*

START
APPLICATION
BY INVESTOR

*S103*

RECEIVE START
OF APPLICATION
BY INVESTOR

TRANSMIT START
OF APPLICATION
BY INVESTOR

*S102*

# FIG.8

MUSIC FIRM/INDIVIDUAL ARTIST CLIENT CONTROL PROCESSING

INVESTOR CLIENT CONTROL PROCESSING

SERVER CONTROL PROCESSING

VIEWER/LISTENER CLIENT CONTROL PROCESSING

UPLOAD INVESTMENT TARGET DATA — S501

RECEIVE INVESTMENT TARGET DATA — S502

PROCESSING TO REGISTER INVESTMENT TARGET DATA — S504

S506 — ACCESS HP

PUBLICLY PRESENT ON HP — S505

S507 — DOWNLOADING OPERATION ?

NO

S510 — LOG-OUT

YES

ACCESS HP — S515

S509 — DOWNLOAD INVESTMENT TARGET DATA

TRANSMIT INVESTMENT TARGET DATA — S508

DOWNLOADING OPERATION ? — S516

NO S519

YES

LOG-OUT

S511 — PURCHASING OPERATION ?

NO

S513 — LOG-OUT

YES

S514 — RECEIVE PURCHASE OF TICKETS

DOWNLOAD MUSIC TUNE FREE OF CHARGE — S518

S512 — TRANSMIT PURCHASE OF TICKETS

S517 — TRANSMIT MUSIC TUNE

REPRODUCE — S520

COUNT NUMBER OF USERS WHO DOWNLOAD — S521

NUMBER OF USERS WHO DOWNLOAD≧FIRST THRESHOLD ? — S522

NO

YES

ACCESS HP — S526

NOTIFY OF CHANGE TO CHARGEABLE DOWNLOADING (FIRST PRICE) ON HP — S523

DOWNLOADING OPERATION ? — S527

NO S530

YES

LOG-OUT

S525 — RECEIVE CHANGE TO CHARGEABLE DOWNLOADING

NOTIFY OF CHANGE TO CHARGEABLE DOWNLOADING — S524

S528 — TRANSMIT MUSIC TUNE

DOWNLOAD MUSIC TUNE AT CHARGE — S529

REPRODUCE — S531

COUNT NUMBER OF USERS WHO DOWNLOAD — S532

NUMBER OF USERS WHO DOWNLOAD≧SECOND THRESHOLD ? — S533

NO

YES

NOTIFY OF CHANGE TO CHARGEABLE DOWNLOADING (SECOND PRICE) ON HP — S534

S536 — RECEIVE CHANGE TO CHARGEABLE DOWNLOADING

NOTIFY OF CHANGE TO CHARGEABLE DOWNLOADING — S535

# FIG.9

**FIG.10**

```
┌─────────────────────┐     ┌──────────────────┐     ┌──────────────────┐
│ MUSIC FIRM/INDIVIDUAL│     │  SERVER CONTROL  │     │  INVESTOR CLIENT │
│    ARTIST CLIENT     │     │    PROCESSING    │     │ CONTROL PROCESSING│
│  CONTROL PROCESSING  │     └──────────────────┘     └──────────────────┘
└─────────────────────┘
```

S561
TRANSMIT INVESTMENT TARGET DATA, NUMBER OF ISSUED INVESTMENT TICKETS, AND RETAINING RATE

S562
RECEIVE INVESTMENT TARGET DATA, NUMBER OF ISSUED INVESTMENT TICKETS, AND RETAINING RATE

S565
ACCESS HP

S563
REGISTER

S566
DOWNLOADING OPERATION ?     NO   S568
LOG-OUT

S564
PUBLICLY PRESENT START OF INVESTOR SEEKING ON HP

S567   YES
TRANSMIT DOWNLOADING REQUEST

S569
TRANSMIT INVESTMENT TARGET DATA, ETC.

RECEIVE INVESTMENT TARGET DATA, ETC.
S570

S572
RECEIVE INVESTOR INFORMATION

TRANSMIT INVESTOR INFORMATION
S571

S573
EXAMINE

S574
PASSED ?     NO

S576
TRANSMIT NOTICE OF FAILURE

YES

S575
TRANSMIT NOTICE OF SUCCESS AND INVESTOR ID

S577
SELECT INVESTMENT TARGET DATA

S579
RECEIVE INVESTMENT DATA AND INVESTOR ID

TRANSMIT INVESTMENT DATA AND INVESTOR ID
S578

S580
AUTHENTICATED ?     NO

S582
TRANSMIT NOTICE OF AUTHENTICATION FAILURE

YES

S581
NO     PREDETERMINED PERIOD PASSED ?

S583   YES
COMPLETE APPLICATION

S584
EXCEED NUMBER OF SALES ?     NO

YES

S586
TRANSMIT INVESTMENT TICKETS

S585
DRAW ?     NO

YES

S588
TRANSMIT NOTICE OF FAILURE IN DRAW

S587
TRANSMIT INVESTMENT TICKETS

S589
RECEIVE INVESTMENT TICKETS

# FIG.11

**FIG.12**

```
MUSIC FIRM/INDIVIDUAL          SERVER CONTROL              INVESTOR CLIENT
ARTIST CLIENT                   PROCESSING                 CONTROL PROCESSING
CONTROL PROCESSING
```

S592 — ACCESS HP

S591 — PUBLICLY PRESENT ON HP THAT INVESTMENT TICKET RETAINING RATE VARIES DEPENDING ON SIZE OF ISSUER

S593 — TRANSMIT INVESTMENT TARGET DATA, NUMBER OF ISSUED INVESTMENT TICKETS, AND SIZE

S594 — RECEIVE INVESTMENT TARGET DATA, NUMBER OF ISSUED INVESTMENT TICKETS, AND SIZE

S597 — ACCESS HP

S595 — REGISTER AND SET RETAINING RATE BY SIZE

S598 — DOWNLOADING OPERATION ?  NO  S600 — LOG-OUT

S596 — PUBLICLY PRESENT START OF INVESTOR SEEKING ON HP

YES

S599 — TRANSMIT DOWNLOADING REQUEST

S601 — TRANSMIT INVESTMENT TARGET DATA, ETC.

S602 — RECEIVE INVESTMENT TARGET DATA, ETC.

S604 — RECEIVE INVESTOR INFORMATION

TRANSMIT INVESTOR INFORMATION — S603

S605 — EXAMINE

S606 — PASSED ?  NO

S608 — TRANSMIT NOTICE OF FAILURE

YES

S607 — TRANSMIT NOTICE OF SUCCESS AND INVESTOR ID

S609 — SELECT INVESTMENT TARGET DATA

S611 — RECEIVE INVESTMENT DATA AND INVESTOR ID

TRANSMIT INVESTMENT DATA AND INVESTOR ID — S610

S612 — AUTHENTICATED ?  NO

S614 — TRANSMIT NOTICE OF AUTHENTICATION FAILURE

YES

S613 — PREDETERMINED PERIOD PASSED ?  NO

YES

S615 — COMPLETE APPLICATION

S616 — EXCEED NUMBER OF SALES ?  NO

S618 — TRANSMIT INVESTMENT TICKETS

YES

S617 — DRAW ?  NO

S620 — TRANSMIT NOTICE OF FAILURE IN DRAW

YES

S619 — TRANSMIT INVESTMENT TICKETS

S621 — RECEIVE INVESTMENT TICKETS

FIG.13

**FIG.14**

ESTIMATED
TOTAL AMOUNT
OF FUNDS

ACHIEVEMENT DATA
(DEGREE OF POPULARITY)

## FIG.15

RETAINING
RATE

100%

51%

30%

ESTIMATED
TOTAL AMOUNT OF FUNDS

## FIG.16

MUSIC FIRM/INDIVIDUAL ARTIST CLIENT CONTROL PROCESSING

SERVER CONTROL PROCESSING

VIEWER/LISTENER CLIENT CONTROL PROCESSING

S702 — ACCESS HP

S701 — PUBLICLY PRESENT ON HP THAT DESIRED TOTAL AMOUNT OF FUNDS IS NECESSARY AND THAT ESTIMATED TOTAL AMOUNT OF FUNDS IS CALCULATED FROM POPULARITY VOTE

S703 — TRANSMIT INVESTMENT TARGET DATA, NUMBER OF ISSUED INVESTMENT TICKETS, AND DESIRED TOTAL AMOUNT OF FUNDS

S704 — RECEIVE INVESTMENT TARGET DATA AND NUMBER ON ISSUED INVESTMENT TICKETS

S706 — ACCESS HP

S705 — PUBLICLY PRESENT INVESTMENT TARGET DATA ON HP TO TAKE POPULARITY VOTE

S707 — DOWNLOADING OPERATION ? — NO → LOG-OUT — S709

YES

S708 — TRANSMIT DOWNLOADING REQUEST

S710 — TRANSMIT INVESTMENT TARGET DATA, ETC.

S715 — RECEIVE SELECTED DATA

S711 — RECEIVE INVESTMENT TARGET DATA, ETC.

S716 — PREDETERMINED PERIOD PASSED ? — NO

YES

S712 — REPRODUCE

S717 — TOTAL RESULT OF VOTE

S713 — SELECT INVESTMENT TARGET DATA

S718 — CALCULATE ESTIMATED TOTAL AMOUNT OF FUNDS CORRESPONDING TO POPULARITY VOTE

S722 — RECEIVE RANK OF INVESTMENT TICKET AND ESTIMATED TOTAL AMOUNT OF FUNDS BASED ON RANK

S719 — RANK INVESTMENT TICKET

S714 — TRANSMIT SELECTED DATA

S720 — CALCULATE ESTIMATED TOTAL AMOUNTS OF FUNDS BASED ON RANKED INVESTMENT TICKET

S723 — PAY(DESIRED TOTAL AMOUNT OF FUNDS) - (ESTIMATED TOTAL AMOUNT OF FUNDS BASED ON RANK)? — NO

YES — S724

S721 — TRANSMIT RANK OF INVESTMENT TICKET AND ESTIMATED TOTAL AMOUNT OF FUNDS BASED ON RANK

S724 — TRANSMIT PAYMENT DATA

S725 — TRANSMIT AGREEMENT DATA INDICATING AGREEMENT TO SEEKING WITH ESTIMATED TOTAL AMOUNT OF FUNDS BASED ON RANK

S726 — PAYMENT DATA RECEIVED ? — YES

NO

S727 — AGREEMENT DATA INDICATING AGREEMENT TO SEEKING WITH ESTIMATED TOTAL AMOUNT OF FUNDS BASED ON RANK RECEIVED ? — NO → LOG-OUT — S728

YES

S729 — DETERMINE RETAINING RATE

## FIG.17

| INVESTMENT TICKET ISSUER (RECORD COMPANY, MUSIC FIRM, INDIVIDUAL ARTIST, ETC.) 30%~51% | GENERAL INVESTORS |
|---|---|

← ──────── ISSUED INVESTMENT TICKETS ──────── →

## FIG.18

## FIG.19

INVESTOR CLIENT CONTROL PROCESSING (SELLING SIDE)

SERVER CONTROL PROCESSING

INVESTOR CLIENT CONTROL PROCESSING (PURCHASING SIDE)

S751 — TRANSMIT INVESTOR ID

S753 — RECEIVE INVESTOR ID

S752 — TRANSMIT INVESTOR ID

S754 — AUTHENTICATED ? → NO

YES

S755 — TRANSMIT AUTHENTICATION SIGNAL

S756 — TRANSMIT NON-AUTHENTICATION SIGNAL

S757 — TRANSMIT BRAND TO BE SOLD AND NUMBER OF TICKETS TO BE SOLD

S758 — RECEIVE BRAND TO BE SOLD AND NUMBER OF TICKETS TO BE SOLD

S759 — REGISTER SELLING ORDER TO DB

S761 — RECEIVE BRAND TO BE PURCHASED AND NUMBER OF TICKETS TO BE PURCHASED

S760 — TRANSMIT BRAND TO BE PURCHASED AND NUMBER OF TICKETS TO BE PURCHASED

S762 — REGISTER PURCHASING ORDER TO DB

S763 — MATCHING IN COURSE OF TRANSACTION → NO

YES

S765 — RECEIVE NOTICE OF SUCCESS IN TRANSACTION

S764 — TRANSMIT NOTICE OF SUCCESS IN TRANSACTION

S766 — RECEIVE NOTICE OF SUCCESS IN TRANSACTION

S768 — RECEIVE NOTICE OF FAILURE IN TRANSACTION

S767 — TRANSMIT NOTICE OF FAILURE IN TRANSACTION

S769 — RECEIVE NOTICE OF FAILURE IN TRANSACTION

# FIG.20

INVESTOR
CLIENT CONTROL
PROCESSING
(SELLING SIDE)

SERVER CONTROL
PROCESSING

INVESTOR
CLIENT CONTROL
PROCESSING
(PURCHASING SIDE)

*S773*

TRANSMIT
INVESTOR ID

RECEIVE
INVESTOR ID

TRANSMIT
INVESTOR ID

*S771*

*S774*

AUTHENTICATED ? NO

*S772*

YES

*S775*

TRANSMIT
AUTHENTICATION
SIGNAL

TRANSMIT NON-
AUTHENTICATION
SIGNAL

*S776*

*S777*

TRANSMIT BRAND TO
BE SOLD. DESIRED
SELLING PRICE RANGE,
AND NUMBER OF
TICKETS TO BE SOLD

*S778*

RECEIVE BRAND TO
BE SOLD. DESIRED
SELLING PRICE RANGE,
AND NUMBER OF
TICKETS TO BE SOLD

*S779*

REGISTER SELLING
ORDER TO DB

*S780*

*S781*

RECEIVE BRAND TO
BE PURCHASED. DESIRED
PURCHASING PRICE RANGE,
AND NUMBER OF TICKETS
TO BE PURCHASED

TRANSMIT BRAND TO
BE PURCHASED. DESIRED
PURCHASING PRICE RANGE,
AND NUMBER OF TICKETS
TO BE PURCHASED

*S782*

REGISTER PURCHASING
ORDER TO DB

*S783*

MATCHING ALONG
LOWER PRICES OF SELLING
ORDER AND ALONG HIGHER
PRICES OF PURCHASING ORDER

NO

YES

*S785*

*S784*

*S786*

RECEIVE NOTICE
OF SUCCESS IN
TRANSACTION

TRANSMIT NOTICE
OF SUCCESS IN
TRANSACTION

RECEIVE NOTICE
OF SUCCESS IN
TRANSACTION

*S788*

*S787*

*S789*

RECEIVE NOTICE
OF FAILURE IN
TRANSACTION

TRANSMIT NOTICE
OF FAILURE IN
TRANSACTION

RECEIVE NOTICE
OF FAILURE IN
TRANSACTION

# FIG.21

```
  ( SERVER CONTROL )              ( ACCOUNTING CONTROL )
  (   PROCESSING   )              (     PROCESSING     )
         │                                │
         ▼                                │
  ┌─────────────┐  S111                   │
  │  UPDATE DB  │                         │
  └─────────────┘                         ▼
         │                         ┌──────────────────┐  S113
         ▼                         │     RECEIVE      │ NO
  ┌─────────────┐                  │ ACCESS REQUEST   ├──
  │  TRANSMIT   │ ....             └──────────────────┘
  │   ACCESS    │...................       │ YES
  │   REQUEST   │                          ▼
  └─────────────┘           S116    ┌──────────────┐  S114
         │       S112  ┌──────────┐ NO│            │
         │             │ TRANSMIT │◄──┤AUTHENTICATED│
         │             │   NON-   │   └──────────────┘
         │             │AUTHENTIC-│          │ YES
         │             │  ATION   │          ▼
         │             │  SIGNAL  │   ┌──────────────────────┐ S115
         ▼        S117 └──────────┘   │ TRANSMIT ACCOUNT KEY │
 ┌────────┐NO ┌──────────────┐        └──────────────────────┘
 │LOG-OUT │◄──┤  ACCOUNT KEY │◄................      │
 └────────┘   │  RECEIVED ?  │                       ▼
              └──────────────┘              ┌──────────────┐ S119
                     │ YES                  │              │ NO
                     ▼          S118        │DATA RECEIVED?├──
              ┌──────────────┐              └──────────────┘
              │ TRANSMIT DATA│...............       │ YES
              └──────────────┘                      ▼
                                           ┌────────────────┐ S120
                                           │ UPDATE ACCOUNT │
                                           └────────────────┘
                                                   │
                                                   ▼
                                           ┌────────────────────┐ S121
                                           │SETTLEMENT PROCESSING│
                                           └────────────────────┘
```

# FIG.22

**FIG.23**

SELECT CONTENTS *S131*

TRIAL LISTENING MODE ? *S132*

NO

YES *S133*

TRY FOR PREDETERMINED PERIOD

PURCHASE MODE ? *S134*

NO

YES *S135*

ENTER USER ID

*S136*

ENTER PREDETERMINED PURCHASING AMOUNT

*S137*

START DOWNLOADING

INVESTMENT MODE ? *S138*

NO

YES *S139*

ENTER INVESTOR ID

*S140*

ENTER INVESTMENT AMOUNT

END

# FIG.24

PURCHASE

**A**

PLEASE PAY
×××YEN

1. CREDIT CARD
2. CASH

AFTER
PAYMENT

**B**

PLEASE INSERT MD OR
MEMORY CARD

**C**

DOWNLOADING

PLEASE DON'T TAKE OUT
MD OR MEMORY CARD

# FIG.25

INVESTMENT

**A**

PLEASE SELECT YOUR
FAVOURITE ARTIST

**B**

PERSONAL HISTORY :
×××××
BORN 04/11/63
MASTERPIECE ××××
- - - - - - - - - -

1. LISTEN ON TRIAL ? | YES | NO
1. PURCHASE ? | YES | NO
1. INVEST ? | YES | NO

INVEST

**C**

| 1 | 2 | 3 |
| 4 | 5 | 6 |
| 7 | 8 | 9 |
| 0 | # | ▶ |

PLEASE ENTER CREDIT
CARD ID AND PERSONAL
IDENTIFICATION NUMBER

**D**

| 1 | 2 | 3 |
| 4 | 5 | 6 |
| 7 | 8 | 9 |
| 0 | ¥ | ▶ |

PLEASE ENTER
AMOUNT OF INVESTMENT

# FIG.26

EP 1 209 608 A1

COUNT SALES — S141

COUNT TOTAL AMOUNT OF INVESTMENT — S142

DETERMINE DISTRIBUTION OF COMPENSATION CORRESPONDING TO AMOUNT OF INVESTMENT — S143

DISTRIBUTE COMPENSATION ON THE BASIS OF INVESTOR ID — S144

END

## FIG.27

| COPYRIGHT MANAGEMENT COMPANY | INVESTMENT MANAGEMENT COMPANY | SERVER MANAGEMENT COMPANY | DISTRIBUTE TO INVESTOR |
|---|---|---|---|

## FIG.28

COUNT AMOUNT OF INVESTMENT — S151

IS AMOUNT OF INVESTMENT EQUAL TO OR LARGER THAN PREDETERMINED VALUE ? — S152    NO

YES

DETERMINE DISTRIBUTION OF COMPENSATION CORRESPONDING TO AMOUNT OF INVESTMENT — S153

DISTRIBUTE COMPENSATION ON THE BASIS OF INVESTOR ID — S154

END

## FIG.29

FIG.30

**FIG.31**

EP 1 209 608 A1

PROCESSING OF MOBILE
TERMINAL CONTROL UNIT

PROCESSING OF SERVER
CONTROL UNIT

PROCESSING OF ACCOUNTING
CENTER CONTROL UNIT

PROCESSING TO REGISTER
ARTIST DATA —S161

TRANSMIT ARTIST DATA
(INCLUDING CONTENTS VALUE) —S162

S163
ARTIST DATA RECEIVED ?   NO

YES   S164

DISPLAY ARTIST DATA   S165

DOWNLOADING
INSTRUCTION?

YES

TRANSMIT USER ID AND
CONTENTS ID   S166

USER ID, CONTENTS ID
AND CONTENTS RECEIVED?   NO
S167

YES   S168

UPLOADING
INSTRUCTION?   NO

YES

TRANSMIT USER ID
AND CONTENTS   S169

END INSTRUCTION ?   S170   NO

YES

END

S173
TRANSMIT
CONTENTS ID
AND CONTENTS

YES   USER ID AND CONTENTS
ID RECEIVED ?
S171   NO

USER ID AND
CONTENTS RECEIVED ?   NO
S172

YES

UPDATE INVESTMENT
AMOUNT DATABASE —S174

S175
PREDETERMINED TIME
OR NOT ?   NO

YES   S176

CALCULATE AND UPDATE CONTENTS
VALUE IN ACCORDANCE WITH
INVESTMENT AMOUNT DATABASE

S177   PREDETERMINED DATE
AND TIME OR NOT ?   NO

YES

CALCULATE DIVIDEND FOR ARTIST
IN ACCORDANCE WITH INVESTMENT
AMOUNT DATABASE —S178

UPDATE INVESTMENT AMOUNT DATABASE —S179
(UPDATE DIVIDEND DATA)

TRANSMIT REQUEST TO ACCESS
ARTIST ACCOUNT TOGETHER
WITH SERVER ID TO ACCOUNTING
CENTER —S180

S185   USER ACCOUNT KEY AND
ARTIST ACCOUNT KEY RECEIVED ?   NO

YES

S186   TRANSMIT USER ACCOUNT KEY,
ARTIST ACCOUNT KEY,
SERVER ACCOUNT KEY,
DIVIDEND DATA, TOTAL OF
BUYING AND SELLING, AND
PROFIT FOR SERVER

S181
ACCESS REQUEST
RECEIVED ?   NO

YES   S182

AUTHENTICATED
WITH SERVER ID ?   NO

YES   S184

TRANSMIT USER
ACCOUNT KEY AND
ARTIST ACCOUNT KEY

TRANSMIT
NON-
AUTHENTICATION
SIGNAL
S183

S187
VARIOUS DATA
RECEIVED ?   NO

YES

S188   UPDATE USER ACCOUNT,
ARTIST ACCOUNT, AND
SERVER ACCOUNT

END   S189   SETTLEMENT
PROCESSING

END

FIG.32

82

EP 1 209 608 A1

( CONTENTS VALUE CALCULATING METHOD )

**S191** COUNT NUMBER OF DOWNLOADING TIMES AND NUMBER OF UPLOADING TIMES

**S192** CALCULATE PRICE FLUCTUATION VALUE

**S193** PRICE FLUCTUATION VALUE >200YEN ?

NO

**S194** SET PRICE FLUCTUATION VALUE =200YEN

**S195** DETERMINE PRICE FLUCTUATION VALUE

**S196** CALCULATE CONTENTS VALUE

**S197** CONTENTS VALUE> 50% INCREASE OF STARTING VALUE

NO

**S198** SET CONTENTS VALUE = 50% INCREASE OF STARTING VALUE

**S199** DETERMINE CONTENTS VALUE

**S200** UPDATE INVESTMENT AMOUNT DATABASE

( END )

STARTING VALUE 300YEN

| 1000 | 800 |
|------|-----|

PRICE FLUCTUATION VALUE =(DOWNLOAD−UPLOAD) * CONSTANT
=(1000−800) * 0.5
=+100YEN

PRICE FLUCTUATION VALUE=+100YEN

CONTENTS VALUE=300+100=400YEN

CONTENTS VALUE=
300YEN+100YEN=400YEN

DOWNLOADING FEE=400YEN * 1000=400000YEN
UPLOADING FEE=400YEN * 800=320000YEN
PROFIT=400000YEN−320000YEN=80000YEN

# FIG.33

CONTENTS VALUE CALCULATING METHOD

COUNT NUMBER OF DOWNLOADING TIMES AND NUMBER OF UPLOADING TIMES — S201

CALCULATE PRICE FLUCTUATION VALUE — S202

PRICE FLUCTUATION VALUE >200YEN ? — S203 → SET PRICE FLUCTUATION VALUE =200YEN — S204

NO

DETERMINE PRICE FLUCTUATION VALUE — S205

CALCULATE CONTENTS VALUE — S206

CONTENTS VALUE> 50% INCREASE OF STARTING VALUE — S207

NO

SET CONTENTS VALUE = 50% INCREASE OF STARTING VALUE — S208

DETERMINE CONTENTS VALUE — S209

UPDATE INVESTMENT AMOUNT DATABASE — S210

END

**400YEN**

| 1500 | 300 |
|------|-----|

PRICE FLUCTUATION VALUE =(DOWNLOAD−UPLOAD) ＊ CONSTANT
=(1500−300) ＊ 0.5
=＋600YEN

PRICE FLUCTUATION VALUE=＋200YEN

CONTENTS VALUE=400＋200=600YEN

CONTENTS VALUE= 600YEN＞300YEN＊1.5=450YEN

CONTENTS VALUE=450YEN (LIMIT WHEN 50% INCREASE OF STARTING VALUE IS REACHED)

DOWNLOADING FEE=450YEN＊1500=675000YEN
UPLOADING FEE=450YEN＊300=135000YEN
PROFIT=375000YEN−135000YEN=540000YEN

# FIG.34

EP 1 209 608 A1

( CONTENTS VALUE CALCULATING METHOD )

↓

**COUNT NUMBER OF DOWNLOADING TIMES AND NUMBER OF UPLOADING TIMES** — S211

↓

**CALCULATE PRICE FLUCTUATION VALUE** — S212

↓

< PRICE FLUCTUATION VALUE >200YEN ? > — S213 → **SET PRICE FLUCTUATION VALUE =200YEN** — S214

NO ↓

**DETERMINE PRICE FLUCTUATION VALUE** — S215 ←

↓

**CALCULATE CONTENTS VALUE** — S216

↓

< CONTENTS VALUE> 50% INCREASE OF STARTING VALUE > — S217 → **SET CONTENTS VALUE = 50% INCREASE OF STARTING VALUE** — S218

NO ↓

**DETERMINE CONTENTS VALUE** — S219 ←

↓

**UPDATE INVESTMENT AMOUNT DATABASE** — S220

↓

( END )

450YEN

| 600 | 1000 |
|---|---|

PRICE FLUCTUATION VALUE =(DOWNLOAD−UPLOAD)＊CONSTANT
=(600−1000)＊0.5
=−200YEN

PRICE FLUCTUATION VALUE=−200YEN

CONTENTS VALUE=450−200=250YEN

CONTENTS VALUE=
450YEN−200YEN=250YEN

DOWNLOADING FEE=250YEN＊600=150000YEN
UPLOADING FEE=250YEN＊1000=250000YEN
PROFIT=150000YEN−250000YEN=−100000YEN

## FIG.35

```
         ( CONTENTS VALUE CALCULATING METHOD )
                          |
                          v
         COUNT NUMBER OF DOWNLOADING TIMES      S221
           AND NUMBER OF UPLOADING TIMES
                          |
                          v
         CALCULATE PRICE FLUCTUATION VALUE      S222
                          |
                          v
            < PRICE FLUCTUATION VALUE           S223      SET PRICE FLUCTUATION VALUE   S224
                  >200YEN ? >-------------------------->        =200YEN
                          |
                         NO
                          v
         DETERMINE PRICE FLUCTUATION VALUE <----- S225
                          |
                          v
         CALCULATE CONTENTS VALUE               S226
                          |
                          v
            < CONTENTS VALUE>                   S227
          50% INCREASE OF STARTING VALUE >---------->    SET CONTENTS VALUE =       S228
                          |                          50% INCREASE OF STARTING VALUE
                         NO
                          v
         DETERMINE CONTENTS VALUE <------------ S229
                          |
                          v
         UPDATE INVESTMENT AMOUNT DATABASE      S230
                          |
                          v
                      ( END )
```

250YEN

| 400 | 1000 |
|-----|------|

PRICE FLUCTUATION VALUE =(DOWNLOAD−UPLOAD) * CONSTANT
=(400−1000) * 0.5
=−300YEN

PRICE FLUCTUATION VALUE=−300YEN

CONTENTS VALUE=250−300=−50YEN

CONTENTS VALUE=
250YEN−300YEN=−50YEN=0YEN(FREE)

DOWNLOADING FEE=0YEN * 400=0YEN
UPLOADING FEE=0YEN * 1000=0YEN
PROFIT=0YEN

## FIG.36

| 10% | PROFIT FOR MANAGER OF SERVER 10  520000YEN |

| NUMBER OF DOWNLOAD TIMES 10000 |

DIVIDEND FOR USER 52000/10000 = 5.2YEN/1 DOWNLOAD

| 10% | 40% | |

DIVIDEND FOR ARTIST
520000✕0.4 = 208000YEN

PROFIT FOR MANAGER OF SERVER 10
260000YEN

# FIG.37

EP 1 209 608 A1

EP 1 209 608 A1

FIG.38

88

| 10% | PROFIT FOR MANAGER OF SERVER 10  520000YEN |

NUMBER OF DOWNLOAD TIMES 10000

DIVIDEND FOR USER 52000/10000 = 5.2YEN/1 DOWNLOAD

| 10% | 40% | | |

DIVIDEND FOR ARTIST
520000×0.4 = 208000YEN

PROFIT FOR MANAGER OF SERVER 10
260000YEN

# FIG.39

**FIG.40**

PROFIT FOR MANAGER OF SERVER 520000YEN

| 10% | SALES 10% | | | SALES PROFIT 480000YEN |
|---|---|---|---|---|

52000YEN          48000YEN

NUMBER OF DOWNLOADING TIMES 10000

DIVIDEND FOR USER 100000/10000=10YEN/1 DOWNLOAD

PROFIT FOR MANAGER OF SERVER 520000YEN          SALES PROFIT 480000YEN

| 10% | SALES 10% | 40% | SALES 10% | | |
|---|---|---|---|---|---|

208000YEN          48000YEN

DIVIDEND FOR FIRM = 256000YEN

ULTIMATE PROFIT FOR MANAGER OF SERVER 640000YEN

PROFIT FOR MANAGER OF SERVER 520000YEN          SALES PROFIT 480000YEN

| 10% | SALES 10% | 40% | SALES 10% | 10% | SALES 10% | | |
|---|---|---|---|---|---|---|---|

52000YEN          48000YEN

DIVIDEND FOR RETAIL STORE = 100000YEN

# FIG.41

## INTERNATIONAL SEARCH REPORT

International application No.

PCT/JP01/01692

| A. CLASSIFICATION OF SUBJECT MATTER |
|---|
| Int.Cl⁷ G06F17/60 |

According to International Patent Classification (IPC) or to both national classification and IPC

| B. FIELDS SEARCHED |
|---|
| Minimum documentation searched (classification system followed by classification symbols)<br>Int.Cl⁷ G06F17/60 |

Documentation searched other than minimum documentation to the extent that such documents are included in the fields searched

| Jitsuyo Shinan Koho | 1922-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)
JOIS (JICST)

| C. DOCUMENTS CONSIDERED TO BE RELEVANT | | |
|---|---|---|
| Category* | Citation of document, with indication, where appropriate, of the relevant passages | Relevant to claim No. |
| E,Y | JP, 2001-117972, A (Gionikkusu K.K.),<br>27 April, 2001 (27.04.01),<br>Full text; Figs. 1 to 9  (Family: none) | 1-125 |
| E,Y | JP, 2001-092896, A (Hiroshi MOTOATSU),<br>06 April, 2001 (06.04.01),<br>Full text; Figs. 1 to 14  (Family: none) | 1-125 |
| P,Y | JP, 2000-268111, A (The Patent and License Exchange,<br>Fujimi Inc.),<br>29 September, 2000 (29.09.00),<br>Full text; Figs. 1 to 16  (Family: none) | 1-125 |
| P,Y | JP, 2000-306008, A (Kabushiki Kaisha Orikon Direct<br>Digital),<br>02 November, 2000 (02.11.00),<br>Full text; Figs. 1, 2  (Family: none) | 1-125 |
| P,Y | JP, 2000-115163, A (Sony Corporation),<br>21 April, 2000 (21.04.00),<br>Full text; Figs. 1 to 8  (Family: none) | 4-7,21-24,<br>37-40,46,<br>52-55,61,<br>69-72 |

| ☒ Further documents are listed in the continuation of Box C. | ☐ See patent family annex. |
|---|---|

| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search<br>21 May, 2001 (21.05.01) | Date of mailing of the international search report<br>29 May, 2001 (29.05.01) |
|---|---|
| Name and mailing address of the ISA/<br>Japanese Patent Office | Authorized officer |
| Facsimile No. | Telephone No. |

Form PCT/ISA/210 (second sheet) (July 1992)

**INTERNATIONAL SEARCH REPORT**

| International application No. |
| --- |
| PCT/JP01/01692 |

| C (Continuation). DOCUMENTS CONSIDERED TO BE RELEVANT | | |
| --- | --- | --- |
| Category* | Citation of document, with indication, where appropriate, of the relevant passages | Relevant to claim No. |
| Y | JP, 10-255002, A (Hitachi, Ltd.),<br>25 September, 1998 (25.09.98),<br>Full text; Figs. 1 to 21   (Family: none) | 116-125 |

Form PCT/ISA/210 (continuation of second sheet) (July 1992)